# EUROPEAN PATENT APPLICATION

(11) **EP 1 792 672 A1**
(43) Date of publication of application: **06.06.2007**
(21) Application number: 05785450.7
(22) Date of filing: 20.09.2005
(51) Int. Cl.: B21D 53/10, B21D 53/16, B21H 1/12, B21K 1/04, B21K 21/06, F16C 33/64

(54) **RACEWAY RING FOR RADIAL BALL BEARING, METHOD OF PRODUCING THE RACEWAY RING, AND METHOD AND DEVICE FOR PRODUCING HIGH PRECISION RING**

(30) Priority: 22.09.2004 JP 2004275835; 29.09.2004 JP 2004282970; 30.09.2004 JP 2004285793; 30.09.2004 JP 2004285794; 01.10.2004 JP 2004289566; 03.12.2004 JP 2004351816; 06.06.2005 JP 2005165540; 07.06.2005 JP 2005166450; 10.06.2005 JP 2005170344
(71) Applicant: NSK Ltd., Tokyo 141-8560 (JP)
(72) Inventor: KOBAYASHI, Kazuto NSK LTD.,, Kanagawa 251-8501 (JP); OOTSUKA, Kiyoshi NSK LTD.,, Kanagawa 251-8501 (JP); SHINTOU, Isao NSK LTD.,, Kanagawa 251-8501 (JP); MORI, Kouhei NSK LTD.,, Kanagawa 251-8501 (JP); YASUDA, Yu NSK LTD.,, Kanagawa 251-8501 (JP)
(74) Representative: Grünecker, Kinkeldey, Stockmair & Schwanhäusser Anwaltssozietät
(86) International application number: PCT/JP2005/017297
(87) International publication number: WO 2006/033327

(57) **Abstract**

A manufacturing method of a raceway ring for a radial ball bearing, the radial ball bearing has the raceway ring has at least one of an outer ring formed with an outer ring raceway, of which sectional shape is arcuate, and which is formed entire of circumference on an axially intermediate portion of an inner circumferential face as a raceway surface; and an inner ring formed with an inner ring raceway, of which sectional shape is arcuate, and which is formed entire of circumference on an axially intermediate portion of an outer circumferential face as the raceway surface and plurality of balls rollably provided between the inner ring raceway and the outer ring raceway. The manufacturing method of the raceway ring has a high accurate material working process of preparing a high accurate material of which volume is substantially the same as that of the raceway ring of the radial ball bearing which is a finished product by cold working and a raceway ring working process of plastically deforming the high accurate material by cold working and forming the raceway surface on the axially intermediate portion of either outer or inner circumferential face wherein working for removing material is not conducted before a heat treatment.

## Description

### TECHNICAL FIELD

The present invention relates to a raceway ring composing a radial ball bearing, in which a rotating accuracy is not required to be so high. Such the radial ball bearing is incorporated into a rotary supporting portion of an electric motor, which is assembled to various electric appliances such as a vacuum cleaner, a ventilating fan and so forth, or incorporated into a rotary supporting portion of various auxiliary machines for automobile use. The present invention also relates to an improvement in the manufacturing method of the raceway ring.

### BACKGROUND ART

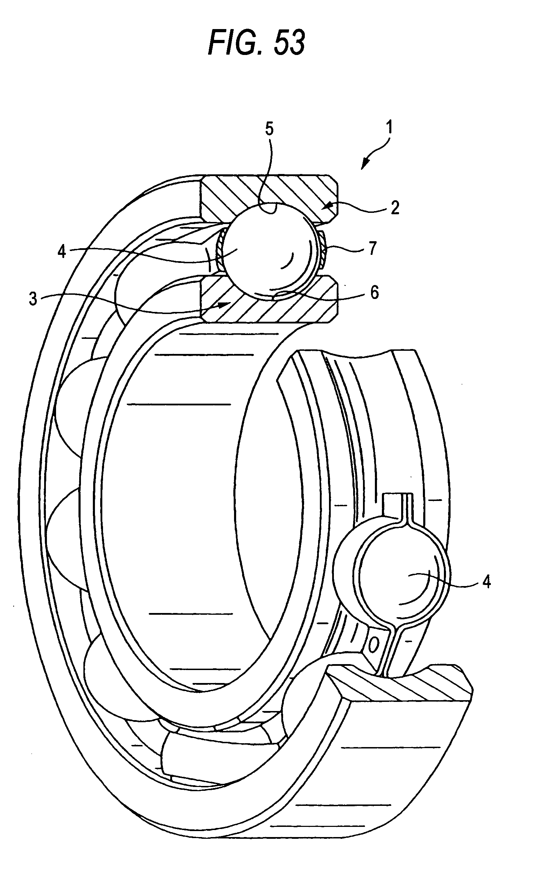

Into rotary supporting portions of various rotary devices, a radial ball bearing 1 shown in Fig. 53 is incorporated. This radial ball bearing 1 is a deep groove type ball bearing, in which a plurality of balls 4, 4 are provided between an outer ring 2 and an inner ring 3 which are arranged concentrically to each other. In this ball bearing, an outer ring raceway 5 of the deep groove type is formed in an axially intermediate portion on an entire inner circumferential face of the outer ring 2. Further, an inner ring raceway 6 of the deep groove type is formed in an axially intermediate portion on an entire outer circumferential face of the inner ring 3. Balls 4, 4 are arranged between the outer ring raceway 5 and the inner ring raceway 6 while the balls 4, 4 are rollably held by a cage 7. Due to the above structure, the outer ring 2 and the inner ring 3 can rotate relatively with each other. In this connection, in the example shown in Fig. 53, a corrugated retainer made of metal is used as the retainer 7 described above. However, in many cases, a crown type cage made of synthetic resin is used. In many cases, outer circumferential edges of sealing plates are respectively engaged with engagement grooves formed on inner circumferential faces of both end portions of the outer ring 2. In this case, the sealing plate includes a contact type sealing plate and a non-contact type sealing plate in this specification hereinafter. In this case, entire inner circumferential edges of both the sealing plates come into slide contact with the outer circumferential faces of both end portions of the inner ring 3. Alternatively, the entire inner circumferential edges of both the sealing plates are closely opposed to the outer circumferential faces of both end portions of the inner ring 3.

In order to make raceway rings of the outer ring 2 and the inner ring 3 described above composing the radial ball bearing 1 described above, it is common that a partially finished material, the shape and size of which are similar to those of a completely finished product, is obtained first by means of forging and cutting. Then, this partially finished material is subjected to heat treatment so as to harden a surface of the partially finished material and then surfaces of the outer ring raceway 5 and the inner ring raceway 6 are polished so that the size and surface hardness can become predetermined values. In this way, the raceway ring is formed.
The above manufacturing method of the inner ring is disadvantageous in that the yield of material is deteriorated and further the manufacturing cost is raised.

In Patent Documents 1 and 2, a method is described in which a raceway ring of a radial ball bearing is made mainly by means of forging.
First, in the invention described in Patent Document 1, a compound partially finished material, in which a partially finished material for making an outer ring, and a partially finished material for making an inner ring, are integrated with each other into one body, is made by means of forging. Then, this compound partially finished material is divided into a partially finished material for making an outer ring and a partially finished material for making an inner ring. In the case of the invention described in Patent Document 1, when a diameter of a portion of the partially finished material for making an inner ring is expanded, an inner ring having a deep groove type inner ring raceway on the outer circumferential face is obtained.
Next, Patent Document 2 describes an invention relating to a method in which a ring-shaped material, which is obtained when a steel pipe made by means of hot extrusion is cut off, is compressed (upsetting) in the axial direction by a vertical type press and a partially finished material for an outer ring having a deep groove type outer ring raceway on the inner circumferential face is manufactured.

In the inventions described in the above Patent Documents 1, and 2, in the case of the invention described in Patent Document 1, a compound partially finished material, the volume of which is large, is made by means of forging at the initial stage of processing. Therefore, at the time of making the compound partially finished material, a load given to the material in the process of forging is increased and further stress given to a metallic die such as a punch of the forging machine is also increased. As a result, an amount of elastic deformation of each portion of the forging machine including the metallic die is increased, Therefore, it is difficult that the accuracy of the size and shape of the compound partially finished material and the partially finished material, which is formed out of this compound partially finished material, for making an outer and an inner ring is maintained to be sufficiently high. Especially when the compound partially finished material, the volume of which is large, is made by means of cold forging, an excessively heavy load is given to the metallic die. Accordingly, it becomes difficult to ensure the durability of the metallic die. Accordingly, the compound partially finished material is machined by means of hot forging or warm forging. However, in the case of hot forging or warm forging, in order to positively engage the metallic dies with each other irrespective of a difference of an amount of thermal expansion, a gap formed in the engaging portion in the case of hot forging or warm forging must be larger than the gap formed in the engaging portion in the case of cold forging. Therefore, it becomes difficult that the accuracy of the sizes of the outer and the inner diameter of the obtained compound partially finished material are maintained to be sufficiently high. It also becomes difficult that the accuracy of the size and the shape of the inner and the outer circumferential face is maintained to be sufficiently high. It also becomes difficult that the accuracy of the concentricity of the inner and the outer circumferential face is maintained to be sufficiently high. As a result, even when the ball bearing is used for a device in which a high rotary accuracy is not required, it becomes difficult that the dimensional accuracy and the deflection accuracy of the inner and the outer diameter of the inner and the outer ring are maintained to be sufficiently high. It is impossible to form engaging grooves for engaging outer circumferential edges of sealing plates on both sides of the inner circumferential face of the outer ring by means of plastic working. Therefore, it becomes necessary to form these engaging grooves by means of cutting. Accordingly, it is difficult to sufficiently reduce the manufacturing cost.

In the case of the invention described in Patent Document 2, the ring-shaped material is obtained when a steel pipe, which has been made by means of hot extrusion, is cut off. Therefore, it is difficult that the size of the inner and the outer diameter of this material is maintained at high accuracy. Further, it is difficult that the size, shape and concentricity of the inner and the outer circumferential face are maintained at high accuracy. As a result, the accuracy of the size of the inner and the outer diameter of the obtained outer ring can not be maintained high. Further, the deflection accuracy of the inner and the outer diameter of the obtained outer ring can not be maintained high. When the ring-shaped material is made by cutting a steel pipe, it takes time and labor. Therefore, the productivity is deteriorated, which raises the manufacturing cost. Further, it is necessary to conduct decarbonization on the partially finished material for making the outer ring when it is cut. From this viewpoint, the manufacturing cost is raised.

Patent Documents 3 and 4 disclose a manufacturing method of a raceway ring for a radial ball bearing in which a circumferential face of a ring-shaped material, the diameter of which is smaller than that of the raceway ring to be manufactured, is pressed by a mandrel so as to transfer an outer circumferential face shape of this mandrel onto the circumferential face of the ring-shaped material. Therefore, a diameter of this ring-shaped material is expanded to obtain a raceway ring, the diameter of which is desired. However, in this conventional method described in Patent Documents 3 and 4, it is difficult to stabilize behavior of the ring-shaped material under the condition that the mandrel is pressed. Therefore, it is impossible to accurately transfer the shape of the outer circumferential face of the mandrel onto the circumferential face of the ring-shaped material. Further, it is difficult that the circularity of the thus obtained raceway ring is maintained to be sufficiently high. Therefore, even when the ball bearing is applied to a use in which a high rotary accuracy is not required, it is difficult to maintain the dimensional accuracy sufficiently high. In the case of the invention described in Patent Document 4, it is necessary to remove material after the completion of plastic working. Therefore, a reduction of the manufacturing cost is limited.
Therefore, in the present invention, the inventors devised a method in which a raceway ring composing a radial ball bearing, which can be applied to a practical use in which a high rotary accuracy is not required, is manufactured at a low manufacturing cost while a practically, sufficiently high accuracy is being ensured. However, even in this case, when consideration is given to practical accuracy of the radial ball bearing finally obtained, it is important that the accuracy of the shape and the size of the ring, which becomes a material of the outer ring or the inner ring, is maintained sufficiently high.
Concerning the manufacturing method of this ring-shaped component, Patent Document 5 discloses an invention in which a ring-shaped component is formed when a column-shaped material is subjected to cold working. However, in the case of the invention described in Patent Document 5, no restriction is made in the size of the axial direction at the time of conducting cold work. Accordingly, it is impossible to ensure the accuracy in the axial direction of the thus obtained ring-shaped component. As a result, it is impossible to ensure the accuracy of the volume. For the above reasons, it is difficult to manufacture a raceway ring, which can be practically used, only by conducting plastic work on this ring-shaped component.

Patent Document 1: Official gazette of Japanese Patent Unexamined Publication No. JP-A-5-277615
Patent Document 2 ; Official gazette of Japanese Patent Unexamined Publication No. JP-A-2001-150082
Patent Document 3: Official gazette of Japanese Patent Unexamined Publication No. JP-A 59-212142
Patent Document 4: Official gazette of Japanese Patent Unexamined Publication No. JP-A-56-111533
Patent Document 5: Official gazette of Japanese Patent Unexamined Publication No. JP-A-2000-94080

### DISCLOSURE OF THE INVENTION

### PROBLEMS THAT THE INVENTION IS TO SOLVE

The present invention has been accomplished in view of the above circumstances. The present invention provides a raceway ring for a radial ball bearing and a manufacturing method thereof capable of obtaining an inner ring and an outer ring, which are raceways composing a radial ball bearing applied to the aforementioned use in which high rotary accuracy is not required, at a low manufacturing coast while practically, sufficiently high accuracy is being maintained.

Further, in view of the above circumstances, the present invention is to provide a manufacturing method of easily manufacturing a high accurate raceway ring capable of sufficiently ensuring practical accuracy of a radial ball bearing which is finally obtained as a material for making an inner ring or an outer ring composing the radial ball bearing by cold working. MEANS FOR SOLVING THE PROBLEMS

According to a first aspect of the invention, there is provided a manufacturing method of a raceway ring for a radial ball bearing, the radial ball bearing comprising:
the raceway ring comprising at least one of:
   an outer ring formed with an outer ring raceway, of which sectional shape is arcuate, and which is formed entire of circumference on an axially intermediate portion of an inner circumferential face as a raceway surface; and
   an inner ring formed with an inner ring raceway, of which sectional shape is arcuate, and which is formed entire of circumference on an axially intermediate portion of an outer circumferential face as the raceway surface; and
a plurality of balls rollably provided between the inner ring raceway and the outer ring raceway,
the manufacturing method of the raceway ring comprising:
   a high accurate material working process of preparing a high accurate material of which volume is substantially the same as that of the raceway ring of the radial ball bearing which is a finished product by cold working; and
   a raceway ring working process of plastically deforming the high accurate material by cold working and forming the raceway surface on the axially intermediate portion of either outer or inner circumferential face,
wherein working for removing material is not conducted before a heat treatment.
According to a second aspect of the invention, it is preferable that the manufacturing method as set forth in the first aspect of the invention further comprising a finishing process of finishing the raceway surface by rolling process after the raceway ring working process.
According to a third aspect of the invention, as set forth in the second aspect of the invention, it is preferable that recess portions for sealing, which are provided on an entire circumference of both axial ends of either outer or inner circumferential face of the raceway ring at positions which are set to oppose each other via the raceway surface in an axial direction, are finished by rolling process simultaneously when the raceway surface is finished in the finishing process.
According to a fourth aspect of the invention, as set forth in the second aspect of the invention, it is preferable that the raceway ring working process of working the outer ring of the ball bearing comprising:
a first process of forming a primary partially finished material in such a manner that:
   obtaining a small diameter portion, of which outer diameter is substantially the same as an outer diameter of the outer ring, by reducing a diameter of axially a part of a cylindrical material of which volume is the substantially same as that of the outer ring to be manufactured; and
   obtaining a large diameter portion by maintaining a residual portion of the cylindrical material of which diameter is not reduced;
a second process of forming a secondary partially finished material in such a manner that:
   forming a curved face for a raceway surface, which has arcuate shape in cross section and becomes at least a part of the outer ring raceway, on an entire circumference of the inner circumferential face at a portion corresponding to the small diameter portion on the inner circumferential face of the axially intermediate portion of the primary partially finished material; and
   making a thickness distribution, which is defined along the axial direction with respect to the radial direction of a portion adjacent to the curved face for the raceway surface and adjacent to the large diameter portion side with respect to the axial direction, with a thickness distribution in the portion of the outer ring to be manufactured; and
a third process of reducing an outer diameter of the large diameter portion of the secondary partially finished material so as to agree with an outer diameter of the small diameter portion,
According to a fifth aspect of the invention, as set forth in the fourth aspect of the invention, it is preferable that
the outer ring raceway is of the deep groove, and
in the third process, the outer ring raceway of the deep groove is formed on the axially intermediate portion of the inner circumferential face by forming a second curved face for the raceway surface, which is symmetrical with the curved face for the raceway surface, on inner circumferential surface of the axially intermediate portion so as to continue to the curved face for the raceway surface.
According to a sixth aspect of the invention, as set forth in the fifth aspect of the invention, it is preferable that the outer ring includes engagement grooves for engaging an outer circumferential edge portion of a tight-sealing plate provided at both axially end portions on the inner circumferential face,
the manufacturing method of the raceway ring for the radial ball bearing further comprises:
a preliminary process of forming step portions, of which inner diameter are larger than that of the axially intermediate portion, at both axially end portions of the high accurate material prior to the first process; and
an after-process of elastically working the step portions and forming the engagement groove portions after the third process.
According to a seventh aspect of the Invention, the manufacturing method as set forth in the sixth aspect of the invention further comprising:
a finishing process of simultaneously finishing the outer ring raceway and both engagement groove portions by rolling process after the after-process.
According to an eighth aspect of the invention, as set forth in the first aspect of the invention, it is preferable that the raceway ring working process for working the inner ring of the ball bearing comprising:
a first process of forming a partially finished material in such a manner that forming a curved face for the first raceway face, which has arcuate shape in cross section and becomes a portion of the inner ring raceway, on an outer circumferential face of axially intermediate portion while reducing a diameter of the cylindrical high accurate material, wherein one half portion in the axial direction with respect to the curved face for the first raceway of the partially finished material is made a small diameter portion and, the other half portion in the axial direction of the partially finished material is a large diameter portion; and
a second process of expanding the inner diameter of the small diameter portion, which is a half portion in the axial direction of the partially finished material, to the same inner diameter as that of the other half portion in the axial direction, and forming a curved face for the second raceway, which becomes a residual portion of the inner ring raceway, on a portion continuing to the curved face for the first raceway.
According to a ninth aspect of the invention, as set forth in the eighth aspect of the invention, it is preferable that the inner ring raceway is of the deep groove,
the raceway ring working process further including an intermediate process conducted between the first and the second process, the intermediate process compressing an axially part of the partially finished material by working and forming into a secondary partially finished material, of which distribution of radial thickness along the axial direction in a portion axially adjacent to the curved face for the first raceway surface agrees with a distribution of the thickness in a corresponding portion of the inner ring to be manufactured,
wherein, in the second process, forming the curved face for the second raceway surface, which is symmetrical with the curved face for the first raceway surface, so as to continue to the curved face for the first raceway surface by using the curved face for the first raceway surface, of which thickness distribution is determined, on the axially intermediate portion, to thereby form the inner ring raceway of the deep groove.
According to a tenth aspect of the invention, as set forth in the ninth aspect of the invention, it is preferable that the inner ring has a pair of sealing step portions, which makes slide-contact or come close to an inner circumferential edge portion of the tight-sealing plate, on both axial ends of the outer circumferential face,
the manufacturing method further comprising:
a preliminary process of forming a preliminary intermediate material by forming step portions, of which outer diameter are smaller than the outer diameter of axially intermediate portion, at both axial end portions of the high accurate material before the first process; and
an after-process of plastically working and forming the step portions into both sealing step portions after the second process.
According to an eleventh aspect of the invention, it is preferable that the manufacturing method as set forth in the tenth aspect of the invention, further comprising:
a finishing process of simultaneously finishing the inner ring raceway and the step portions for both sealing portions by rolling process after the after-process.
According to a twelfth aspect of the invention, there is provided a manufacturing method of a cylindrical raceway ring for a radial ball bearing, in which a cross-section arcuate raceway surface is formed on entire of a circumference at an axially intermediate portion on either circumferential face,
the manufacturing method comprising:
a first process of conducting a first forging process to obtain a primary partially finished material in such a manner that pressing a cylindrical material, of which volume is substantially the same as that of a finished product, with a pair of metallic dies which are relatively displaced in the axial direction, and deforming a diameter of axially one half of the material to make a small diameter portion, and the other half is made a large diameter portion,
a second process of conducting a second cold forging process to obtain a secondary partially finished material in such a manner that pressing the primary partially finished material with a pair of metallic dies which is different from that used in the first process and are relatively displaced in the axial direction, so that a distribution of radial thickness along the axial direction on at least a portion of the primary partially finished material where the raceway surface is formed agrees with the thickness of the portion where a raceway surface of the completed raceway ring is formed; and
a third process of plastically deforming a part of the secondary partially finished material in radial direction to form the raceway surface by conducting a rolling process
   which presses the secondary partially finished material so that inner circumferential face and outer circumferential face thereof come close to each other while rotating the secondary partially finished material.
According to a thirteenth aspect of the invention, as set forth in the twelfth aspect of the invention, it is preferable that
the raceway ring includes engagement grooves for engaging a circumferential edge portion of a tight-sealing plate provided at both axially end portions on the circumferential face formed with the raceway surface,
the manufacturing method further comprising:
a preliminary process of forming step portions which are recessed in the radial direction from the axially intermediate portion at both axial end portions thereof to obtain a preliminary partially finished material prior to the first process; and
a third process of forming the engagement grooves in the step portions.
According to a fourteenth aspect of the invention, there is provided a manufacturing method of a cylindrical raceway ring for a radial ball bearing, in which a cross-section arcuate raceway surface is formed on entire of a circumference at an axially intermediate portion on either circumferential face which is to be worked side circumferential face, the method comprising:
preparing a cylindrical material, which has volume substantially the same as that of a finished product, and a diameter of the not-worked side circumferential face, which is opposite side relative to a face on which the raceway surface is formed, is substantially the same as that of a finished product;
supporting the not-worked side circumferential face by so as to be fitted to a support side circumferential face provided on a receiving member without substantially generating any gap; and
rotating a working side rotating member relative to the receiving member, while pressing the working side circumferential surface of a working side rotating member, which has a generating line shape agreeing with a generating line shape of the worked side circumferential face in a finished product, in a radial direction, to thereby process the worked side circumferential face as a finished product shape having at least the raceway surface.
According to a fifteenth aspect of the invention, as set forth in the fourteenth aspect of the invention, it is preferable that stepped portions are formed in both axial end portions of the worked side circumferential face of the material in order to form step portions, which are recessed in the radial direction from a radially central portion of the worked side circumferential face, on entire of the circumference in both axial end portions of the worked side circumferential face of a finished product, and
both stepped portions are worked simultaneously with the raceway surface when a worked side rotary member is pressed onto the worked side circumferential face.
According to a sixteenth aspect of the invention, as set forth in the fifteenth aspect of the invention, it is preferable that step faces existing between both step portions, which are provided in both axial end portions of the worked side circumferential face of the material, and the axially central portion are formed into inclined faces which incline so as to come close to each other when the step faces are separate from the not-worked circumferential face with respect to the radial direction, and
an inclination angle of both step faces with respect to a virtual plane existing in a direction perpendicular to a central axis of the material is larger than an inclination angle of the step face existing in a portion corresponding to the completed raceway ring and not more than 15°.
According to a seventeenth aspect of the invention, as set forth in the fourteenth aspect of the invention, it is preferable that both axially end faces of the material to make the raceway ring are inclined faces which incline so as to come close to each other when the faces are separate from the not-worked side circumferential face, and
an inclination angle of both axially end faces with respect to a virtual plane existing in a direction perpendicular to the central axis of the material is not more than 20°.
According to an eighteenth aspect of the invention, there is provided a radial ball bearing comprising:
a raceway ring comprising at least one of:
   an outer ring formed with an outer ring raceway, of which sectional shape is arcuate, and which is formed entire circumference on an axially intermediate portion of an inner circumferential face as a raceway surface; and
   an inner ring formed with an inner ring raceway, of which sectional shape is arcuate, and which is formed entire of circumference on an axially intermediate portion of an outer circumferential face as the raceway surface; and
a plurality of balls rollably provided between the inner ring raceway and the outer ring raceway,
wherein the raceway ring is worked in such a manner that a cylindrical high accurate material made by cold working, of which volume is substantially the same as that of a finished product, is plastically deformed by cold working to thereby process a surface shape including the raceway substantially the same as the shape of the finished product.
According to a nineteenth aspect of the invention, there is provided a cylindrical raceway ring for a radial ball bearing, in which a cross-section arcuate raceway surface is formed on entire of a circumference at an axially intermediate portion on either circumferential face,
wherein a surface shape including the raceway surface is processed by conducting cold forge rolling process on a partially finished product, which is obtained by plastically deforming a cylindrical material having volume substantially the same as that of a finished product, to plastically deform at least a part of the partially finished product in a radial direction.
According to a twentieth aspect of the invention, as set forth in the nineteenth aspect of the invention, it is preferable that
a shape of the outer circumferential face of the partially finished material is formed in such a manner that a direction of a change in the outer diameter from a portion, of which outer diameter is the largest, to both axially end faces is not inverted, and the shape of the outer circumferential face of the partially finished material has no under-cut portion, and
a shape of the inner circumferential face of the partially finished material is formed in such a manner that a direction of a change in the inner diameter from a portion, of which inner diameter is the smallest, to both axially end faces is not inverted and the shape of the inner circumferential face of the partially finished material has no under-cut portions.
According to a twenty-first aspect of the invention, there is provided a manufacturing method of a high accurate metallic ring comprising:
a restriction process of restricting either inner or outer circumferential face of a cylindrical material, of which volume is larger than that of the high accurate ring to be manufactured, so as to maintain its diameter,
a compression process of compressing the cylindrical material in an axial direction by cold working while not restricting a diameter of the other circumferential face so as not to change its diameter, to form a partially finished material in which an axial dimension of thereof agrees with an axial dimension of the high accurate ring, and an excess thickness portion exceeding the volume of the high accurate ring is released to a direction in which the other circumferential face is swelled in the radial direction; and
a removing process of removing the excess thickness portion so as to form a cylindrical ring of which inner diameter, outer diameter and axial length are predetermined values.
According to a twenty-second aspect of the invention, as set forth in the twenty-first aspect of the invention, it is preferable that
the removing process comprising:
an wringing process of wringing the excess thickness portion existing on the other circumferential face by a wringing jig, of which radial dimension agrees with a radial dimension of the high accurate ring, so as to collect the excess thickness portion at one portion with respect to the axial direction on the other circumferential face, to form a flange portion protruding in the radial direction in this one portion, and to make a diameter of the residual portion of the other circumferential face agree with the radial dimension of the high accurate ring; and
a removing process of removing the flange portion by punching after the completion of the wringing process.
According to a twenty-third aspect of the invention, as set forth in the twenty-first aspect of the invention, it is preferable that
the removing process including:
a shaving process of shaving the excess thickness portion existing on the other circumferential face by a punch, of which diameter agrees with a radial dimension of the high accurate ring to be manufactured.
According to a twenty-fourth aspect of the invention, it is preferable that the manufacturing method as set forth in the twenty-first aspect of the invention further comprising:
a process of compressing a columnar billet in the axial direction to form a disk-shaped partially finished material;
a process of compressing an axially central portion of the disk-shaped partially finished material in the axial direction to reduce axial length in the axially central portion; and
a rearwardly pushing process of compressing
   a portion on an outer diameter side of the disk-shaped partially finished material rearward with respect to a pushing direction so as to deform the disk-shaped partially finished material into a cylindrical shape to thereby form a bottomed secondary partially finished material, wherein
these processes are provided before the restriction process, and
a cylindrical material is formed by punching a bottom portion from the secondary partially finished material.
According to a twenty-fifth aspect of the invention, it is preferable that the manufacturing method as set forth in the twenty-first aspect of the invention further comprising:
an inversion forming process of twisting a cross-section shape of a ring-shaped partially finished material, which is manufactured by punching a metallic plate by angle of 90° to thereby form a cylindrical material,
wherein the inversion forming process is conducted before the restriction process.
According to a twenty-sixth aspect of the invention, as set forth in the twenty-first aspect of the invention, it is preferable that the high accurate ring is a material used for manufacturing an inner ring composing a radial ball bearing by cold working, and
one circumferential face of the high accurate ring is an outer circumferential face and the other circumferential face of the high accurate ring is an inner circumferential face.
According to a twenty-seventh aspect of the invention, as set forth in the twenty-first aspect of the invention, it is preferable that the high accurate ring is a material used for manufacturing an outer ring composing a radial ball bearing by cold working, and
one circumferential face of the high accurate ring is an inner circumferential face and the other circumferential face of the high accurate ring is an outer circumferential face.
According to a twenty-eighth aspect of the invention, there is provided a manufacturing method of a high accurate metallic ring comprising:
a process of compressing a billet-shaped material, of which volume is larger than that of the high accurate ring to be manufactured to thereby form a disk-shaped partially finished material, of which thickness dimension along an axial direction is large in a central portion and becomes small when it comes to an outer circumferential edge portion;
a process of forming a circular hole in a central portion of the disk-shaped partially finished material to thereby form a ring-shaped partially finished material, of which volume is the same as that of a high accurate ring; and
an inversion working process of contracting a portion on the outer diameter side of the ring-shaped partially finished material radially inwardly; and expanding a portion on the inner diameter side of the ring-shaped partially finished material radially outwardly, to make each portion in the circumferential direction in a cross-section of the ring-shaped partially finished material parallel each other in the axial direction, to thereby form the ring-shaped partially finished material into a cylindrical ring, of which inner diameter, outer diameter and axial length are made predetermined values
wherein a change in angle in the inversion working process is not more than 90°.
According to a twenty-ninth aspect of the invention, as set forth in the twenty-eighth aspect of the invention, it is preferable that when a circular hole is formed in the central portion of the disk-shaped partially finished material, a recess portion is formed at least on one side of both sides in the axial direction of a portion to be removed so that a volume of the portion to be removed is reduced.
According to a thirtieth aspect of the invention, as set forth in the twenty-ninth aspect of the invention, it is preferable that the process of forming the ring-shaped partially finished material including:
pressing the disk-shaped partially finished material, on which the recess portion is formed, in the axial direction while restricting an outer circumferential edge portion of the disk-shaped partially finished material so as not expand the outer diameter;
contracting the thickness along the axial direction to a proper value;
releasing a surplus of the volume to the recess portion; and
punching a central portion of the disk-shaped partially finished material including the recess portion from the ring-shaped partially finished material.
According to a thirty-first aspect of the invention, as set forth in the twenty-eighth aspect of the invention, it is preferable that
the process of forming the ring-shaped partially finished material including:
a process of forming an elementary circular hole, which is to be a circular hole, in a central portion of the disk-shaped partially finished material to thereby form an elementary ring-shaped partially finished material,
a process of pressing the elementary ring-shaped partially finished material in the axial direction while restricting an outer circumferential edge portion so as not to expand its outer diameter and reducing the thickness in the axial direction to a proper value and releasing a surplus of the volume to an inner circumferential edge portion of the elementary circular hole; and
a process removing the surplus existing in the inner circumferential edge portion from the elementary circular hole.
According to a thirty-second aspect of the invention, as set forth in the twenty-eighth aspect of the invention, it is preferable that while an outer circumferential edge portion of the disk-shaped partially finished material is being restricted so that an outer diameter of the disk-shaped partially finished material is be expanded, a circular hole is formed in a central portion of the disk-shaped partially finished material and a recess portion is formed only on one side in the axial direction of a portion to be removed so as to reduce a volume of the portion to be removed and
a shape of the disk-shaped partially finished material is formed into a substantial circular truncated cone in which a portion on the outer diameter side on the side on which the recess portion becomes a partial conical recess face so that a change in the angle is suppressed to be smaller than 90° at the time of inversion working in which the ring-shaped partially finished material is formed into a cylindrical ring.
According to a thirty-third aspect of the invention, as set forth in the twenty-eighth aspect of the invention, it is preferable that at the time of manufacturing the disk-shaped partially finished material by compressing the billet-shaped material in the axial direction, by restricting both radial sides at both axial ends of the billet-shaped material or the preliminary partially finished material, which is obtained when the billet-shaped material is worked, a diameter of both axial end portions of the billet-shaped material or the preliminary partially finished material is prevented from being expanded and
when a portion including both axially end faces of the material or the preliminary partially finished material is removed, a circular hole is formed and a ring-shaped partially finished material is obtained.
According to a thirty-fourth aspect of the invention, there is provided a manufacturing apparatus used for a manufacturing method of a high accurate metallic ring of which manufacturing method comprising:
a process of compressing a billet-shaped material, of which volume is larger than that of the high accurate ring to be manufactured to thereby form a disk-shaped partially finished material, of which thickness dimension along an axial direction is large in a central portion and becomes small when it comes to an outer circumferential edge portion;
a process of forming a circular hole in a central portion of the disk-shaped partially finished material to thereby form a ring-shaped partially finished material, of which volume is the same as that of a high accurate ring; and
an inversion working process of contracting a portion on the outer diameter side of the ring-shaped partially finished material radially inwardly; and expanding a portion on the inner diameter side of the ring-shaped partially finished material radially outwardly, to make each portion in the circumferential direction in a cross-section of the ring-shaped partially finished material parallel each other in the axial direction, to thereby form the ring-shaped partially finished material into a cylindrical ring, of which inner diameter, outer diameter and axial length are made predetermined values
wherein a change in angle in the inversion working process is not more than 90°,
wherein at the time of manufacturing the disk-shaped partially finished material by compressing the billet-shaped material in the axial direction, by restricting both radial sides at both axial ends of the billet-shaped material or the preliminary partially finished material, which is obtained when the billet-shaped material is worked, a diameter of both axial end portions of the billet-shaped material or the preliminary partially finished material is prevented from being expanded and
when a portion including both axially end faces of the material or the preliminary partially finished material is removed, a circular hole is formed and a ring-shaped partially finished material is obtained,
the manufacturing apparatus comprising:
a fixing block;
a die having a lower side central hole, wherein under a condition that the die descends until it comes into contact with an upper face of the fixing block when a strong force is given to the die, the lower side central hole is capable of internally engaging with a lower end portion of the billet-shaped material or the preliminary partially finished material, which is obtained when the billet-shaped material is worked and is elastically supported at an upper portion of the fixing block;
a counter punch inserted into the lower side central hole so as to be elevated with respect to the die;
a ring punch having an upper side central hole, wherein
   under the condition that the ring punch ascends until it comes into contact with a lower face of a ram when a strong force is given to a part of the ram of a press machine provided upside of the die so as to be coaxial with the die, the upper side central hole is capable of internally engaging with the upper end portion of the billet-shaped material or the preliminary partially finished material, which is obtained when this billet-shaped material is worked and is elastically supported at a lower portion of the ram; and
a punch inserted into the upper side central hole so as to elevate with respect to the ring punch.
According to a thirty-fifth aspect of the invention, as set forth in the thirty-fourth aspect of the invention, it is preferable that before at least working of the disk-shaped partially finished material is completed, the counter punch is supported without being elevated with respect to the fixing block and the punch is supported without being elevated with respect to the ram,
under a condition that a lower face of the die comes into contact with an upper face of the fixing block, an upper end face of the counter punch exists at a position recessed downward from an upper face of the die, and
under the condition that an upper face of the ring punch comes into contact with a lower face of the ram, the punch exists at a position recessed upward from a lower face of the ring punch.
According to a thirty-sixth aspect of the invention, there is provided a manufacturing method of a high accurate metallic ring comprising:
a primary partially finished material forming process of:
   compressing a billet-shaped material, of which volume is larger than that of the high accurate ring to be manufactured, in the axial direction and
   forming a circular hole in a radially central portion
   to thereby form a primary partially finished material having:
      a cylinder portion having predetermined thickness and predetermined axial dimension; and
      a flange portion which is directed outwardly and is provided in a circumferential portion of the cylindrical portion;
a division process of cutting off the primary partially finished material in boundary portion between an outer circumferential face of the cylindrical portion and an inner circumferential edge of the flange portion at a radially intermediate portion, to thereby divide the cylindrical portion which is made as a first high accurate ring, and the flange portion which is made as a ring-shaped secondary partially finished material; and
a second high accurate ring forming process of inverting a direction of a cross-section of the secondary partially finished material by angle of 90° to thereby obtain a cylindrical second high accurate ring, of which inner diameter, outer diameter and axial length are predetermined values.
According to a thirty-seventh aspect of the invention, as set forth in the thirty-sixth aspect of the invention, it is preferable that in the primary partially finished material forming process, by compressing the material in a direction that both axial ends come close to each other, forming a boss portion, of which axial thickness in the radially central portion is larger than the axial thickness in the radially outward portion, and a flange portion in a peripheral portion of the boss portion,
crushing a central portion of the boss portion in the axial direction so as to reduce the axial thickness of the central portion and also to increase the axial thickness of a portion close to the outer diameter of the boss portion, and
punching a portion of the central portion, of which thickness is reduced, to form a circular hole.
According to a thirty-eighth aspect of the' invention, as set forth in the thirty-sixth aspect of the invention, it is preferable that in the primary partially finished material forming process, by compressing both central portions of axially end faces of the material, in a direction that they come close to each other so as to reduce the axial thickness of the central portion, so as to form an elementary cylindrical portion axially protruding from both axial end faces of the flange portion, and then the portion in the central portion, of which thickness is reduced, is punched to form a circular hole.
According to a thitty-ninth aspect of the invention, it is preferable that the manufacturing method as set forth in the thirty-sixth aspect of the invention, further comprising:
a process, which is provided between the division process and the second high accurate ring forming process, in which
   while restricting an outer circumferential edge portion of the secondary partially finished material so not to expand an outer diameter of the secondary partially finished material,
   setting-down process of compressing the secondary partially finished material in the axial direction until a predetermined thickness is obtained, and flowing an excess thickness portion to an inner circumferential edge portion and
   removing the excess thickness portion by removing the inner circumferential edge portion by piercing working, to obtain a desired volume of the secondary partially finished material.
According to a fortieth aspect of the invention, as set forth in the thirty-sixth aspect of the invention, it is preferable that the axial thickness of the flange portion, which is formed in the first high accurate ring forming process, is increased in a portion close to the central portion in the radial direction and decreased in the outer circumferential edge portion, and
in the second high accurate ring forming process, an inversion working, in which contracting a portion close to the outer diameter of the secondary partially finished material radially inwardly and expanding a portion close to the inner diameter radially outwardly, is conducted.

### ADVANTAGE OF THE INVENTION

According to the raceway ring for a radial ball bearing composed as described above and the manufacturing method thereof of the present invention, a raceway ring composing a radial ball bearing, which is applied to the above use, the rotation accuracy of which is not so high, can be obtained at a low manufacturing cost while the accuracy, which is sufficiently high for practical use, is being maintained.
A cylindrical material (a high accurate material), the volume of which is the same as that of a raceway ring to be manufactured (In the case where finish working is conducted being accompanied by the removal of the material, consideration is given to it.), is plastically deformed by cold working to form the raceway ring. Therefore, accuracy of the shape and size of this raceway ring can be maintained high.
Of course, when the accuracy of working is enhanced, the present invention can be applied to a raceway ring for a ball bearing for which high accuracy is required.

According to the manufacturing method of the above highly accuracy ring of the present invention, it is possible to easily and efficiently manufacture a high accurate ring, the inner diameter, the outer diameter and the size in the axial direction of which are regulated to be proper values, and the central axes of the inner and outer circumferential faces of which strictly agree with each other, by a high yield. As a result, the cost for working an outer ring or an inner ring composing a radial ball bearing, which is made when the high accurate ring is worked, can be reduced while a sufficiently high performance is being maintained for the practical use.
Of course, when the accuracy of working is enhanced, the present invention can be applied to a high accurate ring used for manufacturing a raceway ring of a ball bearing for which high accuracy is required.

### BRIEF DESCRIPTION OF THE DRAWINGS

Figs. 1A to 1F are sectional views showing a process of working an outer ring.
Figs. 2A and 2B are sectional views showing a process of contracting a pipe in the process of working an outer ring.
Figs. 3A and 3B are sectional views showing a process of extruding an inner diameter in the process of working an outer ring.
Figs. 4A and B are sectional views showing a process of forming an outer ring raceway in the process of working an outer ring.
Fig. 5 is a sectional view showing a first example of a process of working an engagement groove for a sealing plate in the process of working an outer ring.
Fig. 6 is a sectional view showing a second example of a process of working an engagement groove for a sealing plate in the process of working an outer ring.
Fig. 7 is a side view showing a process of working an outer ring raceway in the process of working an outer ring.
Fig. 8A is a sectional view taken on line a - a in Fig. 7 showing a state right after the start of a process of working an outer ring raceway.
Fig. 8B is a sectional view taken on line a - a in Fig. 7 showing a state right before the end of a process of working an outer ring raceway.
Fig. 9 is the same view as Fig. 7 showing Embodiment 4 of the present invention.
Fig. 10A is a sectional view taken on line b - b in Fig. 9 showing a state right after the start of a process of working an outer ring raceway.
Fig. 10B is a sectional view taken on line b - b in Fig. 9 showing a state right before the end of a process of working an outer ring raceway.
Fig. 11 is the same view as Fig. 7 showing Embodiment 5 of the present invention.
Fig. 12A is a sectional view taken on line c - c in Fig. 11 showing a state right after the start of a process of working an outer ring raceway
Fig. 12B is a sectional view taken on line c - c in Fig. 11 showing a state right before the end of a process of working an outer ring raceway.
Figs. 13A to 13D are sectional views showing Embodiment 6 of the present invention in which steps of working a cylindrical partially finished material into an outer ring by rolling are shown in order.
Fig. 14 is an enlarged view showing portion "t" in Fig. 13(B).
Figs. 15A and 15B are sectional views showing a partially finished material and an outer ring obtained from the partially finished material.
Figs. 16A to 16F are sectional views showing Embodiment 7 of the present invention in which a process of working an inner ring is shown.
Figs. 17A and 17B are sectional views showing a process of contracting a pipe in the process of working an inner ring.
Figs. 18A and 18B are sectional views showing a process of extruding an inner diameter in the process of working an inner ring.
Figs. 19A and 19B are sectional views showing a process of forming an inner ring raceway in the process of working an inner ring.
Fig. 20 is a sectional view showing a first example of a process of working a step portion for sealing in the process of working an inner ring.
Fig. 21 is a sectional view showing a second embodiment (eighth embodiment) in the process of working an inner ring.
Fig. 22 is a side view showing a process of working an inner ring raceway in the process of working an inner ring.
Fig. 23A is a sectional view taken on line d - d in Fig. 22 showing a state right after the start of a process of working an inner ring raceway.
Fig. 23B is a sectional view taken on line d - d in Fig. 22 showing a state right before the end of a process of working an inner ring raceway.
Fig. 24 is the same view as Fig. 22 showing Embodiment 10 of the present invention.
Fig. 25A is a sectional view taken on line e - e in Fig. 24 showing a state right after the start of a process of working an inner ring raceway.
Fig. 25B is a sectional view taken on line e - e in Fig. 24 showing a state right before the end of a process of working an inner ring raceway.
Fig. 26 is the same view as Fig. 22 showing Embodiment 11 of the present invention.
Fig. 27A is a sectional view taken on line f - f in Fig. 26 showing a state right after the start of a process of working an inner ring raceway.
Fig. 27B is a sectional view taken on line f - f in Fig. 26 showing a state right before the end of a process of working an inner ring raceway.
Fig. 28 is a side view showing Embodiment 12 of the present invention.
Fig. 29A is a sectional view taken on line h - h in Fig. 28 showing a state right before the start of a process of working an inner ring raceway.
Fig. 29B is a sectional view taken on line h - h in Fig. 28 showing a state right before the end of a process of working an inner ring raceway.
Figs. 30A and 30B are sectional views showing a partially finished material and an inner ring obtained from the partially finished material.
Figs. 31A to 31G are sectional views showing a working step of Embodiment 13 of the present invention.
Fig. 32 is a sectional view showing a state in which excess thickness forming is executed in Embodiment 13.
Figs. 33A to 33F are sectional views showing a working process of Embodiment 14 of the present invention.
Fig. 34 is a sectional view showing a state in which excess thickness forming is executed in Embodiment 15.
Figs. 35A to 35F are sectional views showing a working process of Embodiment 16 of the present invention.
Figs. 36A to 36C are sectional views showing a state in which reversal working is executed in Embodiment 16.
Figs. 37A to 37E are sectional views showing a working process of Embodiment 17 of the present invention.
Figs. 38A to 38E are sectional views showing a working process of Embodiment 18 of the present invention.
Figs. 39A to 39C are sectional views showing a state in which reversal working is executed in Embodiment 18.
Figs. 40A to 40F are sectional views showing a working process of Embodiment 19 of the present invention.
Fig. 41 is a sectional view showing a state in which sizing is executed in Embodiment 19.
Figs. 42A to 42F are sectional views showing a working process of Embodiment 20 of the present invention.
Figs. 43A to 43E are sectional views showing a working process of Embodiment 21 of the present invention.
Figs. 44A to 44C are sectional views showing a specific state in which a portion of the working process is executed in Embodiment 21.
Figs. 45A to 45H are sectional views showing a working process of Embodiment 22 of the present invention.
Figs. 46A to 46C are sectional views showing a specific state in which a portion of the working process is executed in Embodiment 22.
Figs. 47A and 47B are schematic illustrations for explaining operational effect of Embodiment 22.
Figs. 48A to 48F are sectional views showing a first half of the working process of Embodiment 23 of the present invention.
Figs. 49A to 49C are sectional views showing a latter half of the working process of Embodiment 23 of the present invention.
Fig. 50 is a sectional view showing a specific state in which a sizing step is executed.
Figs. 51A to 51C are sectional views showing a state in which reversal working is executed.
Figs. 52A to 52F are sectional views showing a working step of Embodiment 24 of the present invention.
Fig. 53 is a partially cut perspective view showing an example of a radial ball bearing into which a raceway ring is incorporated.

### DESCRIPTION OF REFERENCE NUMERALS AND SIGNS

- 1: Radial ball bearing
- 2, 2a: Outer ring
- 3: Inner ring
- 4: Ball
- 5: Outer ring raceway
- 6: Inner ring raceway
- 7: Cage
- 8: High accurate material
- 9: Preliminary partially finished material
- 10: Primary partially finished material
- 11: Secondary partially finished material
- 12: Third partially finished material
- 13: Step portion
- 14: Die
- 15: Working hole
- 16: Large diameter portion
- 17: Punch
- 18: Small diameter portion
- 19: Curved face portion
- 20: Convex face portion
- 21, 21a: Concave face portion
- 22: Knockout ring
- 23: Die
- 24: Working hole
- 25: Counter ring
- 26: Punch
- 27: Small diameter portion
- 28: Large diameter portion
- 29: Convex face portion
- 30: Die
- 31: Working hole
- 32: Small diameter portion
- 33: Large diameter portion
- 34: Punch
- 35: Curved face portion
- 36: Concave face portion
- 37a, 37b: Core
- 38: Engagement groove
- 39: Outer roller
- 40: Inner roller
- 41a, 41b: Ring-shaped punch
- 122, 122a, 122b: Die
- 129, 129a, 129b: Circumscribing roller
- 130: Inscribing roller
- 131: Curved working portion
- 132: Convex face portion
- 133: Protrusion
- 134: Engaging groove
- 135, 135a: Mandrel
- 136: Working side circumferential face
- 137: Stepped portion
- 138, 138a: Step face
- 139, 139a: End face
- 213: Step portion
- 214: Die
- 215: Working hole
- 216: Large diameter portion
- 217: Punch
- 218: Small diameter portion
- 219: Convex face portion
- 220: Convex face portion
- 221,221a: Concave face portion
- 222: Knockout ring
- 223: Die
- 224: Working hole
- 225: Counter ring
- 226: Punch
- 227: Small diameter portion
- 228: Large diameter portion
- 229: Convex face portion
- 230: Die
- 231: Working hole
- 232: Punch
- 233: Small diameter portion
- 234: Large diameter portion
- 235: Ring punch
- 236: Curved face portion
- 237: Concave face portion
- 238: Concave face portion
- 239: Container
- 240: Step portion for sealing
- 241: Forming roller
- 242: Arbor
- 312a: Step portion
- 329c, 329d, 329e: Circumscribing roller
- 330a: Inscribing roller
- 331a: Curved working portion
- 332a: Convex face portion
- 335: Mandrel
- 340: Arbor
- 341: Roller
- 413: Billet
- 414: Primary partially finished material
- 415: Secondary partially finished material
- 416: Third partially finished material
- 417: Die
- 418, 418a, 418b: Punch
- 419: Protruding portion
- 420: Flat face
- 421: Fourth partially finished material
- 422, 422a: Central hole
- 423: Excess thickness portion
- 424: Fifth partially finished material
- 425: Guide pin portion
- 26: Disk-shaped material
- 427: Primary partially finished material
- 428: Secondary partially finished material
- 429: Die
- 430: Punch
- 431: Large diameter portion
- 432: Small diameter portion
- 433: Curved face
- 513: Disk-shaped material
- 514: Partially finished material
- 515: Ring-shaped member
- 516: Die
- 517: Punch
- 518: Large diameter portion
- 519: Small diameter portion
- 520: Curved portion
- 521: Billet
- 522, 522a: Disk-shaped partially finished material
- 523, 523a: Recess portion
- 524, 524a, 524b, 524c, 524d: Second disk-shaped partially finished material
- 525: Circular hole
- 526, 526a, 526b: Ring-shaped partially finished material
- 527: Die
- 528: Circular hole
- 529: Punch
- 530, 530a: Elementary circular hole
- 531, 531a, 531b: Elementary ring-shaped partially finished material
- 532: Preliminary partially finished material
- 533: Fixing block
- 534: Die
- 535: Counter punch
- 536: Ring punch
- 537: Punch
- 538, 538a: Elastic member
- 539: Lower side central hole
- 540: Recess portion for working
- 541: Ram
- 542: Upper side central hole
- 543: Thick portion
- 544: Scrap
- 545: Die
- 546: Punch
- 547: Counter punch
- 548: Inclined ring-shaped portion
- 613: Billet
- 614: First high accurate ring
- 615: Second high accurate ring
- 616: Preliminary partially finished material
- 617: Second preliminary partially finished material
- 618: Boss portion
- 619: Flange portion
- 620: Third preliminary partially finished material
- 621: Cylindrical portion
- 622: Circular hole
- 623: Primary partially finished material
- 624: Cylindrical portion
- 625: Scrap
- 627: Secondary partially finished material
- 629: Die
- 630: Circular hole
- 631: Punch
- 632: Circular hole
- 633: Fourth preliminary partially finished material
- 634: Die
- 635: Punch
- 636: Large diameter portion
- 637: Small diameter portion
- 638: Curved portion
- 639: Second preliminary partially finished material
- 640a, 640b: Circular recess hole
- 641: Third preliminary partially finished material
- 642: Boss portion
- 643: Partition plate portion
- 644: Circular hole
- 645: Cylindrical portion
- 646: Primary partially finished material
- 647: First high accurate ring
- 648: Step portion

### BEST MODE FOR CARRYING OUT THE INVENTION

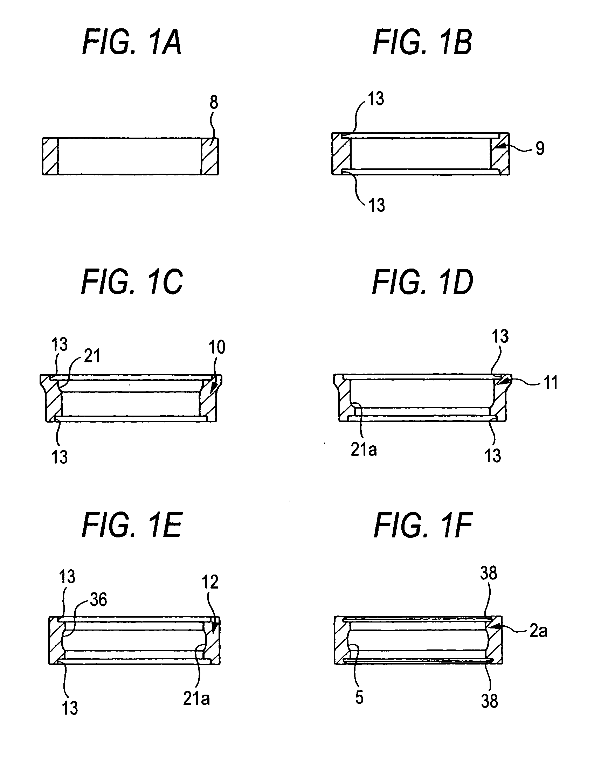

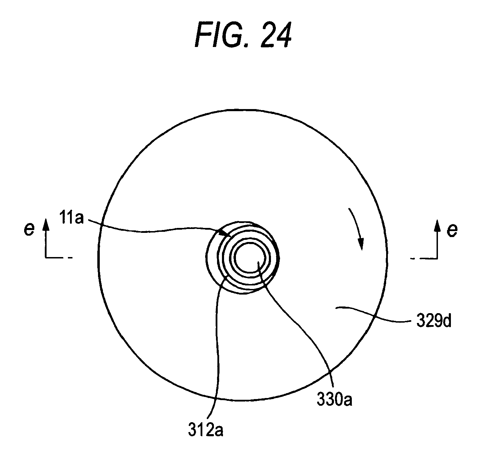

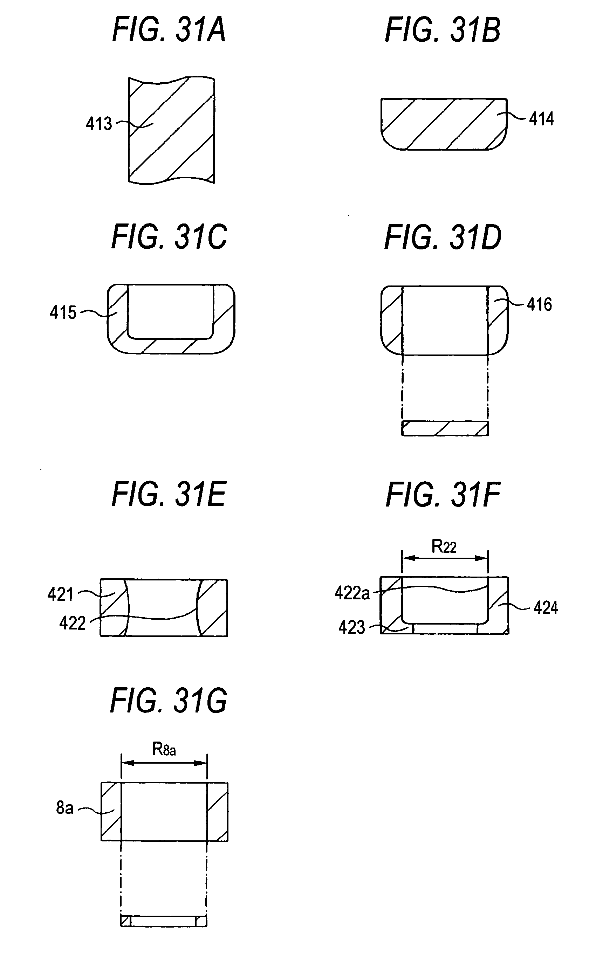

Referring to Figs. 1 to 53, embodiments of the present invention will be explained. First, referring to Figs. 1 to 30, a manufacturing method of a raceway ring will be explained below. After that, referring to Figs. 31 to 53, a manufacturing method of a high accurate ring, which is preferably used for manufacturing the raceway ring, will be explained.

First, a manufacturing method of a raceway ring will be explained below.
A method of forming the raceway ring of the present invention is divided into five processes. The first process is to form a step portion, the second process is to contract a pipe, the third process is to extrude an inner and an outer diameter, the fourth process is to form a raceway, and the fifth process is to form a sealing face. Each process is executed by cold working, which is one of the characteristics of the present invention. Embodiments described later are distinguished from each other by a process to which roller working is applied.

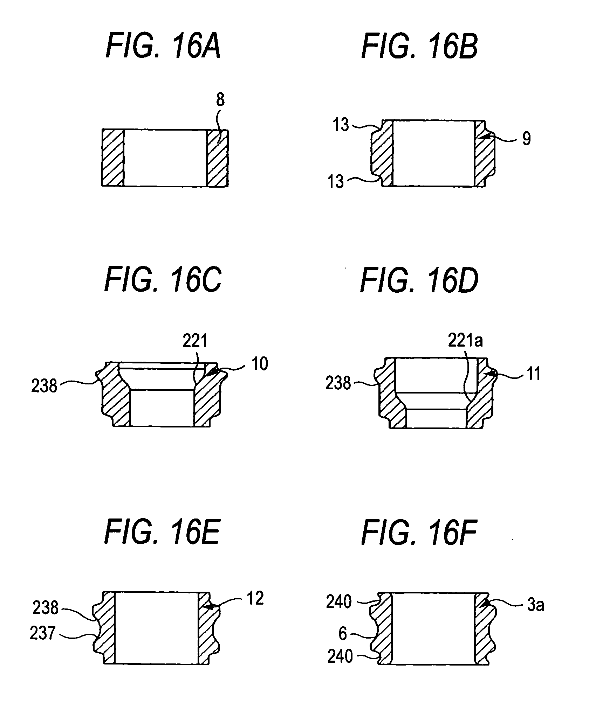

The raceway ring includes an outer ring and an inner ring. In the following embodiments, a manufacturing method of the outer ring will be explained. After that, a manufacturing method of the inner ring will be explained. Embodiments 1 to 6 shown in Figs. 1 to 15 relate to the manufacturing method of the outer ring. Embodiments 7 to 12 shown in Figs. 16 to 30 relate to the manufacturing method of the inner ring.
In the first and the seventh embodiment, rolling process is not used in the processes of manufacturing the outer ring and the inner ring, that is, all processes are executed without using rolling processing.
In the second and the eighth embodiment, rolling process is applied to the fifth process in the process of manufacturing the outer ring and the inner ring.
The third to the fifth embodiment and the ninth to the eleventh embodiment are embodiments in which rolling process is applied to the fourth and the fifth process in the manufacturing process of an outer and an inner ring.
In the sixth and the twelfth embodiment, rolling process is applied to the second to the fifth process in the process of manufacturing the outer ring and the inner ring.
In any embodiment, the first process is executed by means of press forming in which metallic dies are used. Each embodiment will be explained in detail below

### EMBODIMENT 1

First of all, referring to Embodiments 1 to 6, a method of forming an outer ring of the present invention will be explained.
Figs. 1 to 6 are views showing Embodiment 1 of the present invention. The present invention is characterized in that: after a cylindrical high accurate material 8 (shown in Fig. 1(A)), the volume of which is substantially the same as that of the outer ring 2a (shown in Fig. 1(F)), is previously made, this cylindrical high accurate material 8 is plastically deformed by means of cold working so that it can be formed into the outer ring 2a. The method of making this high accurate material 8 is not particularly limited to a specific method. However, from the viewpoint of enhancing the yield of material and reducing the manufacturing cost, it is preferable to manufacture high accurate material 8 in such a manner that a long wire rod (wire coil) is cut into a predetermined length and subjected to cold plastic working. Alternatively, when a plate member is punched into a ring shape and a cross-section of this ring-shaped member is twisted by 90°, the above high accurate material 8 can be obtained. In the case where the high accurate material 8 is made by any method, this high accurate material 8 is plastically deformed by means of cold working described as follows and formed into the above outer ring 2a.

In the case of the present embodiment, the high accurate material 8 shown in Fig. 1(A) is formed into the outer ring 2a shown in Fig. 1(F) via the preliminary partially finished material 9 shown in Fig. 1(B), the primary partially finished material 10 shown in Fig. 1(C), the secondary partially finished material 11 shown in Fig. 1(D) and the third partially finished material 12 shown in Fig. 1(E). The respective processes will be explained below in order.

The high accurate material 8 is formed into the preliminary partially finished material 9 as follows. An outer circumferential face of this high accurate material 8 is internally engaged with an inner circumferential face of a holding die not shown. An inner circumferential face of this high accurate material 8 is externally engaged with a core. In this state, a forward end face of a punch not shown is pressed onto the entire circumferences of the inner diameter side half portions on both axially end faces (the vertical direction of Fig. 1) of this high accurate material 8. As a result, the inner diameter side half portions on both axially end faces of this high accurate material 8 are recessed in the axial direction. Accordingly, the preliminary partially finished material 9 having step portions 13, 13 in the portions concerned can be obtained. At this time, metal, which has flowed outside in the radial direction (the lateral direction in Fig. 1) when both step portions 13, 13 are formed, can be absorbed when outer diameter side half portions of both axial end portions are protruded in the axial direction. In this connection, an outer diameter of the preliminary partially finished material 9, which is made in this way, is larger than an outer diameter of the outer ring 2a to be manufactured.

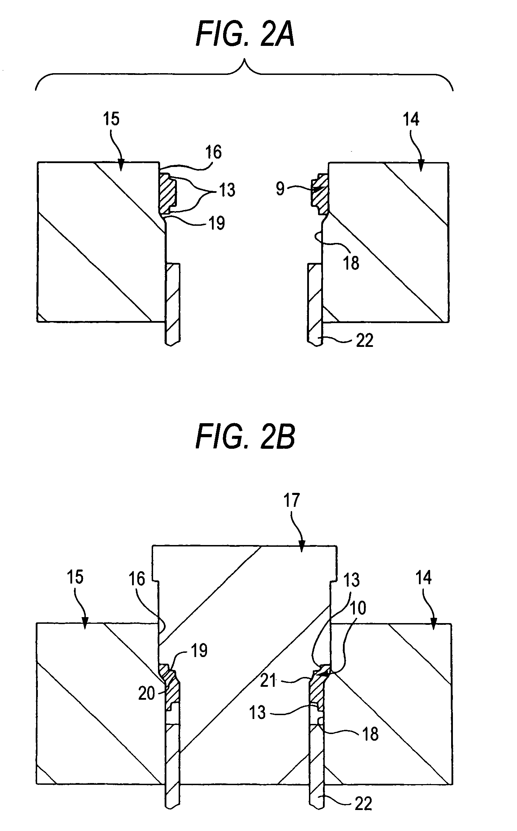

Therefore, pipe contraction working, in which a diameter of a portion (a portion except for one end portion (an upper end portion in Fig. 1) in the axial direction) of this preliminary partially finished material 9 is contracted to the outer diameter of the outer ring 2a, is conducted on the preliminary partially finished material 9. This pipe contraction working is executed as shown in Fig. 2.
First, as shown in Fig. 2(A), this preliminary partially finished material 9 is internally engaged (set) in a large diameter portion 16 of a working hole 15 provided in a die 14. Next, as shown in Fig. 2(B), the preliminary partially finished material 9 is pushed into the internal portion of the working hole 15 by a punch 17. This working hole 15 continuously connects the large diameter portion 16 with a small diameter portion 18, which is provided in an internal portion of large diameter portion 16, by a smoothly formed curved portion 19. An inner diameter of this small diameter portion 18 is made to coincide with the outer diameter of the outer ring 2a. Accordingly, an outer diameter of a portion of the preliminary partially finished material 9, which was pushed into the small diameter portion 18 existing in the internal portion of the working hole 15 by the punch 17, can be contracted so that it can coincide with the outer diameter of the outer ring 2a. In this way, the primary partially finished material 10 can be formed.

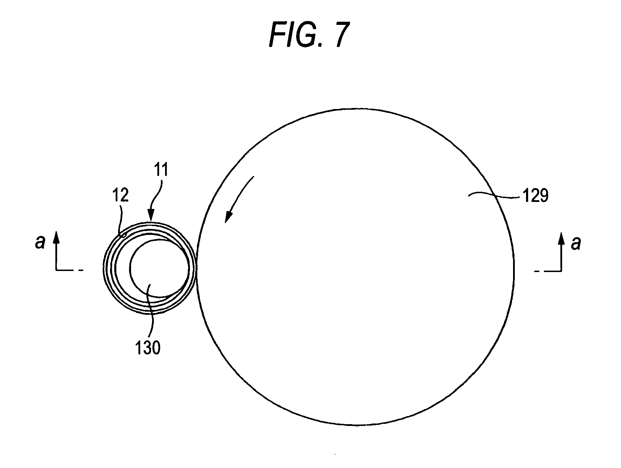

In this connection, in the example shown in the drawing, when a convex face portion 20 is formed in a portion on the forward end face of the punch 17, a concave face portion 21, the cross section of which is formed into an arc, is formed in a portion of the inner circumferential face of the primary partially finished material 10 all over the circumference. Punch 17 forms this concave face portion 21 at an early stage of working in which the preliminary partially finished material 9 is formed into the primary partially finished material 10. Accordingly, in the process in which the outer diameter is contracted so that the primary partially finished material 10 can be formed by contracting the diameter of a portion of the preliminary partially finished material 9, working stress is given only to a contact portion of the curved face portion 19 with the outer circumferential face of the preliminary partially finished material 9 except for the initial stage described before. Accordingly, the outer circumferential face of the primary partially finished material 10 can be plastically worked with high accuracy by curved face portion 19 of the working hole 15. Working this portion with high accuracy is important from the viewpoint of ensuring the accuracy of the outer ring raceway 5 (shown in Fig. 1(F) or Fig. 7) to be obtained. This point will be described in detail later. This partially finished material 10, which has been made in this way, is pushed out from the working hole 15 by a knockout ring 22 and sent to the next process.

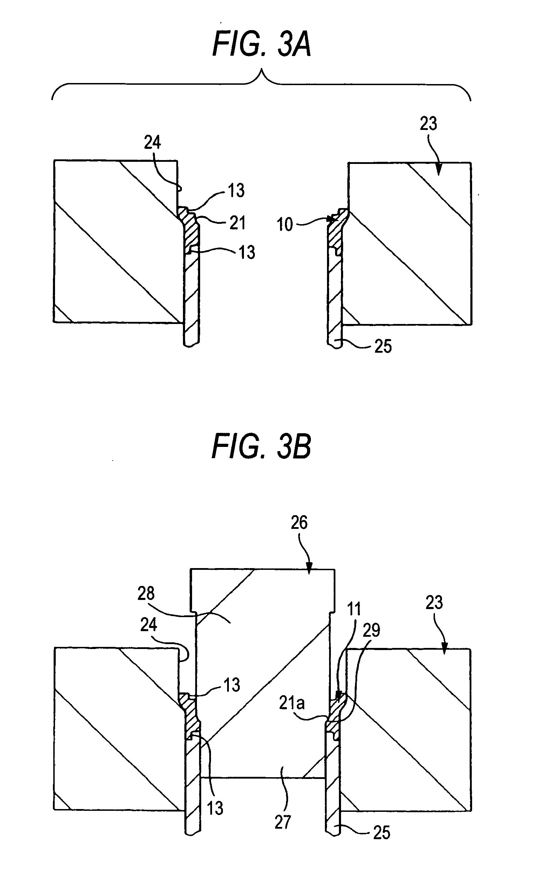

In the next process, in order to form a half portion in the axial direction (a lower half portion in Fig. 1) of the outer ring raceway 5, inner diameter pushing working is conducted on the inner circumferential face of the primary partially finished material 10. This inner diameter pushing working is conducted as shown in Fig. 3.
First of all, as shown in Fig. 3 (A), the primary partially finished material 10 is internally engaged in the working hole 24 provided in the die 23 and one end face (a lower end face shown in Fig. 3) in the axial direction of the primary partially finished material 10 is made to collide (set) with a forward end face (upper end face shown in Fig. 3) of a counter ring 25 inserted into the working hole 24. In this state, the outer circumferential face of the primary partially finished, material 10 tightly comes into contact with the inner circumferential face of the working hole 24. In the same manner, one end face in the axial direction tightly comes into contact with a forward end face of the counter ring 25. A .positional relation in the axial direction (the vertical direction in Fig. 3) between the counter ring 25 and the die 23 is strictly regulated.

After the primary partially finished material 10 has been set as described above, next, as shown in Fig. 3(B), ironing is conducted on an inner circumferential face of the primary partially finished material 10. A forward end portion of this punch 26 is formed into a small diameter portion 27 which can be displaced in the axial direction with respect to this counter ring 25 under the condition that the forward end portion of this punch 26 is inserted into the counter ring 25 without forming any gap, that is, under the condition that the concentricity is strictly regulated. This small diameter portion 27 and the large diameter portion 28, which is provided in a portion close to the base end portion (the upper end portion shown in Fig. 3) concentrically with the small diameter portion 27, are continued to each other by a convex face portion 29. A shape of the cross-section of this convex face portion 29 is formed into an arc which agrees with a shape of the cross-section of the axial direction half portion of the outer ring raceway 5. In the aforementioned inner diameter extrusion, the convex face portion 29 of the punch 26 is made to coincide with the concave face portion 21 existing on the inner circumferential face of the primary partially finished material 10. Therefore, while a shape of this concave face portion 21 is being straightened, this concave face portion 21 is moved to a predetermined position toward one end portion in the axial direction of the primary partially finished material 10, that is, a portion close to the inner diameter is ironed.

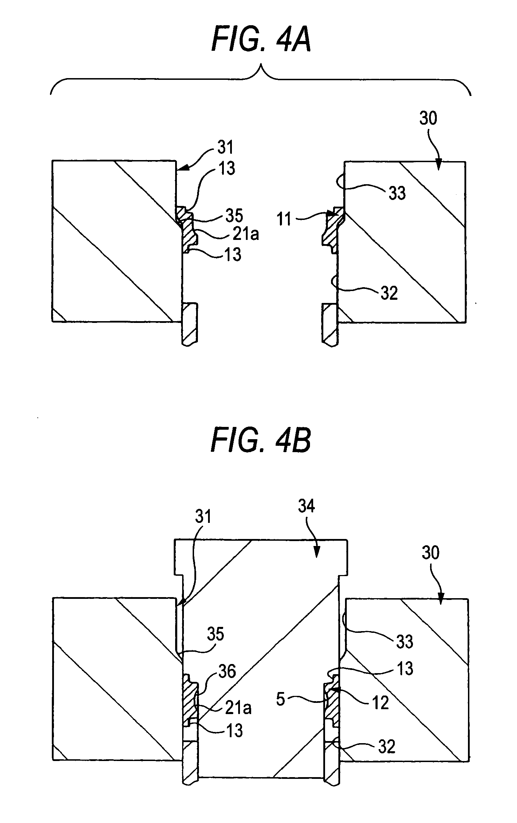

As a result, it is possible to obtain the secondary partially finished material 11 in which a concave face portion 21a, which is an axial direction half portion of outer ring raceway 5, is provided in a portion close to one end in the axial direction of the inner circumferential face. When the secondary partially finished material 11 is made in this way, in the process of ironing in which while the shape of the concave face portion 21 is being straightened, it is moved to a predetermined position, and in which the concave face portion 21a, which becomes the axial direction half portion of the outer ring raceway 5, is obtained, stress of working is given only to a contact portion of the convex face portion 29 with the concave face portion 21. Accordingly, plastic working can be high accurately conducted on the concave face portion 21a, which becomes the axial direction half portion of the outer ring raceway 5, by the convex face portion 29. A shape of a portion close to one end in the axial direction (a lower half portion in Fig. 3(B) provided in the concave face portion 21 a in the secondary partially finished material 11 made in this way substantially agrees with a shape of the portion concerned of the outer ring 2a to be manufactured. Concerning the portion which has been worked into a step-shape by the curved face portion 19 provided in an intermediate portion of the working hole 15 at the time of pipe contraction shown in Fig. 2, at the time of completion of the inner diameter extrusion shown in Fig. 3, a distribution in the axial direction of the wall thickness in the radial direction agrees with a distribution of the portion concerned of the outer ring 2a to be manufactured. In this case, consideration is given to a change in the wall thickness caused by a reduction of the diameter at the time of working the outer ring raceway described later. Therefore, at the time of conducting the working of pipe contraction shown in Fig. 2, a shape of the curved face portion 19 and an insertion of the punch 17 into the die 14 are strictly regulated. Further, a shape of curved face portion 35 of the working hole 31 of the die 30 shown in Fig. 4 is strictly regulated. The secondary partially finished material 11 manufactured in this way is extruded from the working hole 24 by the counter ring 25 and sent to the next process.

In this process, the outer ring raceway forming is conducted as follows. An outer diameter of a portion close to the other end in the axial direction of the secondary partially finished material 11 (a portion close to the upper end in Figs, 3 and 4) is reduced, so that the outer diameter can be made to be uniform all over the length in the axial direction except for chamfered portions provided at both end edge portions and the counter ring raceway 5 is formed on the inner circumferential face. This outer ring raceway forming is conducted as shown in Fig. 4.
First, as shown in Fig. 4(A), the secondary partially finished material 11 is internally engaged (set) in the working hole 31 provided in the die 30. At this time, a portion of the secondary partially finished material 11, the outer diameter of which has already been reduced, is internally engaged in the small diameter portion 32 of the working hole 31, and a portion of the secondary partially finished material 11, the outer diameter of which has not been reduced yet, is internally engaged in the large diameter portion 33 without forming any gap. Next, as shown in Fig. 4(B), the entire partially finished material 11 is pushed into the small diameter portion 32, which is formed at an inner portion of the working hole 31, by the punch 34.

As a result of this pushing work, the portion, which has not been contracted yet, is ironed by the curved face portion 35 which continuously connects the large diameter portion 33 with the small diameter portion 32. Therefore, an outer diameter of this portion is also contracted so that it can agree with an outer diameter of the outer ring 2a. At the same time, on the inner diameter side of this portion, a concave face portion 36, which becomes the other half portion in the axial direction of the outer ring raceway 5, is formed. That is, as described before, a distribution of the wall thickness in the axial direction with respect to the radial direction of the portion, the diameter of which has not been contracted yet, is made to agree with a distribution of the wall thickness of the portion concerned of the outer ring 2a to be manufactured. In this case, consideration is given to an increase in the wall thickness caused when the diameter is reduced. Therefore, when the outer diameter of the above portion is reduced so that it can agree with the outer diameter of the outer ring 2a, a shape of the cross-section on the inner circumferential face side agrees with the other half portion in the axial direction of the outer ring raceway 5. Accordingly, the concave face portion 36 described before is formed. This concave face portion 36 continues to the concave face portion 21a described before and composes the deep groove type outer ring raceway 5. In this way, the third partially finished material 12 described before is formed.

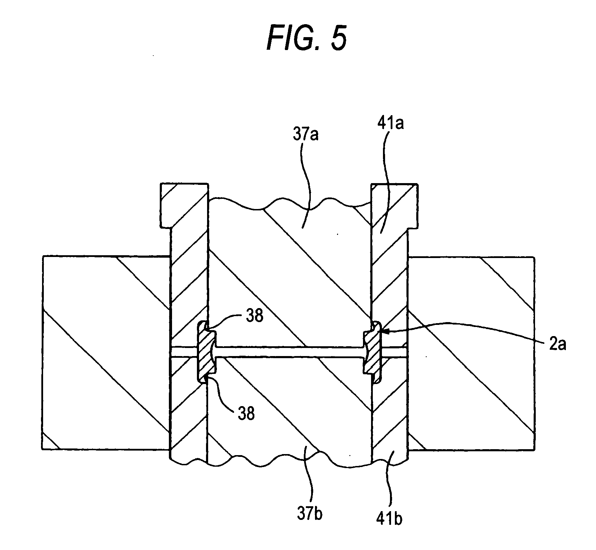

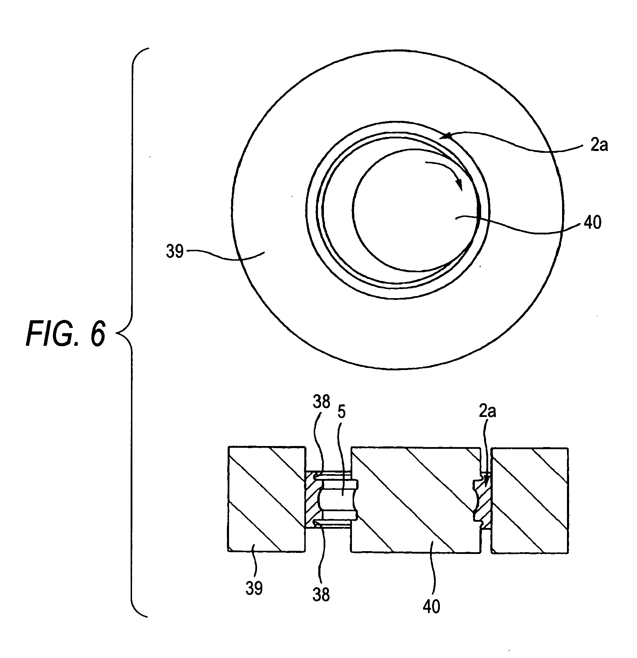

Third partially finished material 12 obtained as described above is subjected to finish working, that is, engaging grooves for engaging an outer circumferential edge portion of a sealing plate are formed at both axial end portions of the inner circumferential face. This work of forming the engaging grooves is conducted as shown in Fig. 5 (the first embodiment) or Fig. 6 (the second embodiment).
In this case, a method of the first embodiment shown in Fig. 5 is press forming, which is performed as follows. Under the condition that the inner diameter side of the third partially finished material 12 is held by a pair of cores 37a, 37b, portions close to the outer diameter of both axially end faces of the third partially finished material 12 are pressed in the axial direction by a pair of ring-shaped punches 41a, 41b. By this press forming, the portions close to the outer diameter of both axially end faces of the third partially finished material 12 are plastically deformed so that they can be inclined inside in the axial direction and the radial direction. Therefore, engaging grooves 38, 38 engaging with the outer circumferential edge portions of the sealing plate are formed in both step portions 13, 13. In this way, the outer ring 2a is formed.

### EMBODIMENT 2

According to the method of the second embodiment shown in Fig. 6, rolling is conducted in such a manner that the third partially finished material 12 is pressed from both sides in the radial direction between an inner circumferential face of the outer roller 39 and an outer circumferential face of the inner roller 40, wherein the outer roller 39 and the inner roller 40 are arranged eccentrically to each other and rotated in the same direction. An inner circumferential face of the outer roller 39 is formed out of a simple cylindrical face and supports an outer circumferential face of the third partially finished material 12. On the other hand, a shape of the cross-section of axially intermediate portion of the outer circumferential face of the inner roller 40 is made to agree with the shape of the cross-section of the inner circumferential face of the outer ring 2a to be manufactured. In the case of the present embodiment, the third partially finished material 12 is interposed between the outer circumferential face of the inner roller 40 and the inner circumferential face of the outer roller 39. Then, the inner roller 40 is rotated being pressed to the outer roller 39. Due to the foregoing, a shape of the outer circumferential face of the inner roller 40 is transferred onto the inner circumferential face of the third partially finished material 12 and the shape of the outer ring raceway 5 is properly formed (finished). At the same time, at both axial end portions of the inner circumferential face, engaging grooves 38, 38 engaging with the outer circumferential edge portion of the sealing plate are formed.
In this connection, it is possible to execute the method shown in Fig. 6 after the method shown in Fig. 5 has been executed, that is, it is possible to combine both the methods with each other.

Even when engaging grooves 38, 38 are formed by any method, in order to ensure the rolling fatigue life of the outer ring 2a obtained in this way, a portion of the outer ring raceway 5 is subjected to heat treatment so that the portion of the outer ring raceway 5 can be hardened, that is, quenching is conducted on the portion of the outer ring raceway 5. After the heat treatment has been completed, the outer ring 2a is combined with the inner ring 3 and balls 4, 4 so that the radial ball bearing 1 shown in Fig. 7 can be composed. In the case where it is necessary to enhance the rotating accuracy or in the case where it is necessary to suppress the occurrence of vibration and noise at the time of rotation, it is possible to conduct polishing on the outer ring raceway portion 5 so as to enhance the surface hardness after the completion of the heat treatment. EMBODIMENT 3

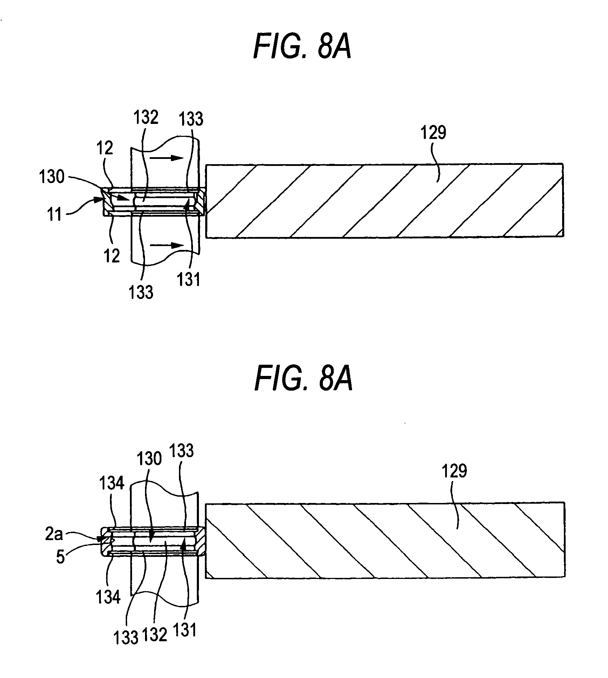

Figs. 7 and 8 are views showing Embodiment 3 of the present invention. In the present embodiment, raceway forming and sealing face forming, which are the fourth and the fifth process in Embodiment 1, are simultaneously conducted by rolling. That is, the secondary partially finished material 11 shown in Fig. 1(D) described before is worked into the outer ring 2a shown in Fig. 1(F) without being subjected to the process shown in Fig. 1(E). Therefore, a circumscribing roller 129a composing the rolling device is formed into an annular shape. Inside this circumscribing roller 129a, an inscribing roller 130 is inserted under the condition that both the rotary central axes are arranged in parallel with each other and under the condition that both the rotary central axes are eccentric to each other. When rolling is conducted in which the secondary partially finished material 11 is worked into the outer ring 2a, the inscribing roller 130 is rotated being pressed onto the inner circumferential face of the circumscribing roller 129a. The constitution and action of other portions are the same as those of Embodiment 1 described before. Therefore, the duplicated drawings and explanations are omitted here.

In the raceway forming process, which is the fourth and the fifth process, an outer diameter of the portion close to the other end in the axial direction (close to the lower end of Fig. 8) of secondary partially finished material 11 is made large and made to be uniform all over the length in the axial direction (except for the chamfered portions on both end edge portions). At the same time, outer ring raceway 5 is formed on the inner circumferential face, that is, outer ring raceway forming is conducted. This outer ring raceway forming is conducted by rolling as shown in Figs. 7 and 8.

This rolling is conducted in such a manner that a portion in the circumferential direction of the secondary partially finished material 11 is pressed in the radial direction between the circumscribing roller 129 and the inscribing roller 130 which are pivotally supported in parallel to each other so that they can be relatively rotated in the opposite direction. The circumscribing roller 129 is a thick disk shape and pivotally supported under the condition that a displacement in the radial direction of the roller is suppressed. The width of the circumscribing roller 129 is larger than the width (the length in the axial direction) of the outer ring 2a to be manufactured and the outer circumferential face of the circumscribing roller 129 is cylindrical. The inscribing roller 130 is formed into a columnar shape. In one portion of the circumferential face, a working curved face portion 131 is provided, the cross-sectional shape (the generating line shape) of which is the same as that of the inner circumferential face of the outer ring 2a to be manufactured. The inscribing roller 130 is pressed to the outer circumferential face of the circumscribing roller 129 and rotated by a driving mechanism and a pressing mechanism not shown in the drawing.

The secondary partially finished material 11 is worked into the outer ring 2a as follows. Under the condition that this secondary partially finished material 11 is loosely, externally engaged with the inscribing roller 130, while this inscribing roller 130 is being pressed to the outer circumferential face of the circumscribing roller 129, this inscribing roller 130 is rotated. The secondary partially finished material 11 is rotated by the inscribing roller 130 in the same direction as that of the inscribing roller 130 together with the inscribing roller 130. While the secondary partially finished material 11 is being rotated in this way, it is pressed to the outer circumferential face of the circumscribing roller 129. Therefore, the circumscribing roller 129 is rotated together with the secondary partially finished material 11 and the inscribing roller 130 in the opposite direction to the rotating direction of the inscribing roller 130. A portion of the secondary partially finished material 11 in the circumferential direction is pressed in the radial direction between the outer circumferential faces of both rollers 129 and 130. This portion pressed in the radial direction in this way is continuously changed in the circumferential direction. As a result, a diameter of the portion close to the other end in the axial direction of the secondary partially finished material 11 is gradually expanded until it comes into contact with the outer circumferential face of the circumscribing roller 129.

After the diameter of the portion close to the other end in the axial direction of secondary partially finished material 11 has been expanded and the outer diameter of this secondary partially finished material 11 has been made to be uniform all over the length in the axial direction (except for the chamfered portion in both end edge portions), a shape of the working curved face portion 131 of the inscribing roller 130 is transferred onto the inner circumferential face of the secondary partially finished material 11. This working curved face portion 131 has a convex face portion 132, the cross-section of which is formed into an arc shape, to form the outer ring raceway 5 at the center in the axial direction. At both axial end portions in the step portions 12, 12, protrusions 133, 133 are formed which are used for working the engaging grooves to be engaged with outer circumferential edges of the sealing plate. Accordingly, under the condition that the shape of the working curved face portion 131 is transferred onto the inner circumferential face of the secondary partially finished material 11, it is possible to obtain the outer ring 2a described before which includes outer ring raceway 5 at the axially central portion on the inner circumferential face and also includes engaging grooves 134, 134 at both end portions. Therefore, according to the present embodiment, a sealing face forming process, which is the fifth process, can be simultaneously performed together with the raceway forming process which is the fourth process. EMBODIMENT 4

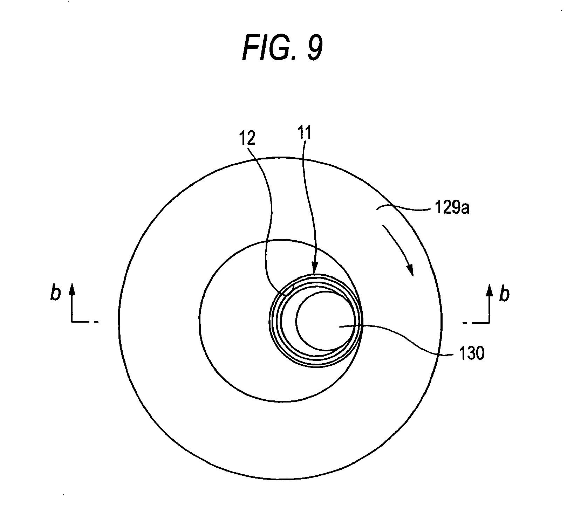

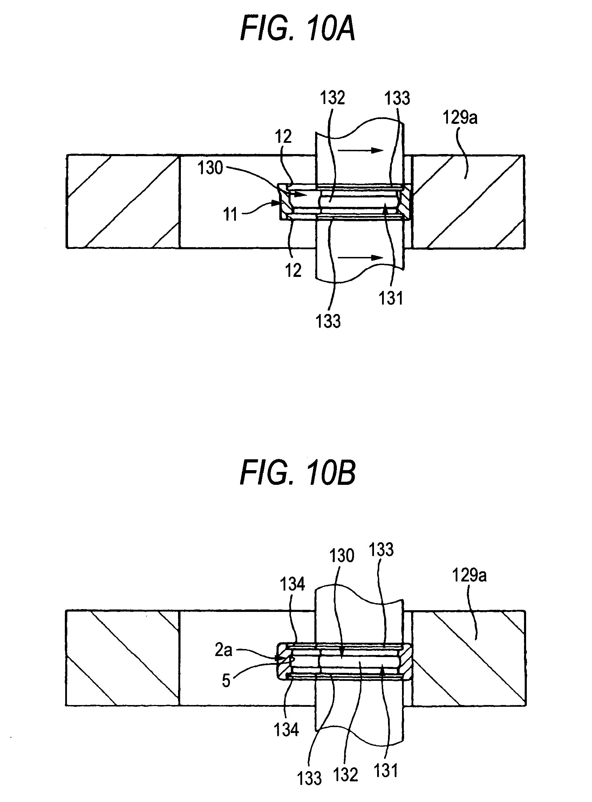

Figs. 9 and 10 are views showing Embodiment 4 of the present invention. Embodiment 4 is a variation of Embodiment 3 described before. In this embodiment, the circumscribing roller 129a composing the rolling device, which is used for working the secondary partially finished material 11 shown in Fig. 1(D) into the outer ring 2a shown in Fig. 1(F), is formed into an annular shape. The inscribing roller 130 is inserted inside this circumscribing roller 129a under the condition that the rotary central axes are eccentrically arranged in parallel with each other. When rolling is conducted in order to work secondary partially finished material 11 into the outer ring 2a, while the inscribing roller 130 is being pressed to the inner circumferential face of the circumscribing roller 129a, the inscribing roller 130 is driven being rotated. The constitution and action of other portions are the same as those of Embodiment 3 described before, Therefore, the duplicated drawings and explanations are omitted here.

### EMBODIMENT 5

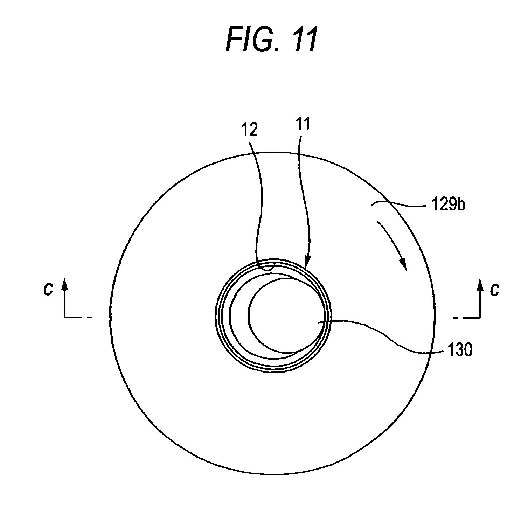

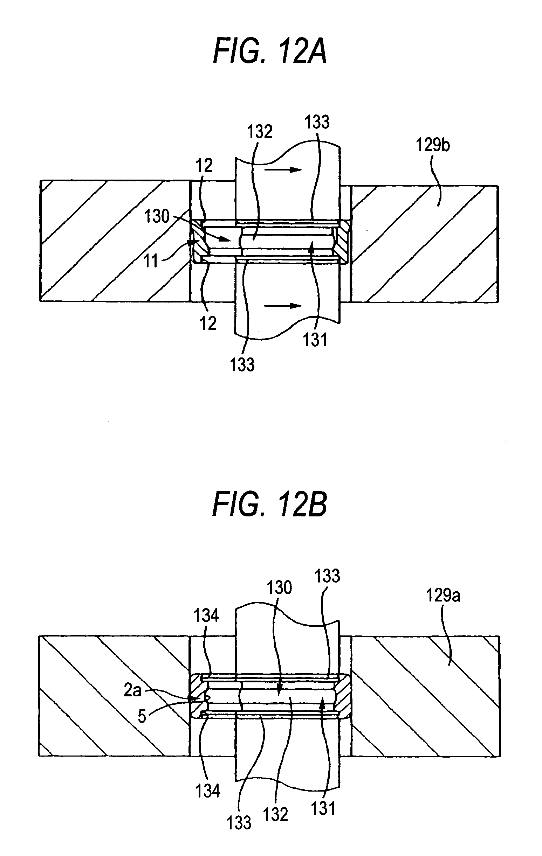

Figs. 11 and 12 are views showing Embodiment 5 of the present invention. Embodiment 4 is a variation of Embodiment 3 described before. In this embodiment, the circumscribing roller 129b composing the rolling process device, which is used for working the secondary partially finished material 11 shown in Fig. 1(D) into the outer ring 2a shown in Fig. 1(F), is formed into an annular shape. Further, an inner diameter of this circumscribing roller 129b is made to agree with the outer diameter of the outer ring 2a (= the maximum outer diameter of the secondary partially finished material 11). The inscribing roller 130 is inserted inside the circumscribing roller 129b under the condition that the rotary central axes are eccentrically arranged in parallel with each other. When secondary partially finished material 11 is worked into the outer ring 2a described before by rolling, under the condition that this secondary partially finished material 11 is internally engaged with the circumscribing roller 129b without causing any rattling, the inscribing roller 130 is rotated while the inscribing roller 130 is being pressed onto the inner circumferential face of the circumscribing roller 129b. The constitution and action of other portions are the same as those of Embodiments 3 and 4 described before. Therefore, the duplicated drawings and explanations are omitted here.

### EMBODIMENT 6

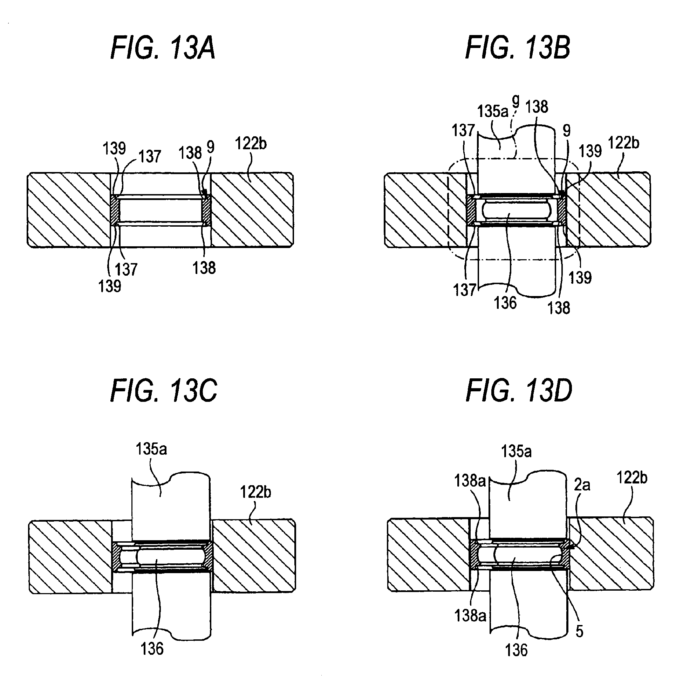

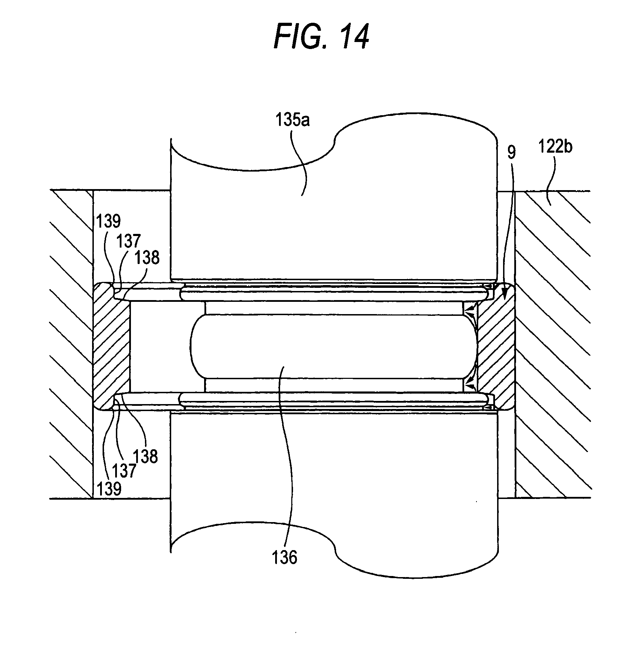

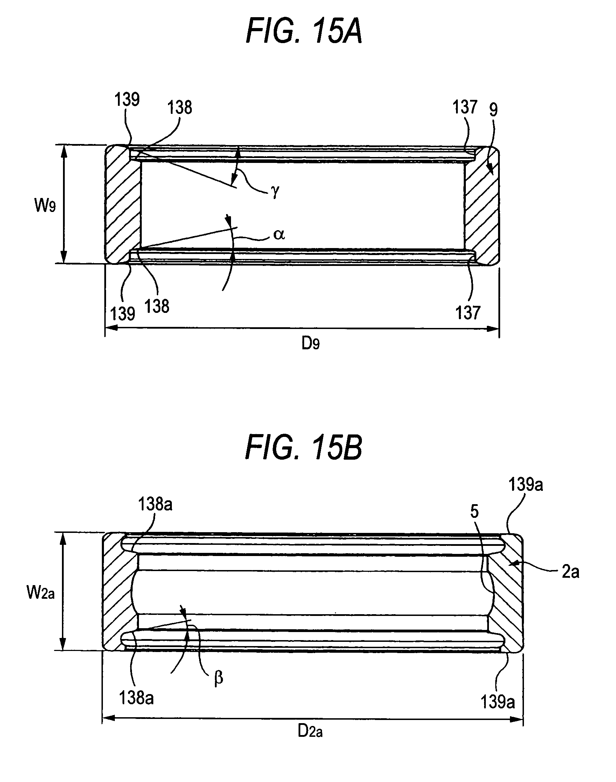

Figs. 13 to 15 are views showing Embodiment 6 of the present invention. In this embodiment, the second process to the fifth process are simultaneously performed by rolling. In the present embodiment, working, in which the preliminary partially finished material 9 shown in Fig. 1(B) is worked into the outer ring 2a shown in Fig. 1(F), is not conducted by the pipe contracting work shown in Fig. 1(C) and the inner diameter extrusion shown in Fig. 1(D) but conducted only by rolling. That is, in the case of the present embodiment, the preliminary partially finished material 9 shown in Fig. 15(A) is internally engaged with the die 122b shown in Figs. 13 and 14, which is a receiving member, without forming any gap. That is, an outer circumferential face of the preliminary partially finished material 9, which is a circumferential face on the not-working side, is contacted or made to come close to an inner circumferential face of the die 122b, which is a circumferential face on the support side, all over the circumference. In this state, an outer circumferential face of a mandrel 135a, which is a working side circumferential face, is pressed onto the inner circumferential face of the preliminary partially finished material 9 which is a worked side circumferential face. In this way, the outer ring 2a described before can be obtained. This mandrel 135a is the working side rotary member described in claim. A volume of the preliminary partially finished material 9 is equal to a volume of this outer ring 2a which is a finished product. Outer diameter 179 of the preliminary partially finished material 9 is substantially equal to outer diameter D₂ₐ of this outer ring 2a (D₉ ≡ D₂ₐ). Width W₉ of this preliminary partially finished material 9 is substantially equal to width W₂ₐ of this outer ring 2a (W₉ ≡ W₂ₙ).

The die 122b is formed into an annular shape. An inner diameter of the die 122b is determined so that the die 122b can be internally engaged with the preliminary partially finished material 9 without forming any substantial gap. The die 122b is pivotally supported by a support portion not shown under the condition that a displacement in the radial direction is prevented. An outer diameter of the mandrel 135a is determined so that the mandrel 135a can be freely inserted into and drawn out from the preliminary partially finished material 9 and the outer ring 2a. In a portion on the outer circumferential face of the intermediate portion of the mandrel 135a and opposed to the inner circumferential face of dies 122b, the working side circumferential face 136 is provided which has a generating line shape that agrees with a generating line shape of the worked side circumferential face in a finished product state, that is, a generating line shape of the inner circumferential face of the outer ring 2a. This mandrel 135a is rotated being driven by a drive unit not shown and strongly pressed to the inner circumferential face of the die 122b by a pushing device not shown.

In order to work the preliminary partially finished material 9 described before into outer ring 2a, first, the preliminary partially finished material 9 shown in Fig. 15(A) is internally engaged in the die 122b without generating any gap as shown in Fig. 13(A). In this connection, at both axial end portions of the inner circumferential face of this preliminary partially finished material 9, stepped portions 137, 137 are respectively formed. When working is conducted by the mandrel 135a and the die 122b described before, these stepped portions 137, 137 become step portions having an engagement groove to be engaged with an outer circumferential edge portion of the sealing ring on both end portion inner circumferential faces of the outer ring 2a. Step faces 138, 138 are formed between both stepped portions 137, 137 and a portion close to the center in the axial direction on the inner circumferential face of preliminary partially finished material 9. Both step faces 138, 138 are inclined faces which are inclined when they come close to each other to the inside in the radial direction.

An inclination angle α of both step faces 138, 138 with respect to an virtual plane existing in a direction perpendicular to the central axis of the preliminary partially finished material 9 is regulated in relation with an inclination angle β of step faces 138a, 138a existing in a portion corresponding to the outer ring 2a shown in Fig. 15(B). That is, the inclination angle β of step faces 138a, 138a of the outer ring 2a, which is completed, is suppressed to be not more than 15° and the inclination angle of step faces 138, 138 of the partially finished material 9 is made to be larger than the inclination angle β of step faces 138a, 138a of the outer ring 2a, which is completed, in a range not more than 15° (α > β, β ≤ 15°, α - β ≤ 15°). Both end faces 139, 139 in the axial direction of the preliminary partially finished material 9 are formed into inclined faces which are inclined so that they can come close to each other when they come inward in the radial direction. An inclination angle γ of both end faces 139, 139 in the axial direction with respect to a virtual plane existing in a direction perpendicular to the central axis of the preliminary partially finished material 9 is regulated to be not more than 20° (γ ≤ 20°).

After the preliminary partially finished material 9 described above has been internally engaged in the die 122b without causing any rattling, the mandrel 135a is inserted into the preliminary partially finished material 9 as shown in Fig. 13(B), so that a positional relation in the axial direction between the preliminary partially finished material 9 and the mandrel 135a can be regulated. In this connection, in the case of the present embodiment, an outer diameter of this preliminary partially finished material 9 is substantially the same as that of the outer ring 2a which is completed. Accordingly, as compared with a case in which an outer ring is worked while a diameter of the material is being expanded like the invention described in Patent Document of Japanese Patent Unexamined Publication No. 59-212142, in the present embodiment, it is possible to use the mandrel 135a, the diameter of which is large and it is possible increase a pushing force of this mandrel 135a. Further, the durability of this mandrel 135a can be ensured.

After this mandrel 135a has been inserted into the preliminary partially finished material 9, while this mandrel 135a is being rotated by the driving device and the pushing device described before, this mandrel 135a is pressed onto an inner circumferential face of the preliminary partially finished material 9. As a result, in the process shown in Figs. 13(C) and 13(D), rolling is conducted in which a shape of the working side circumferential face 136, which is provided on the intermediate portion outer circumferential face of this mandrel 135a, is transferred onto an inner circumferential face of preliminary partially finished material 9. That is, when the working side circumferential face 136 of the mandrel 135a is pressed to the inner circumferential face of the preliminary partially finished material 9 while mandrel 135a is being rotated, metallic material composing the preliminary partially finished material 9 flows in the direction of an arrow shown in Fig. 14. Accordingly, a shape of the inner circumferential face of this preliminary partially finished material 9 is gradually formed into a shape of the working side circumferential face while copying the shape. In this way, the outer ring 2a can be obtained.

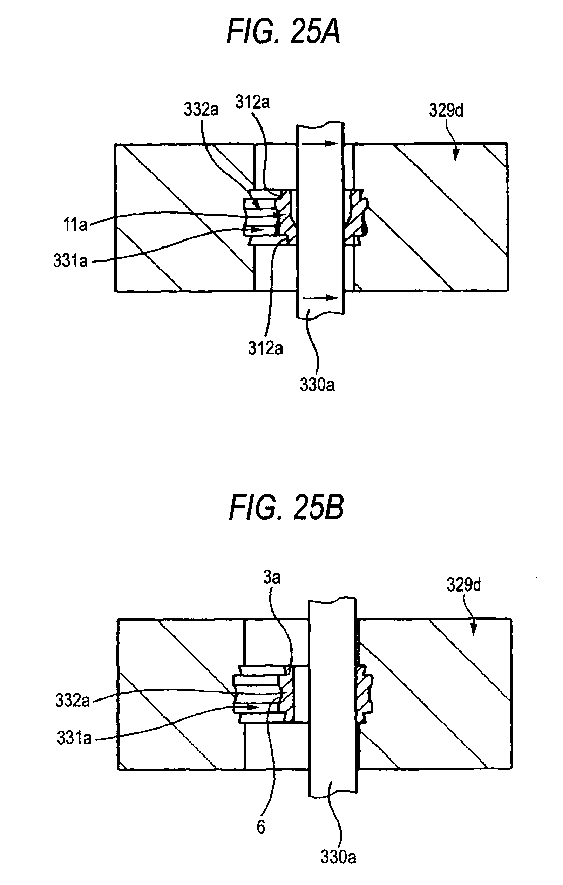

In the process of rolling described above, the outer circumferential face of the preliminary partially finished material 9 is restricted by the die 122b all over the circumference. Therefore, the diameter of the preliminary partially finished material 9 is not expanded. Accordingly, it is possible to reduce a plastic deformation necessary when the inner circumferential face shape is formed into the shape of the outer ring 2a. Therefore, a force of the pressing working side circumferential face 136 of the mandrel 135a onto the inner circumferential face of the preliminary partially finished material 9 can be reduced. Accordingly, stress generated in the preliminary partially finished material 9 can be suppressed to be low. Each portion of the inner ring 2a, which includes the engagement groove for engaging the outer circumferential edge of the sealing ring existing on the inner circumferential faces at both axial end portions of the outer ring 2a, can be worked with high accuracy. Further, the working time can be shortened. Therefore, the manufacturing cost can be reduced. Furthermore, the circularity of the outer ring 2a obtained in this way can be enhanced. In this connection, in the case where the outer ring 2 shown in Fig. 25 having no engagement grooves is manufactured, a shape of the preliminary partially finished material and a shape of the working side circumferential face of the mandrel may be simplified as compared with the case shown in the drawings.

In the preliminary partially finished material 9, inclination angles of both step faces 138, 138, which are inclined by the angle α, are decreased. Therefore, they become both step faces 138a, 138a which are inclined by the angle β. In the preliminary partially finished material 9, inclination angles of both end faces 139, 139 in the axial direction, which are inclined by angle γ, are decreased. Therefore, they become both end faces 139a, 139a in the axial direction existing in the direction of a right angle with respect to the axial direction. In the case of the present embodiment, inclination angles α and γ of the portions of the preliminary partially finished material 9 are properly regulated in the relation with the inclination angle of each portion of outer ring 2a after the completion. Therefore, at the time of rolling, a force given to the mandrel 135a can be suppressed to be low. Accordingly, the durability of mandrel 135a and the working accuracy of the outer ring 2a obtained can be enhanced. That is, since the preliminary partially finished material 9 is given inclination angles α and γ described before, metallic material smoothly flows inside in the radial direction at the time of rolling. Therefore, a force given to the mandrel 135a can be reduced.

### EMBODIMENT 7

Next, referring to Embodiments 7 to 12, a method of forming an inner ring of the present invention will be explained below.

Figs. 16 to 20 are views showing Embodiment 7 of the present invention. In the same manner as that of Embodiment 1 described before, in the present embodiment, a cylindrical high accurate material 8 (shown in Fig. 16(A)), the volume of which is substantially the same as that of the inner ring 3a (shown in Fig. 16(F)), is previously made and then this high accurate material 8 is plastically deformed by means of cold working so that this high accurate material 8 can be formed into the inner ring 3a described before. A method of making this high accurate material 8 is not particularly limited. However, from the viewpoint of reducing the manufacturing cost by improving the yield of material, it is preferable to make the high accurate material 8 in such a manner that a long wire rod (coil) is cut into a predetermined length and plastically deformed by cold working. Alternatively, it is possible to make the high accurate material 8 in such a manner that a plate material is punched into a ring shape and a cross-section of this ring-shaped plate is twisted by 90°. In the case where the high accurate material 8 is made by any method, this high accurate material 8 is plastically deformed by cold working in the following process so as to obtain the inner ring 3a described before.

In the present embodiment, the high accurate material 8 shown in Fig. 16(A) is formed into the inner ring 3a shown in Fig. 16(F) via the preliminary partially finished material 9 shown in Fig. 16(B), the partially finished material 10 shown in Fig. 16(C), secondary partially finished material 11 shown in Fig. 16(D) and the third partially finished material 12 shown in Fig. 16(E). Each process will be explained below in order.

In order to form the high accurate material 8 into the preliminary partially finished material 9, operation is conducted as follows. An outer circumferential face of this high accurate material 8 is internally engaged in an inner circumferential face of a holding die not shown. An inner circumferential face of this high accurate material 8 is externally engaged with a core. In this state, a forward end face of a punch not shown is pressed all over the circumference to outer diameter side half portions on both axially end faces of this high accurate material 8. As a result, the outer diameter side half portions on both axially end faces of this high accurate material 8 are recessed in the axial direction. Therefore, the preliminary partially finished material 9 having step portions 213, 213 in the portions concerned can be obtained. At this time, metal, which has flowed inside in the radial direction when both step portions 213, 213 are formed, can be absorbed when the inner diameter side half portions of both axial end portions are protruded in the axial direction. In this connection, an inner diameter of the preliminary partially finished material 9, which is made in this way, is substantially the same as an inner diameter of the inner ring 3a to be manufactured. It is not necessary that an inner diameter of the preliminary partially finished material 9, which is made in this way, is strictly the same as an inner diameter of the inner ring 3a to be manufactured.

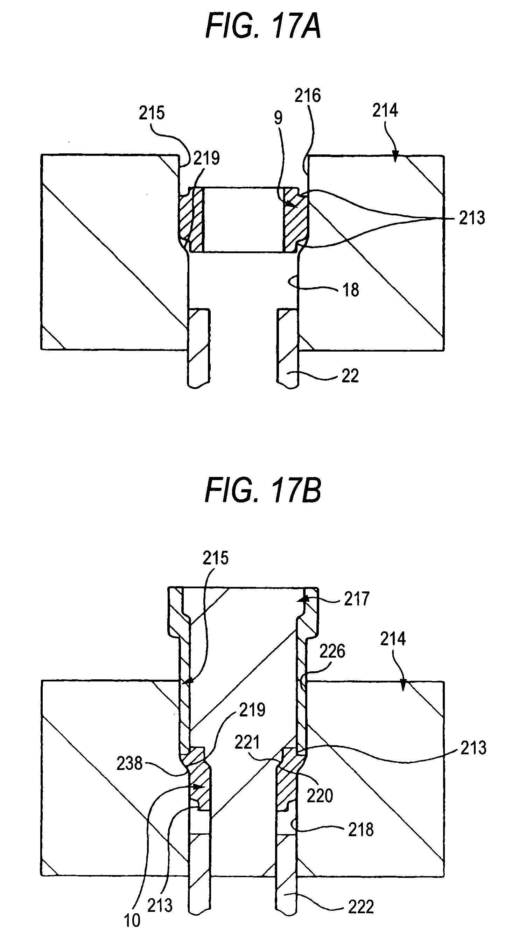

Pipe contraction working is conducted on the preliminary partially finished material 9 as follows. An outer diameter of a portion (an upper end portion in Fig. 16) of the preliminary partially finished material 9 is reduced to a groove bottom diameter of the inner ring raceway 6 formed in an intermediate portion outer circumferential face of the inner ring 3a. Concerning the inner ring raceway 6, refer to Figs. 16(F) and 7. The groove bottom diameter of the inner ring raceway 6 is an outer diameter of a portion in the central portion in the width direction of the deep groove type inner ring raceway 6 where the outer diameter is the smallest. This pipe contraction work is conducted as shown in Fig. 17.
First, as shown in Fig. 17(A), the preliminary partially finished material 9 is internally engaged (set) in the large diameter portion 216 of the working hole 215 provided in the die 214. Next, as shown in Fig. 17(B), the preliminary partially finished material 9 is pushed into an inner portion of the working hole 215 by the punch 217. This the working hole 215 is formed in such a manner that the large diameter portion 216 and the small diameter portion 218, which is arranged in an inner portion of the large diameter portion 216, are continued to each other by the smooth convex face portion 219. A shape of the cross-section of this convex face portion 219 agrees with a shape of a cross-section of half portion (an upper half portion in Fig. 16) of inner ring raceway 6 which is formed on an outer circumferential face of inner ring 3a to be manufactured. An inner diameter of small diameter portion 218 is made to coincide with the bottom diameter of the groove described before. Accordingly, an outer diameter of a portion of the preliminary partially finished material 9, which is pushed by the punch 217 into the small diameter portion 218 existing in the inner portion of the working hole 215, is contracted to a diameter which agrees with the bottom diameter of the groove. In this way, the partially finished material 10 described before is formed.

In this connection, in the embodiment shown in the drawing, when the convex face portion 220 is formed in a portion of axially intermediate portion of the punch 217, a concave face portion 221, the cross-section of which is arcuate, is formed in a portion close to one end of the inner circumferential face of the partially finished material 10 all over the circumference. The punch 217 forms this concave face portion 221 in an initial stage of working in which the preliminary partially finished material 9 is worked into the partially finished material 10. Accordingly, in the process in which the outer diameter is contracted so that the outer diameter of the portion of the preliminary partially finished material 9 can be contacted and the preliminary partially finished material 9 can be formed into partially finished material 10, working stress is given only to a contact portion between the concave face portion 219 and an outer circumferential face of the preliminary partially finished martial 9 except for the initial stage described before. Accordingly, the outer circumferential face of the partially finished material 10 can be plastically deformed by the convex face portion 219 of the working hole 215 with high accuracy. High accurate working of this portion is important for ensuring the accuracy of the inner ring raceway 6 (shown in Fig. 16(F) or Fig. 7). The partially finished material 10 made in this way is pushed out from the working hole 215 by a knockout ring 2222 and sent to the next process.

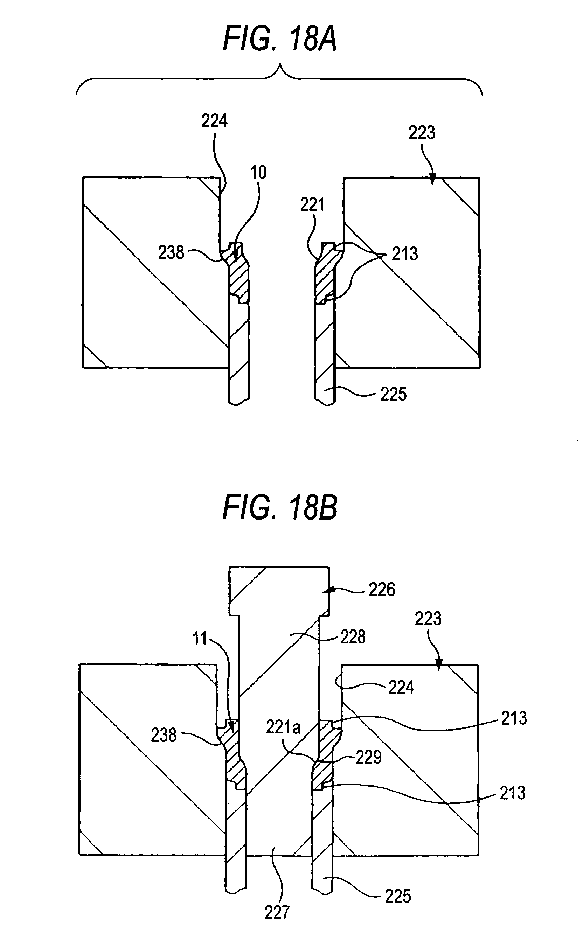

In the next process, in order to make a distribution in the axial direction of the wall thickness with respect to the radial direction of a portion corresponding to the other half portion (lower half portion of Fig. 16) in the axial direction of the inner ring raceway 6 in the partially finished material 10 agree with a distribution of the portion concerned of the inner ring 3a to be manufactured, inner diameter extrusion is conducted. This inner diameter extrusion is conducted as shown in Fig. 18,
First, as shown in Fig. 18(A), the partially finished material 10 is internally engaged in the working hole 224 provided in the die 223 and one end face (a lower end face in Fig. 18) in the axial direction of the partially finished material 10 is made to collide (set) with a forward end face (an upper end face in Fig. 18) of the counter ring 225 which is inserted into this working hole 224. In this state, the outer circumferential face of the partially finished material 10 tightly comes into contact with the inner circumferential face of the working hole 224 without generating any gap. In the same manner, one end face in the axial direction tightly comes into contact with the forward end face of the counter ring 225 without generating any gap. A positional relation in the axial direction (the vertical direction in Fig. 18) between the counter ring 225 and the die 223 is strictly regulated.

After the partially finished material 10 has been set as described above, as shown in Fig. 18(B), an inner circumferential face of the partially finished material 10 is ironed by punch 226. A forward end portion of this punch 226 is formed into the small diameter portion 227 capable of being displaced in the axial direction with respect to the counter ring 225 under the condition that the forward end portion of this punch 226 is inserted into the counter ring 225 (under the condition that the concentricity is strictly regulated) without generating any gap. This small diameter portion 227 and the large diameter portion 228, which is provided in a portion close to the base end (on the upper side in Fig. 18) and concentric to the small diameter portion 227, are continued to each other by convex face portion 229. A shape of the cross-section of this convex face portion 229 is strictly regulated so that a distribution in the axial direction of the wall thickness with respect to the radial direction of the portion corresponding to the other half portion in the axial direction of the inner ring raceway 6 can agree with a distribution of the portion concerned of the inner ring 3a to be manufactured. In the inner diameter extrusion described before, the convex face portion 229 of the punch 226 is made to collide with the concave face portion 221 existing on the inner circumferential face of the partially finished material 10 and while a shape of this concave face portion 221 is being straightened, this concave face portion 221 is moved to a predetermined position toward one end in the axial direction of the partially finished material 10, that is, a portion close to the inner diameter is ironed.

As a result, in a portion close to one end in the axial direction of the inner circumferential face (a portion on the lower side in Fig. 18), secondary partially finished material 11 is obtained which has the concave face portion 221a for adjusting a wall thickness distribution of the portion which becomes the other half portion in the axial direction of the inner ring raceway 6. In the case of making the secondary partially finished material 11 as described above, in the process of ironing in which the concave face portion 221 is moved to a predetermined position and formed into the concave face portion 221 a for adjusting the wall thickness distribution of the portion which becomes the other half portion in the axial direction of the inner ring raceway 6, working stress is given only to a contact portion between the convex face portion 229 and the concave face portion 221. Accordingly, plastic working of the concave face portion 221a for adjusting the wall thickness distribution can be high accurately conducted by this convex face portion 229. In the secondary partially finished material 11 made in this way, a shape of a portion (an upper half portion of Figs. 16(D) and 18(B)) on the opposite side to the portion in which the concave face portion 221a is provided in the axial direction substantially agrees with the shape of the portion concerned of the inner ring 3a to be manufactured. Concerning the portion in which concave face portion 221a is formed, a distribution in the axial direction of the wall thickness with respect to the radial direction agrees with the distribution of the portion of the inner ring 3a to be made. Therefore, at the time of inner diameter extrusion, a shape of the convex face portion 229 and an insertion of the punch 226 into the die 223 are strictly regulated. The secondary partially finished material 11 made in this way is pushed out from the working hole 224 by the counter ring 225 and sent to the next process.

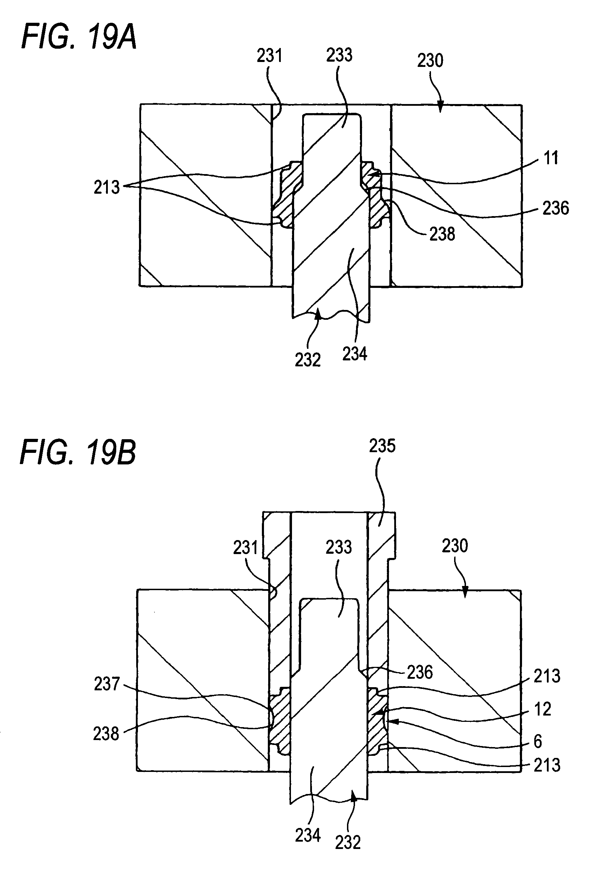

In the next process, inner ring raceway forming is conducted in which an inner diameter of a portion close to the other end (on a lower end side in Fig. 18, on an upper side in Fig. 19) in the axial direction of the secondary partially finished material 11 is expanded so as to make the inner diameter (except for chamfered portions of both end edge portions) uniform all over the length in the axial direction and inner ring raceway 6 is formed on the outer circumferential face. In this case, working of the inner ring raceway 6 is conducted as shown in Fig. 19.
First, as shown in Fig. 19(A), the secondary partially finished material 11 is set between an inner circumferential face of the cylindrical working hole 231 provided in the die 230 and an outer circumferential face of the punch 232 arranged concentrically with this working hole 231 at the center of this working hole 231. In this case, a portion of the secondary partially finished material 11, the inner diameter of which is contracted, is externally engaged with the small diameter portion 233 of the punch 232 and a portion of the secondary partially finished material 11, the inner diameter of which is not contracted, is externally engaged with the large diameter portion 234. Next, as shown in Fig. 19(B), by the cylindrical ring punch 235, the forward end face of which is formed so that it can be tightly butted to an end face of the secondary partially finished material I1, the entire secondary partially finished material 11 is pushed into a peripheral portion of the large diameter portion 234 of punch 232 located on the inner side of the working hole 231.

As a result of the above pushing work, the contracted portion is ironed by the curved face portion 236 which continuously connects the small diameter portion 233 with the large diameter portion 234. Therefore, an inner diameter of this portion can be expanded into a state in which the inner diameter agrees with the diameter of the inner ring 3a. At the same time, on the outer diameter side of this portion, the concave face portion 237, which becomes the other half portion in the axial direction of the inner ring raceway 6, is formed. That is, as described before, a distribution in the axial direction of the wall thickness with respect to the radial direction in the contracted portion agrees with the distribution of the portion concerned of the inner ring 3a to be made, However, the wall thickness is a little large when consideration is given to a decrease in the wall thickness caused when the diameter is expanded. Therefore, when the inner diameter of the portion is expanded to a state in which the inner diameter of the portion agrees with the inner diameter of the inner ring 3a, a shape of the cross-section on the outer circumferential face side agrees with the other half portion in the axial direction of the inner ring raceway 6. Accordingly, the concave face portion 237 is formed. The concave face portion 237 (the second raceway curved face) composed as described above continues to the concave face portion 238 (the first raceway curved face), which is formed by the convex face portion 219 of the working hole 215 provided in the die 214, so that the deep groove type inner ring raceway 6 can be composed. In this way, the third partially finished material 12 is formed.

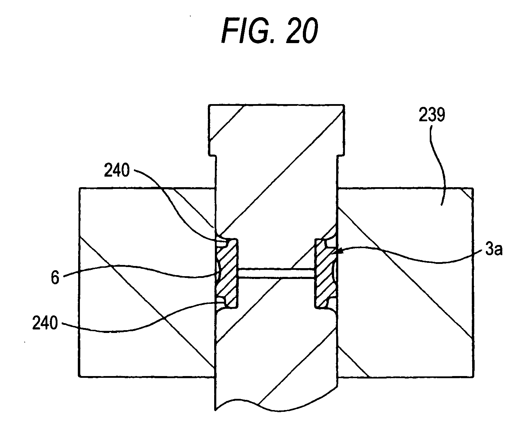

Finish working is conducted on the third partially finished material 12 obtained in this way and a pair of sealing step portions, with which an inner circumferential edge portion of the tight-sealing plate comes into slide contact or to which an inner circumferential edge portion of the tight-sealing plate is opposed, are formed. Working of this engaging groove is conducted as shown in Fig. 20.
The first example method shown in Fig. 20 is executed as follows. While an outer diameter side of the third partially finished material 12 is being held by the container 239, portions on the inner diameter side of both axially end faces of the third partially finished material 12 are pressed in the axial direction, that is, press forming is conducted. By this press forming, the portions on the inner diameter side of both axially end faces of the third partially finished material 12 are plastically deformed in such a manner that the portions fall down inward in the axial direction and outward in the radial direction. In this way, step portions 240, 240 for sealing, with which an inner circumferential edge portion of the tight-sealing plate comes into slide contact or to which an inner circumferential edge portion of the tight-sealing plate is opposed, are formed in the both step portions 213, 213.

### EMBODIMENT 8

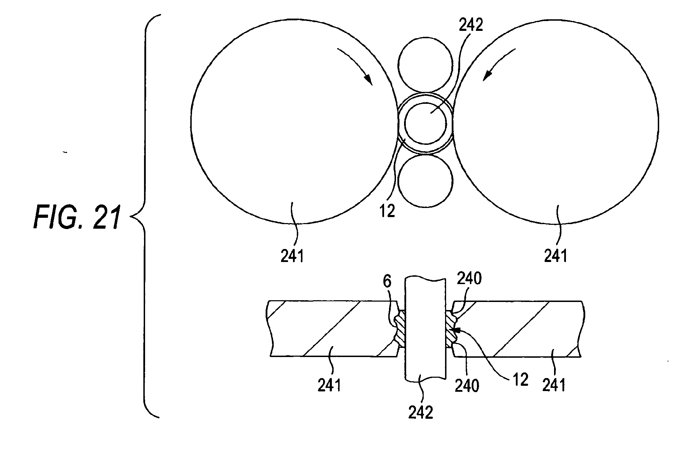

When step portions 240, 240 for sealing are formed, instead of the process shown in Fig. 20, a process of the eighth embodiment shown in Fig. 21 may be employed. In this eighth embodiment, between a pair of forming rollers 214, 241 respectively rotating in the opposite directions to each other, the third partially finished material 12 pivotally supported to an arbor 242 is pushed from both sides in the radial direction by rolling. By this rolling process, step portions 240, 240 for sealing are formed. A shape of the cross-section of axially intermediate portion on the outer circumferential face of each of both forming rollers 241, 241 is made to agree with a shape of the cross-section of the outer circumferential face of the inner ring 3a to be manufactured. In the present embodiment, operation is conducted as follows. Third partially finished material 12 is interposed between the outer circumferential faces of a pair of forming rollers 241, 241. While both forming rollers 241, 241 are being pressed to third partially finished material 12, both forming rollers 241, 241 are rotated at the same rotating speed. Due to the foregoing, shapes of the outer circumferential faces of the intermediate portions of both forming rollers 241, 241 are transferred onto an outer circumferential face of third partially finished material 12, so that a surface of the inner ring raceway 6 can be finished and a pair of step portions 240, 240 for sealing, with which an inner circumferential edge portion of the tight-sealing plate comes into contact or to which an inner circumferential edge portion of the tight-sealing plate are opposed, are formed at both axial end portions on the outer circumferential face.
In this connection, after the method of the seventh embodiment shown in Fig. 20 has been executed, the method of the eighth embodiment shown in Fig. 21 can be executed, that is, both methods can be executed being combined with each other.

Even when step portions 240, 240 for sealing are formed by any method, in order to ensure the rolling fatigue life of inner ring 3a obtained in this way, a portion of the inner ring raceway 6 is subjected to heat treatment so that the portion of the inner ring raceway 6 can be hardened, that is, quenching is conducted on the portion of the inner ring raceway 6. After the heat treatment has been completed, the inner ring 3a is combined with the outer ring 2 and the balls 4, 4 so that the radial ball bearing 1 shown in Fig. 7 can be composed. In the case where it is necessary to enhance the rotating accuracy or in the case where it is necessary to suppress the occurrence of vibration and noise at the time of rotation, it is possible to conduct polishing on the inner ring raceway portion 6 so as to enhance the surface hardness after the completion of the heat treatment.

### EMBODIMENT 9

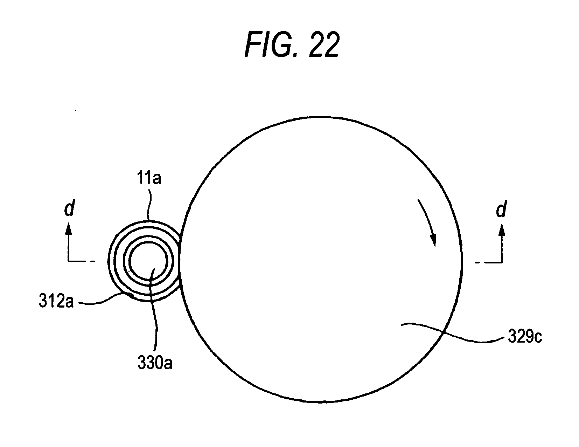

Referring to Figs. 22 to 30, Embodiments 9 to 12 of the present invention will be explained below.

Figs. 22 to 23 are views showing Embodiment 9 of the present invention. In the present invention, raceway forming and sealing face forming, which are the fourth and the fifth process in Embodiment 7 described before, are simultaneously conducted.

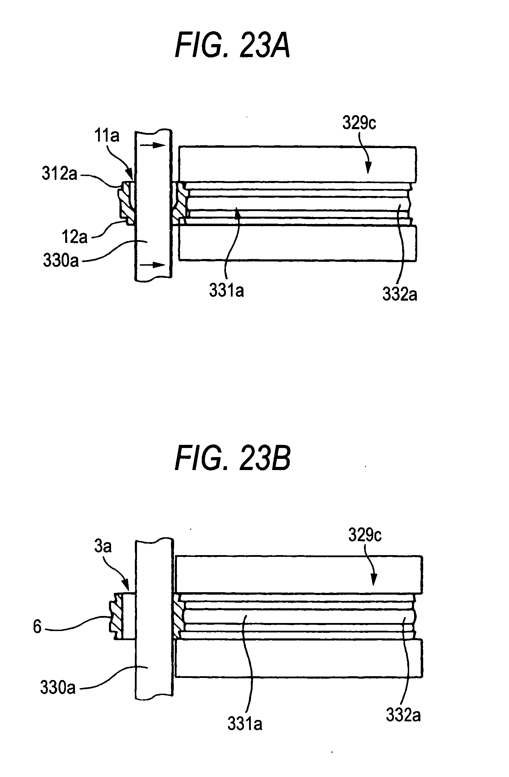

In the raceway ring forming process, which is the fourth and the fifth process, inner ring raceway forming is conducted as follows. An inner diameter of a portion close to the other end in the axial direction of secondary partially finished material 11 (a portion closer to the lower end in Fig. 23) is expanded so that the inner diameter (except for the chamfered portions of both end edge portions) can be made to be uniform all over the length in the axial direction. At the same time, the inner ring raceway 6 is formed on the outer circumferential face. This inner ring raceway forming is conducted by rolling work as shown in Figs. 22 to 23.

This rolling work is conducted in such a manner that a portion in the circumferential direction of the secondary partially finished material 11 is pushed in the radial direction between the circumscribing roller 329c and the inscribing roller 330a, which are arranged in parallel with each other and pivotally supported so that they can be relatively rotated in the opposite directions to each other. The circumscribing roller 329c is a thick disk shape and pivotally supported under the condition that a displacement in the radial direction of the roller is suppressed. The width of the circumscribing roller 329c is larger than the width (the length in the axial direction) of the inner ring 3a to be manufactured. In an axially intermediate portion of the outer circumferential face of the circumscribing roller 329c, a working curved face portion 331 a is provided, the cross-sectional shape (the generating line shape) of which is the same as that of the outer circumferential face of inner ring 3a to be manufactured. On the other hand, an inscribing roller 330a is formed into a columnar shape and the outer circumferential face is formed into a simple cylindrical face, that is, the outer circumferential face is parallel with the rotary center. The inscribing roller 330a is pressed to the inner circumferential face of the circumscribing roller 329c and rotated by a driving mechanism and a pressing mechanism not shown in the drawing.

In order to work the secondary partially finished material 11 into the inner ring 3a described before, under the condition that this secondary partially finished material 11 is loosely, externally engaged with the inscribing roller 330a, this inscribing roller 330a is rotated while this inscribing roller 330a is being pressed to the outer circumferential face of the circumscribing roller 329c, The secondary partially finished material 11 is rotated by the inscribing roller 330a in the same direction as that of the inscribing roller 330a together with the inscribing roller 330a. While the secondary partially finished material 11 is being rotated in this way, it is pressed to the outer circumferential face of the circumscribing roller 329c. Therefore, the circumscribing roller 329c is rotated together with the secondary partially finished material 11 and the inscribing roller 330a in the opposite direction to the rotating direction of the inscribing roller 330a. A portion of the secondary partially finished material 11 in the circumferential direction is pressed in the radial direction between the outer circumferential faces of both rollers 329c and 330a. This portion pressed in the radial direction in this way is continuously changed in the circumferential direction. As a result, a diameter of the portion close to the other end in the axial direction of the secondary partially finished material 11 is gradually expanded until it comes into contact with the outer circumferential face of circumscribing roller 329c.

After the diameter of the portion close to the other end in the axial direction of the secondary partially finished material 11 has been expanded and the inner diameter of this secondary partially finished material 11 has been made to be uniform all over the length in the axial direction (except for the chamfered portions in both end edge portions), a shape of the working curved face portion 331a of the circumscribing roller 329c is transferred onto the outer circumferential face of the secondary partially finished material 11. This working curved face portion 331a has a convex face portion 332a, the cross-section of which is formed into an arc shape, to form the inner ring raceway 6 at the center in the axial direction. At both axial end portions, working faces are formed which are used for working sealing faces by which step portions 312a, 312a are made to come into slide contact with inner circumferential edges of the tight-sealing plate or opposed to inner circumferential edges of the tight-sealing plate. Accordingly, under the condition that the shape of the working curved face portion 331a is transferred onto the inner circumferential face of the secondary partially finished material 11, it is possible to obtain the inner ring 3a described before which includes the inner ring raceway 6 at the axially central portion on the inner circumferential face and also includes sealing faces at both end portions.

### EMBODIMENT 10

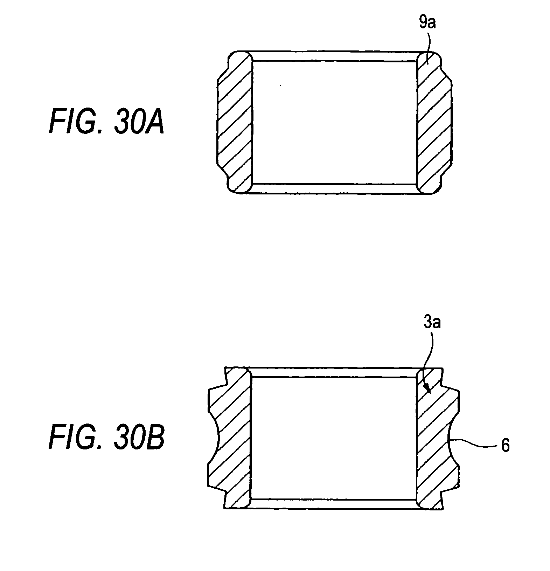

Figs. 30 and 31 are views showing Embodiment 10 of the present invention. Embodiment 10 is a variation of Embodiment 9 described before. In this embodiment, circumscribing roller 329d composing the rolling process device, which is used for working the secondary partially finished material 11 shown in Fig. 10(D) into the inner ring 3a shown in Fig. 10(E), is formed into an annular shape. An inscribing roller 330a is inserted inside the circumscribing roller 329d under the condition that the rotary central axes are eccentrically arranged in parallel with each other. When the secondary partially finished material 11 is worked into the inner ring 3a described before by rolling work, the inscribing roller 330a is rotated while the inscribing roller 330a is being pressed onto the inner circumferential face of the circumscribing roller 329d. The constitution and action of other portions are the same as those of Embodiment 9 described before. Therefore, the duplicated drawings and explanations are omitted here.

### EMBODIMENT 11

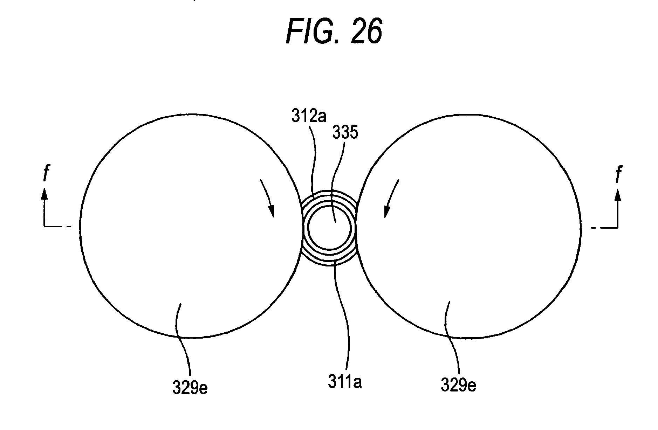

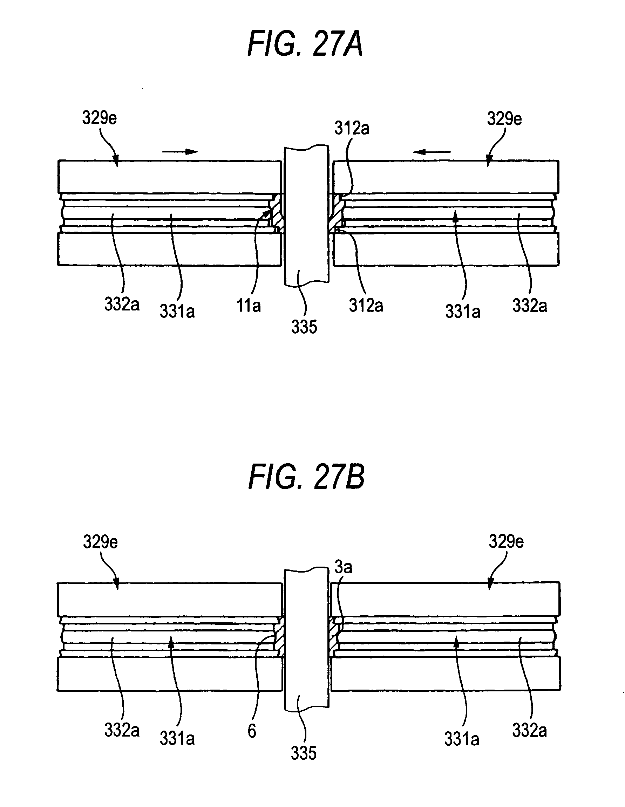

Figs. 26 and 27 are views showing Embodiment 11 of the present invention. Embodiment 11 is a variation of Embodiment 9 described before. In this embodiment, a pair of circumscribing rollers 329e, 329e, which are thick disks, composing a rolling process device which is used for working the secondary partially finished material 11 shown in Fig. 10(D) into the inner ring 3a shown in Fig. 10(E), are provided. Instead of an inscribing roller, a columnar mandrel 335 for pivotally supporting the secondary partially finished material 11 is provided.
A central axis of this mandrel 335 and rotary central axes of both circumscribing rollers 329e, 329e are arranged on a single virtual plane in parallel with each other. An outer diameter of the mandrel 335 agrees with an inner diameter of the inner ring 3a to be worked. In the present embodiment, the secondary partially finished material 11 is formed so that an inner diameter of a portion close to one end (on the lower side of Fig. 27) in the axial direction of the secondary partially finished material 11 can agree with the inner diameter of the inner ring 3a.

When rolling work is conducted in order to work the secondary partially finished material 11 into the outer ring 3a, while the secondary partially finished material 11 is being externally engaged with the mandrel 335, both circumscribing rollers 329e, 329e are pushed to each other and rotated so that both rollers can come close to each other. As a result, an outer diameter of a portion of the secondary partially finished material 11 is contracted and the inner ring raceway 6 and a sealing face are formed on the outer circumferential face. The constitution and action of other portions are the same as those of Embodiments 9 and 10 described before. Therefore, the duplicated drawings and explanations are omitted here.

### EMBODIMENT 12

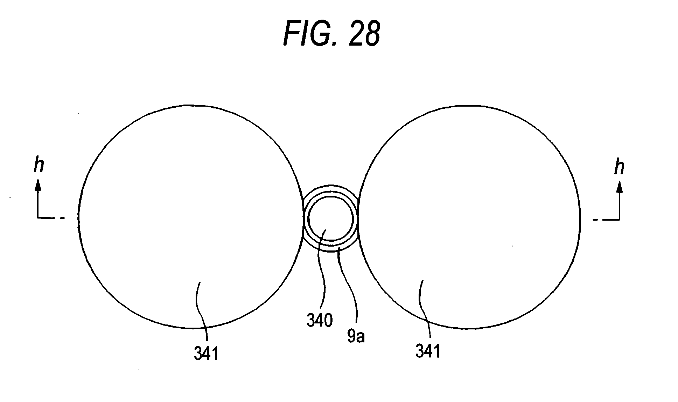

Figs. 28 to 30 are views showing Embodiment 12 of the present invention. In the present embodiment, the second process to the fifth process are simultaneously conducted by means of rolling work. In the case of the present embodiment, the working shown in Fig. 10(B), in which the preliminary partially finished material 9 is worked into the inner ring 3a shown in Fig. 10(E), is not conducted by the diameter contraction work shown in Fig. 10(C) or by the inner diameter extrusion working shown in Fig. 10(D) but conducted only by rolling work. That is, in the present invention, technique of Embodiment 6 described before is applied to the manufacture of the inner ring 3a by reversing the inside and the outside with respect to the radial direction.

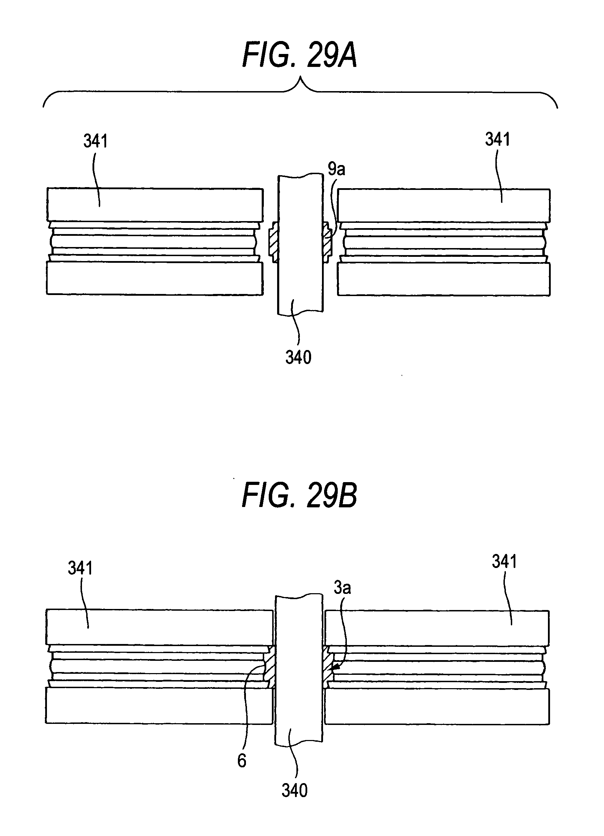

Therefore, in the case of the present embodiment, the preliminary partially finished material 9 shown in Fig. 30(A) is externally engaged with an arbor 340 shown in Figs. 28 and 29 without making any substantial gap. That is, an inner circumferential face of the preliminary partially finished material 9, which is a circumferential face to be not worked, is contacted with or opposed to an outer circumferential face of the arbor 340, which is a circumferential face to be worked, all over the circumference. In this state, outer circumferential faces of a pair of rollers 341, 341, which are circumferential faces on the side to be worked, are pressed to the outer circumferential face of the preliminary partially finished material 9 which is a circumferential face on the side to be worked. In this way, the inner ring 3a described before is obtained. Therefore, a volume of the preliminary partially finished material 9 and a volume of the inner ring 3a, which is a finished product, are equal to each other. Further, a size of each portion is the same and an inclination angle is the same except that the inside and outside with respect to the radial direction are inverted. Except for the above, the present embodiment is the same as Embodiment 6. Therefore, the duplicated explanations are omitted here.

Next, referring to Embodiments 13 to 24, a manufacturing method of a high accurate ring preferably used for manufacturing the above raceway ring will be explained in detail below. In this connection, of course, this high accurate ring is used for the above raceway ring. Further, this high accurate ring can be used for a high accurate mechanical element such as a rocker arm of an internal combustion engine.

### EMBODIMENT 13

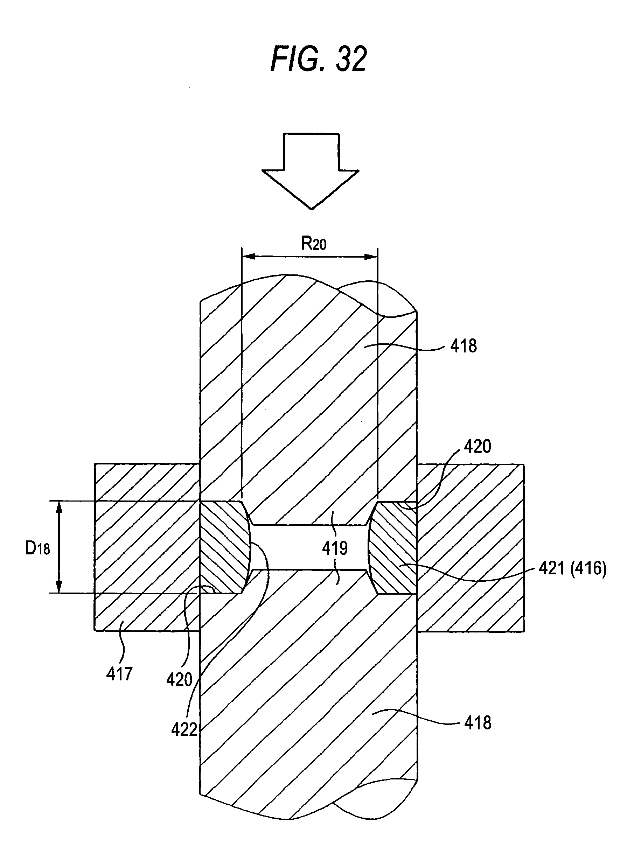

Figs. 31 and 32 are views showing Embodiment 13 of the present invention. In the present embodiment, a high accurate cylindrical ring 8a (shown in Fig. 31(G) and Fig. 16(A)), the volume of which is substantially the same as that of the inner ring 3a (shown in Fig. 16(F)) composing a radial ball bearing by cold working, is made. Therefore, in the present embodiment, first, a long wire rod is cut to a predetermined length and a billet (a columnar material) 413 shown in Fig. 31(A) is obtained. This billet 413 is obtained in such a manner that the long wire rod wound round a drum is drawn out from an uncoiler and cut to a predetermined size (the predetermined length) so that the volume can be a volume a little larger than a volume of the high accurate ring 8a to be obtained.

The billet 413 obtained in this way is worked into the primary partially finished material 414 shown in Fig. 31(B) by upsetting working in which the billet 413 is compressed in the axial direction. In this case, the billet 413 described before is set into a first receiving hole having a bottom, which is provided in a first receiving die, the inner diameter of which is the same as the outer diameter of the high accurate ring 8a to be obtained, under the condition that a central axis of this circular hole and a central axis of the billet 413 are made to agree with each other. This billet 413 is compressed in the axial direction between a bottom face of the first receiving hole and a forward end face of the pushing die pushed into the first receiving hole. In this way, the primary partially finished material 414 described before, the outer diameter of which is the same as that of the high accurate ring 8a to be obtained, can be formed.

Next, a central portion of the primary partially finished material 414 is compressed in the axial direction. Metal, which has been pushed out by this compression, is released to a peripheral portion by extrusion working. Due to the foregoing, the second partially finished cylindrical material 415 having a bottom, the size in the axial direction of which is larger than the size of the primary partially finished material 414, can be obtained as shown in Fig. 31(C). In this case, primary partially finished material 414 is set into a second receiving circular hole having a bottom provided in the second receiving die, the inner diameter of which is the same as the outer diameter of high accurate ring 8a, under the condition that a central axis of the second receiving hole and a central axis of primary partially finished material 414 are made to agree with each other. A central portion of primary partially finished material 414 is compressed in the axial direction between a bottom face of the second receiving hole and a forward end face of a punch inserted into the second receiving hole.

An outer diameter of the punch is substantially the same as an inner diameter of the high accurate ring 8a. In this case, it is unnecessary that the outer diameter of the punch is strictly the same as the inner diameter of the high accurate ring 8a. When this punch is inserted into the second receiving hole, a large diameter portion formed in a base portion of the punch is internally engaged with a neighborhood of the opening portion of the second receiving hole, so that the central axes of the punch and the second receiving hole agree with each other. As a result of the above rear extrusion working, the thickness of the axially central portion of the primary partially finished material 414 is reduced. At the same time, excess metal is released to a portion on the outer diameter side. Therefore, a size of this portion on the outer diameter side in the axial direction is increased. In this way, the secondary partially finished material 415 can be provided. This secondary partially finished material 415 has the same outer diameter as that of the high accurate ring 8a to be obtained, the substantially same inner diameter as that of this high accurate ring 8a and the length in the axial direction larger than that of this high accurate ring 8a.

Next, the secondary partially finished material 415 obtained in this way is subjected to piercing working by which a bottom portion of the secondary partially finished material 415 is pierced. At this time, while an outer circumferential face and a bottom portion outer diameter portion of the secondary partially finished material 415 are being held by the third receiving die, a punch is pushed inside this secondary partially finished material 415. The bottom portion of this secondary partially finished material 415 is sheared between the forward end face of the punch and the third receiving die. In this way, the third partially finished cylindrical material 416 shown in Fig. 31(D) can be obtained.

Next, inner diameter excess thickness extrusion working is conducted in which a size in the axial direction of the third partially finished material 416 is accurately reduced to a predetermined value. This excess thickness extrusion working is conducted as follows. As shown in Fig, 32, while an outer circumferential face of the third partially finished material 416 is being held by the die 417 so that the outer diameter of the third partially finished material 416 can be prevented from being expanded, a pair of punches 418,418 strongly push the third partially finished material 416 from both sides in the axial direction. An inner diameter of the die 417 is the same as an outer diameter of the high accurate ring 8a to be obtained. Truncated-cone-shaped protruding portions 419, 419 are respectively formed at the central portions on the forward end faces of both punches 418, 418 which are opposed to each other. The forward end faces of both protruding portions 419, 419 are not contacted with each other until the aforementioned inner diameter excess thickness extrusion working is completed. Interval D₁₈ between flat faces 420, 420 existing on the outer diameter side on the forward end faces of both punches 418, 418 at the time of completion of this inner diameter excess thickness extrusion working is strictly regulated so that interval D₁₈ can agree with a size in the axial direction of the high accurate ring 8a. Inner diameter R₂₀ of both flat faces 420, 420 is made to agree with inner diameter R₈ₐ of inner diameter R₈ₐ of high accurate ring 8a to be obtained (R₂₀ ≤ R₈ₐ).
At the time of the inner diameter excess thickness extrusion working conducted as described above, according to the excess metal generated when the size in the axial direction of the third partially finished material 416 is contracted, the inner circumferential face of the third partially finished material 416 swells out being formed into a convex face. Therefore, the fourth partially finished material 421 shown in Fig. 31(E) can be obtained.

Next, the fourth partially finished material 421 obtained in this way is subjected to inner diameter ironing work. In this inner diameter ironing work, while an outer circumferential face of the fourth partially finished material 421 is being held by a die so that the outer diameter of the fourth partially finished material 421 can not be expanded, an ironing jig (a metallic die) is pushed into a central hole 422 of this fourth partially finished material 421. An outer diameter of this ironing jig agrees with inner diameter R₈ₐ of the high accurate ring 8a to be obtained. A central axis of this ironing jig is made to strictly agree with a central axis of the above die. In the above inner diameter ironing work, when a portion close to the inner diameter of the fourth partially finished material 421 is ironed by the above ironing jig from one end to the other end in the axial direction, that is, from the top to the bottom in Fig. 31, an excess thickness portion (a portion swelled out onto the inner diameter side) of fourth partially finished material 421, which exceeds a volume of the high accurate ring 8a to be obtained, is collected to the other end portion on the inner circumferential face. At this time, in order to prevent the size in the axial direction from being changed, a cushion pressure may be given to an upper end face of the fourth partially finished material 421. As a result of the above inner diameter ironing work, it is possible to obtain the fifth partially finished material 424 shown in Fig. 31(F), the inner circumferential face of which is a cylindrical face concentric with the outer circumferential face, having a flange-shaped excess thickness portion 423, which extends inside, in the other end portion in the axial direction of this inner circumferential face.

After the fifth partially finished material 424 described above has been obtained, excess thickness portion 423 described above is removed by piercing working. In this piercing working, a punch, the outer diameter of which agrees with inner diameter R₂₂ (= inner diameter R₈ₐ of the high accurate ring 8a) of central hole 422a of the fifth partially finished material 424 is inserted into the central hole 422a. Between a forward end face of this punch and a receiving die, a base end portion (an outer circumferential edge portion) of the excess thickness portion 423 is sheared. By this piercing working, the high accurate cylindrical ring 8a, the volume of which is substantially the same as that of the inner ring 3a, can be obtained.
This high accurate ring 8a is formed into the inner ring 3a composing a radial ball bearing by the process shown in Fig. 16.

### EMBODIMENT 14

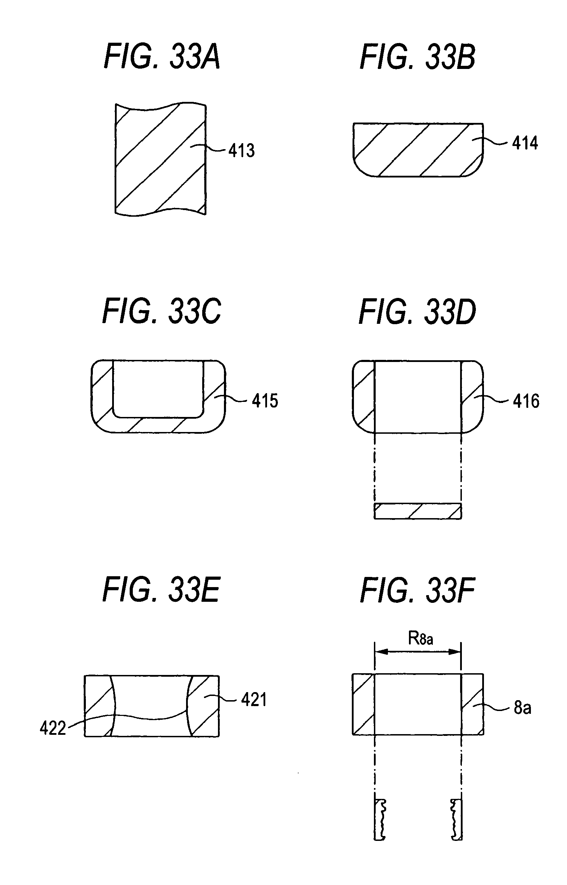

Fig. 33 is a view showing Embodiment 14 of the present invention. In this embodiment, an excess thickness portion existing on the inner diameter side is removed when a portion close to the inner circumferential face of the fourth partially finished material 421, which is made in the same manner as that of Embodiment 13, is shaved off by shaving working as shown in Fig. 33(F). That is, while an outer circumferential face of the fourth partially finished material 421 is being held by a die so that the outer diameter can not be expanded, a shaving punch is pushed into the central hole 422 of this fourth partially finished material 421. An outer diameter of this shaving punch agrees with inner diameter R₈ₐ of the high accurate ring 8a to be obtained. A central axis of this shaving punch is made to strictly agree with a central axis of the die. By this shaving working, the high accurate cylindrical ring 8a, the volume of which is substantially the same as that of the inner ring 3a (shown in Fig. 16(F)), can be obtained. This high accurate ring 8a is formed into the inner ring 3a composing a radial ball bearing by the process shown in Fig. 16 described before.

### EMBODIMENT 15

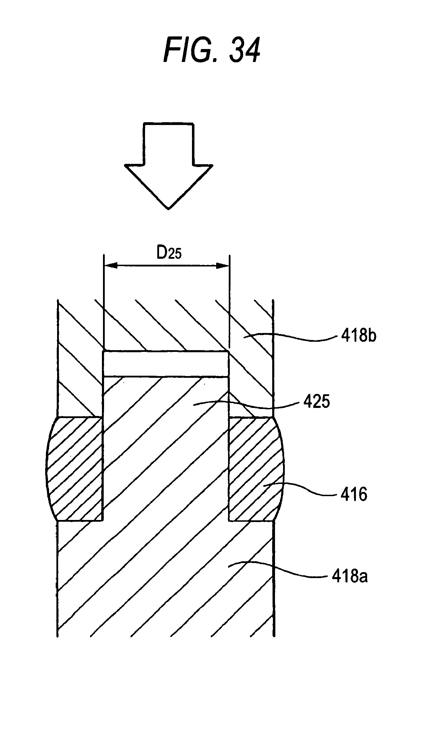

Next, Fig. 34 is a view showing Embodiment 15 of the present invention. This embodiment is utilized for manufacturing a high accurate ring 8b which becomes a material to be used in the case where the outer ring 2a composing a radial ball bearing by the process shown in Fig. 1 is made by cold working. Concerning this outer ring 2a, since the outer ring raceway 5 is formed on the inner circumferential face, from the viewpoint of ensuring the rolling fatigue life of this outer ring raceway 5, it is not preferable that a flow of metal is cut in a portion on the inner circumferential face of the high accurate ring 8b. In view of the above circumstances, in the present embodiment, the third partially finished material 416 (shown in Figs. 31(D) and 33(D)) is compressed in the axial direction, so that a volume of excess thickness can be swelled outside in the radial direction.

Therefore, in the present embodiment, in the case where the third partially finished material 416 is compressed in the axial direction between forward end faces of punches 418a, 418b which are arranged concentrically with each other according to an engagement in which a protrusion and a recess are engaged with each other, the third partially finished material 416 is tightly, externally engaged with a guide pin portion 425 provided at a forward end face central portion of one punch 418a (a lower punch shown in Fig. 34). Outer diameter D₂₅ of this guide pin portion 425 agrees with inner diameter R_{8b} (shown in Fig. 1(A)) of the high accurate ring 8b to be obtained. When the third partially finished material 416 is compressed in the axial direction between the forward end faces of both punches 418a, 418b, an outside of the third partially finished material 416 is not particularly restricted. Accordingly, when an interval between the forward end faces of both punches 418a, 418b is reduced to a size in the axial direction of the high accurate ring 8b to be obtained, a volume of excess metal is swelled outside in the radial direction.

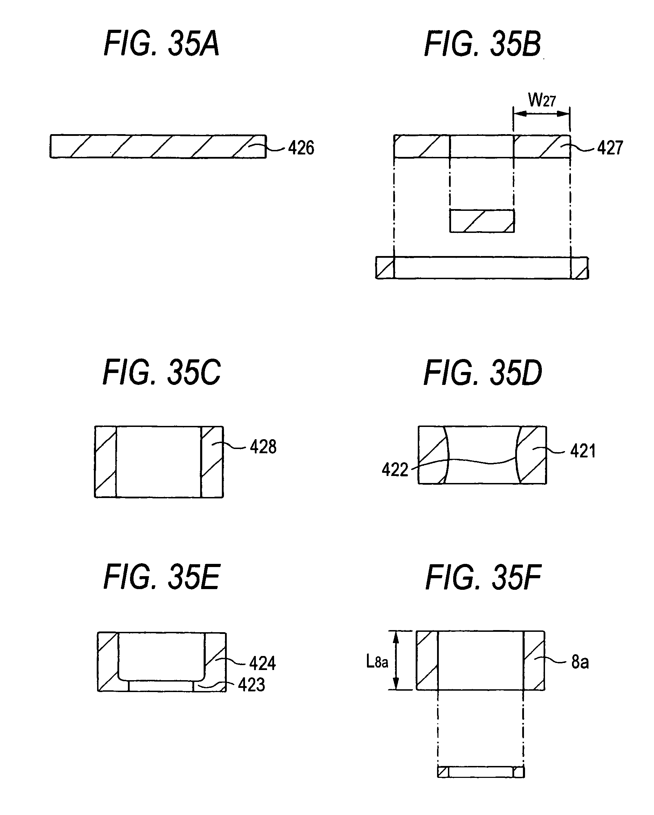

Excess metal, which has swelled outside in the radial direction, is collected at one end portion in the axial direction by ironing work being formed into a flange-shaped excess thickness portion and removed. Alternatively, it is removed by shaving working. In this case, a working method of removing the excess thickness portion is the same as those of Embodiments 13 and 33 except that the inside and the outside in the radial direction is inverted. In this connection, in the case where excess thickness portion 423 is formed at an end portion in the axial direction as shown in Figs. 31 and 35 and removed, a flow of metal is not cut in the axially central portion, in which the raceway is formed, on any of the inner circumferential face and the outer circumferential face. Accordingly, the high accurate ring 8a manufactured by the method shown in Fig. 31 (Fig. 35) can be preferably used when an outer ring is manufactured. EMBODIMENT 16

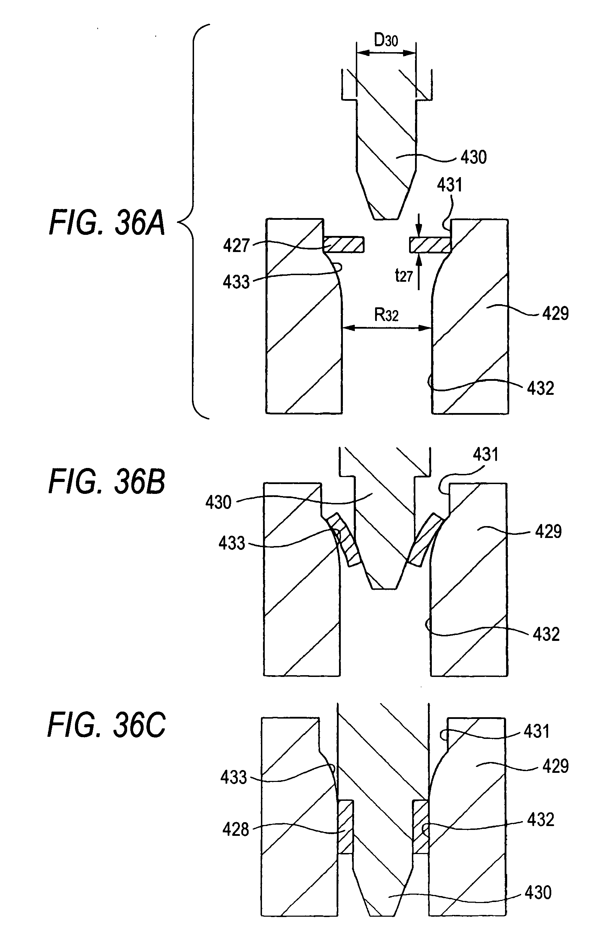

Figs. 35 and 36 are views showing Embodiment 16 of the present invention. In this embodiment, first, a long sheet material (coil) drawn out from an uncoiler is cut into a predetermined shape so as to obtain a disk-shaped material 426 shown in Fig. 35(A).
Next, this disk-shaped material 426 is subjected to piercing working, by which a central portion is punched out, and trimming work by which an outer circumferential portion is removed. In this way, the primary partially finished material 427 shown in Fig. 35(B), which is formed into a ring-shape, can be obtained. Width W₂₇ in the radial direction of this primary partially finished material 427 is a little larger than length L₈ₐ in the axial direction of the high accurate ring 8a to be manufactured (W₂₇ > L₈ₐ).

Next, the thus obtained primary partially finished material 427 is subjected to inversion work in which a cross-section of the primary partially finished material 427 is twisted by the angle 90° so that the inner diameter side can be expanded and the outer diameter side can be contracted. Due to the foregoing, the secondary partially finished material 428, the shape of which is cylindrical, shown in Fig. 35(C) is obtained.
As shown in Fig. 36, this inversion work is conducted in such a manner that the partially finished material 427 is pushed into a cylindrical die 429 by a punch 430. This die 429 has a central hole in which a large diameter portion 431 provided on an opening portion side and a small diameter portion 432 provided on the inner side concentrically with this large diameter portion 431 are continued to each other by a curved face 433. A forward end portion of this punch 430 is formed into a tapered portion, the forward end of which is tapered. A difference between outer diameter D₃₀ of a portion close to a base end of this punch 430 and inner diameter R₃₂ of the small diameter portion 432 is twice as large as thickness T₂₇ of primary partially finished material 427 (R₃₂ - D₃₀ = 2T₂₇).

The above inversion working is conducted as follows. First, as shown in Fig. 36(A), the primary partially finished material 429 is engaged (set) inside the large diameter portion 431. Next, as shown in Figs. 36(B) and 36(C), the primary partially finished material 427 is pushed inside the small diameter portion 432 by the punch 430 described before. As a result, a cross-section of the primary partially finished material 427 is inverted by the angle 90°. Therefore, the secondary partially finished material 428 shown in Figs. 35(C) and 36(C), the shape of which is cylindrical, can be obtained.

As shown in Figs. 35(D) to 35(F), thus obtained secondary partially finished material 428 is subjected to the inner diameter excess thickness extrusion working, the inner diameter ironing working and the piercing working shown in Figs. 31(E) to 31(G) in Embodiment 13. In this way, high accurate ring 8a for inner ring 3a (shown in Fig. 16(F)) can be obtained.
This high accurate ring 8a becomes the inner ring 3a composing a radial ball bearing by the process shown in Fig. 16.

### EMBODIMENT 17

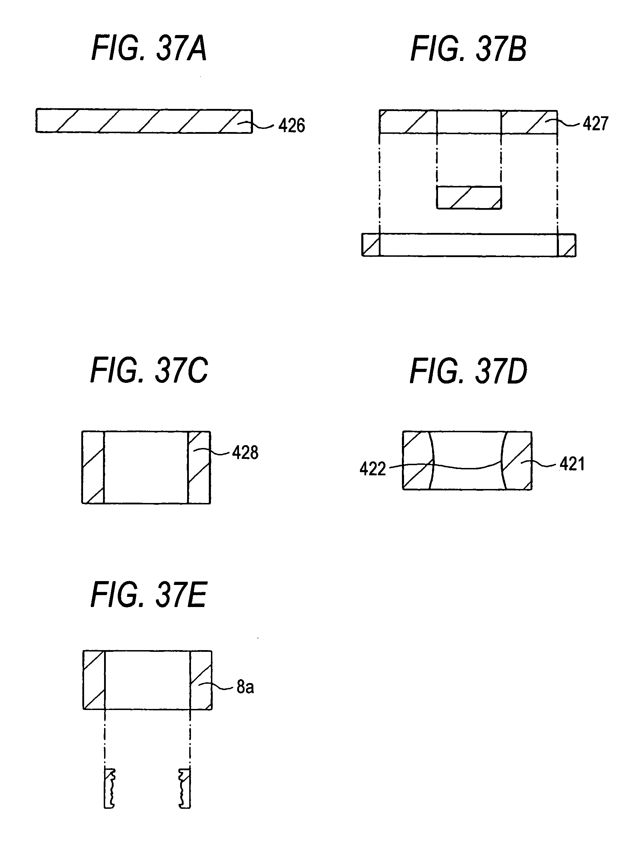

Fig. 37 is a view showing Embodiment 13 of the present invention. In the present embodiment, a portion close to the inner circumferential face of the fourth partially finished material 421, which is manufactured in the same manner as that of Embodiment 16, is shaved by shaving working as shown in Fig. 37(E) in the same manner as that shown in Embodiment 14. Due to the foregoing, an excess thickness portion existing in the portion close to the inner circumferential face is removed. In this way, the high accurate ring 8a for inner ring 3a (shown in Fig. 16(F)) can be provided.
This high accurate ring 8a becomes the inner ring 3a composing a radial ball bearing by the process shown in Fig. 16.
In this connection, concerning Embodiments 16 and 17, when the excess thickness extrusion working is conducted so that the excess metal can be swelled onto the outer diameter side in the same manner as that of Embodiment 15 shown in Fig. 34, it is possible to provide the high accurate ring 8b (shown in Fig. 1) suitable for working the outer ring 2a.

### EMBODIMENT 18

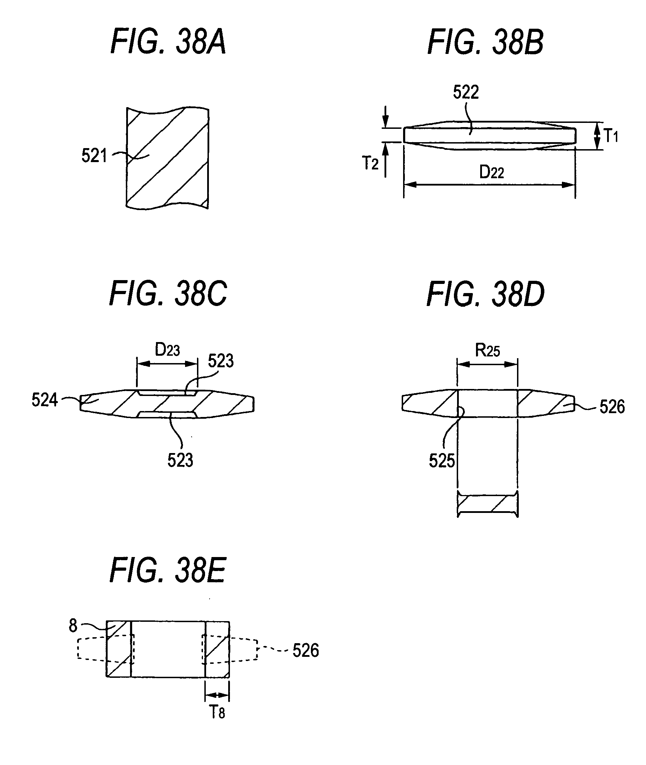

Figs. 38 to 39 are views showing Embodiment 18 of the present invention. In this embodiment, first, a long wire rod is cut into a predetermined length so as to obtain a billet (columnar material) 521 shown in Fig. 38(A). This billet 521 is obtained in such a manner that while the long wire rod wound round a drum is being drawn out from an uncoiler, it is cut into a length (predetermined length) so that a volume of the thus cut wire rod can be a little larger than a volume of the high accurate ring 8 to be obtained.

Thus obtained billet 521 is subjected to upsetting working by which the billet 521 is compressed in the axial direction. In this way, the billet 521 is formed into the disk-shaped partially finished material 522 shown in Fig. 38(B). Concerning the thickness in the axial direction of this disk-shaped partially finished material 522, thickness T₁ in the central portion is the largest and thickness T₂ in the outer circumferential edge portion is the smallest. Both sides in the axial direction of the disk-shaped partially finished material 522 are formed into a partially conical face, the inclination angle of which is gentle, so that the thickness can be gradually reduced from the central portion to the outer circumferential edge portion. Thickness T₈ of the high accurate ring 8 to be manufactured is in the middle of thickness T₁ and thickness T₂ of both portions (T₁ > T₈ > T₁). In order to obtain the disk-shaped partially finished material 522 described above, the billet 521, which is obtained when the above wire rod is cut into a proper volume, is set in a receiving die provided with a circular hole having a bottom, the inner diameter of which is the same as outer diameter D₂₂ of the disk-shaped partially finished material 522, under the condition that a central axis of the billet 521 and a central axis of the circular hole are made to agree with each other. Then, the billet 521 is compressed in the axial direction between a bottom face of the circular hole and a forward end portion of the pushing die. Shapes of the bottom face and the forward end face are formed into shapes corresponding to both sides in the axial direction of the disk-shaped partially finished material 522, that is, the protruding and recessing directions are reversed. Therefore, when the bottom face and the forward end face are strongly pressed to each other, the disk-shaped partially finished material 522 described before can be obtained.

In the present embodiment, after the disk-shaped partially finished material 522 has been formed or simultaneously when the disk-shaped partially finished material 522 is formed, at the center on both sides in the axial direction of the disk-shaped partially finished material 522, circular recess portions 523, 523, which are shown in Fig. 38(C), are formed. In this way, the second disk-shaped partially finished material 524, the thickness of the central portion of which is reduced, can be formed. Both recess portions 523, 523 described above are formed in order to enhance the yield of the material by reducing a volume to be removed according to the formation of the circular hole 525 in the process shown in Fig. 38(D) described later. Accordingly, it is possible to omit the forming work of both recess portions 523, 523. However, under the condition that a portion of the disk-shaped partially finished material 522 except for the central portion, in which both recess portions 523, 523 are formed, is located at a position in a cavity of a metallic die partitioned into a predetermined volume, both recess portions 523, 523 can be formed. In this case, a metal portion, which has flowed to the outer diameter side according to the formation of both recess portions 523, 523, is filled into the cavity. Due to the above structure, even when a volume of the billet 521 is not strictly regulated, a volume of the second disk-shaped partially finished material 524 to be formed into the high accurate ring 8 except for the central portion can be strictly regulated corresponding to the volume of this high accurate ring 8. In any case, in the case where both recess portions 523, 523 are formed, diameter D₂₃ of both recess portions 523, 523 is made to be smaller than inner diameter R₂₅ (shown in Fig. 38(D)) of circular hole 525 to be formed in the central portion of the second disk-shaped partially finished material 524 (D₂₃ < R₂₅).

After the second disk-shaped partially finished material 524 has been formed as described above, next, circular hole 525 is formed in the central portion of the second disk-shaped partially finished material 524. This circular hole 525 is formed by punching as follows. Under the condition that this second disk-shaped partially finished material 524 is set in a holding recess portion of a receiving die, a punch arranged concentrically with this holding recess portion is made to collide with a central portion of the second disk-shaped partially finished material 524 and this central portion is pushed out into a punching hole formed in the central portion of the holding recess portion. Since an outer diameter of the punch is larger than diameter D₂₃ of both recess portions 523, 523, the central portion of the second disk-shaped partially finished material 524 including entire both recess portions 523, 523 is punched out. Therefore, a ring-shaped partially finished material 526 shown in Fig. 38(D) can be obtained. In this ring-shaped partially finished material 526, both inner and outer circumferential edges are respectively formed into a concentric circular ring. Thickness in the axial direction on the inner diameter side is larger than that on the outer diameter side. A cross-section of this ring-shaped partially finished material 526 is a wedge shape. A volume of this ring-shaped partially finished material 526 is the same as that of high accurate ring 8 to be manufactured.

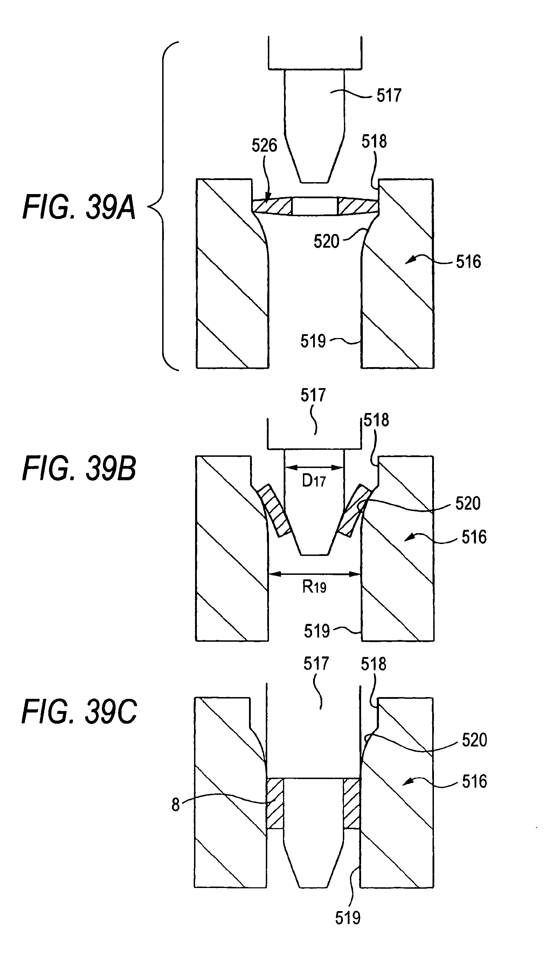

After this ring-shaped partially finished material 526 has been formed, inversion working is conducted as shown in Fig. 38(E), in which a portion on the outer diameter side of this ring-shaped partially finished material 526 is contracted inward in the radial direction and a portion on the inner diameter side of this ring-shaped partially finished material 526 is expanded outward in the radial direction, that is, a direction of the cross-section is changed by the angle 90°. This inversion work is conducted in such a manner that ring-shaped partially finished material 526 is pushed into the cylindrical die 516 by the punch 517 as shown in Fig. 39. As described before referring to Fig. 36, this die 516 has a central hole in which the large diameter portion 518 provided on the opening portion side and the inner diameter portion 519 provided on the inner side concentrically with the large diameter portion 518 are continued to each other by a curved face 520. Inner diameter R₁₉ of the small diameter portion 519 is smaller than the outer diameter of the ring-shaped partially finished material 526 and larger than the inner diameter. A forward end portion of the punch 517 is tapered. The aforementioned inversion working is conducted as follows. First, as shown in Fig. 39(A), the ring-shaped partially finished material 526 is engaged (set) inside the large diameter portion 518. Next, as shown in Figs. 39(B) and 39(C), the ring-shaped partially finished material 526 is pushed inside the small diameter portion 519 by the punch 517. As a result, a cross-section of this ring-shaped partially finished material 526 is inverted by the angle 90°. Therefore, the cylindrical high accurate ring 8 shown in Fig. 38(E) and Fig. 39(C) can be obtained.

According to the inversion work described above, the portion on the inner diameter side of the ring-shaped partially finished material 526 is expanded and the thickness is decreased and the portion on the outer diameter side of ring-shaped partially finished material 526 is compressed and the thickness is increased. In the present embodiment, the thickness in the axial direction of the ring-shaped partially finished material 526 on the inner diameter side is large and the thickness in the axial direction of the ring-shaped partially finished material, 526 on the outer diameter side is small. Therefore, the thickness in the radial direction of the high accurate ring 8, which is obtained when the aforementioned inversion working has been completed, becomes uniform with respect to the radial direction except for chamfered portions in both end edge portions. That is, when the inversion working has been completed, the cylindrical high accurate ring 8 can be provided, the inner diameter, the outer diameter and the length in the axial direction of which are equal to the regulated values. Therefore, a difference between inner diameter R₁₉ of the small diameter portion 519 and outer diameter D₁₇ of the forward half portion of punch 517 is made to be twice as large as thickness T₈ (shown in Fig. 38(E)) of the high accurate ring 8 to be manufactured, that is, R₁₉ - D₁₇ = 2T₈. When the high accurate ring 8 described above is subjected to cold working shown in Fig. 16, it is formed into the inner ring 3a. In the same manner, when the high accurate ring 8 described above is subjected to cold working shown in Fig. 1, it is formed into the outer ring 2a.

### EMBODIMENT 19

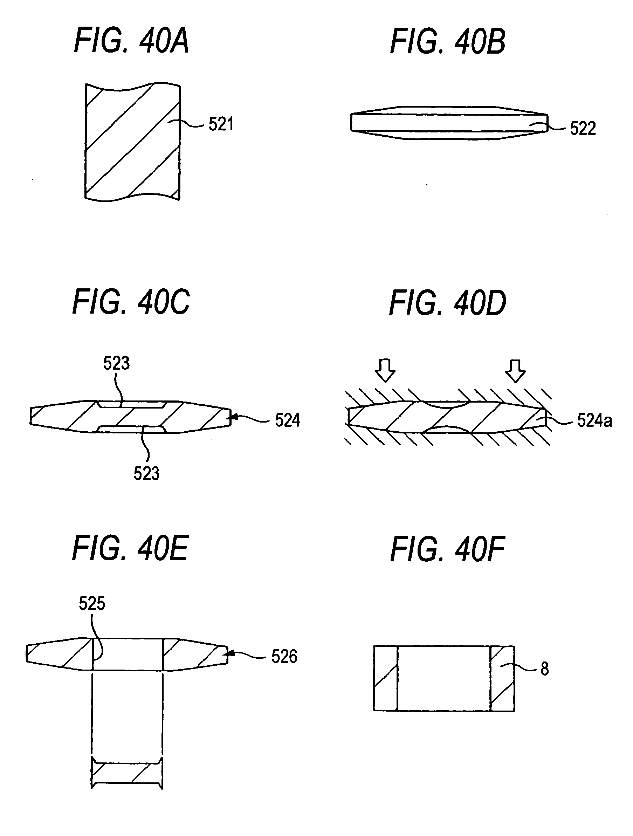

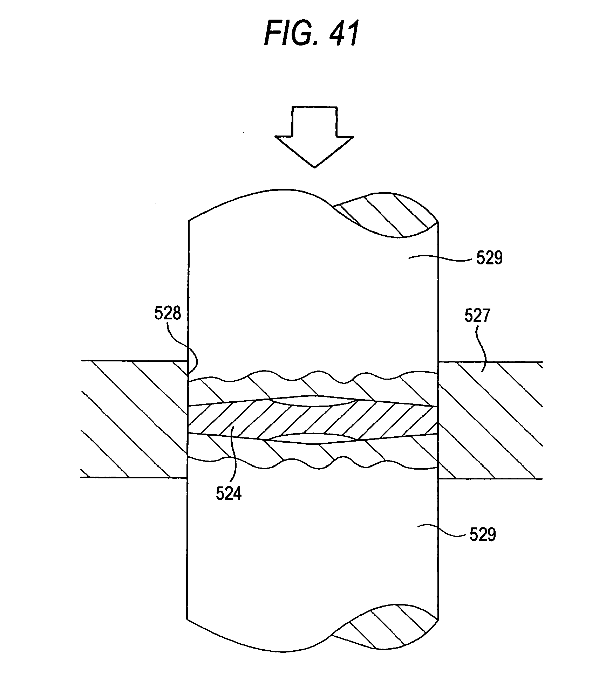

Figs. 40 and 41 are views showing Embodiment 19 of the present invention. In Embodiment 18 described before, a volume of the billet 521 is strictly regulated. Alternatively, recess portions 523, 523 are formed in the central portions on both sides in the axial direction of the disk-shaped partially finished material 522 and when it is formed into the second disk-shaped partially finished material 524, a volume of this second disk-shaped partially finished material 524 except for the central portion is regulated. On the other hand, in the present embodiment, as shown in Figs. 40(D) and 41, sizing working is conducted on the second disk-shaped partially finished material 524 in which recess portions 523, 523 are formed, at the central portions on both sides in the axial direction. By this sizing working, a volume of this second disk-shaped partially finished material 524 except for the central portion can be regulated.

In the present embodiment, as shown in Fig. 41, the second disk-shaped partially finished material 524 is tightly, the internally engaged in circular hole 528 of the die 527 and strongly pressed between forward end faces of a pair of punches 529, 529. The forward end faces of both punches 529, 529 are respectively formed into a conical concave face so that the forward end faces of both punches 529, 529 can be tightly contacted with both sides in the axial direction of second disk-shaped partially finished material 524. While both punches 529, 529, the forward end faces of which are formed in this way, are compressing the second disk-shaped partially finished material 524 in the axial direction, a distance between the forward end faces of both punches 529, 529 is reduced to a proper distance. At this time, excess metal, which has flowed when the thickness of the intermediate portion and the outer end portion in the axial direction of the second disk-shaped partially finished material 524 is made to be a proper value, collects to both recess portions 523, 523. Accordingly, when circular hole 525 is formed by punching as shown in Fig, 39(E) in the central portion of the second disk-shaped partially finished material 524a which has been subjected to sizing working, it is possible to obtain the ring-shaped partially finished material 526, the volume of which is the same as that of the high accurate ring 8 to be manufactured.
The constitution and action of other portions are the same as those of Embodiment 18 described before.

### EMBODIMENT 20

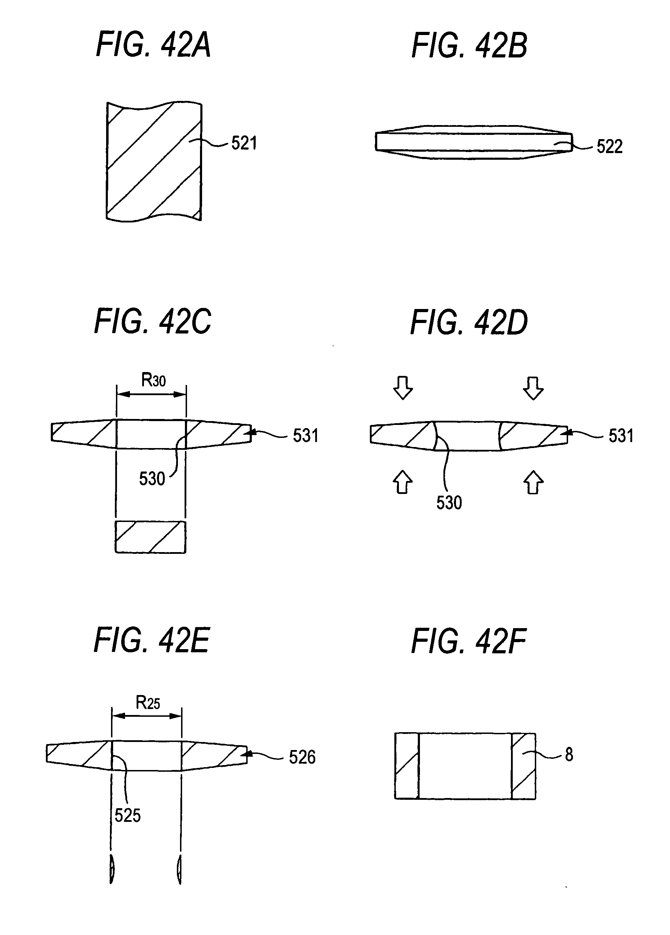

Fig. 42 is a view showing Embodiment 20 of the present invention. In the present embodiment, in a central portion of the disk-shaped partially finished material 522 shown in Fig. 42(B) which is made by compressing the billet 521 in the axial direction, as shown in Fig. 42(C), an elementary circular hole 530, which is an elementary circular hole 525 shown in Fig. 42(E), is formed. In this way, an elementary ring-shaped partially finished material 531 is formed. Inner diameter R₃₀ of this elementary circular hole 530 is the same as inner diameter R₂₅ of the circular hole 525 or a little smaller than inner diameter R₂₅ of the circular hole 525, that is, R₃₀ ≤ R₂₅. After that, while elementary ring-shaped partially finished material 531 is being restricted so that the outer diameter can not be expanded, the elementary ring-shaped partially finished material 531 is pressed in the axial direction so as to reduce the thickness to a proper value. At the same time, a volume of excess metal is released to an inner circumferential edge portion of the elementary circular hole 530. Sizing working is conducted in this way.

This sizing working is conducted as follows. For example, as shown in Fig. 41, the elementary ring-shaped partially finished material 531 is internally engaged in the circular hole 528 of the die 527 and compressed in the axial direction between forward end faces of a pair of punches 529, 529. Excess metal, which has flowed according to this sizing working, collects in an inner circumferential edge portion of the elementary ring-shaped partially finished material 531 as shown in Fig. 42(D). Therefore, an inner diameter of the elementary circular hole 530 is reduced. Accordingly, as shown in Fig. 42(E), when this excess metal existing in the inner circumferential edge portion of the elementary circular hole 530, the inner diameter of which has been reduced, is removed by piercing working or shaving working, it is possible to obtain a ring-shaped partially finished material 526, the volume of which is the same as that of high accurate ring 8 to be manufactured.
In this connection, in the present embodiment, as shown in Fig. 42(D), the elementary ring-shaped partially finished material 531 is compressed in the axial direction while an outer circumferential edge portion of this elementary ring-shaped partially finished material 531 is being restricted so that the excess metal can be collected on the inner circumferential side. However, even when the excess metal is collected onto the outer circumferential side by restricting the inner circumferential edge portion and then the outer circumferential edge portion is removed by means of trimming, the same effect can be provided.
The constitution and action of other portions are the same as those of Embodiment 18 or 19 described before.

### EMBODIMENT 21

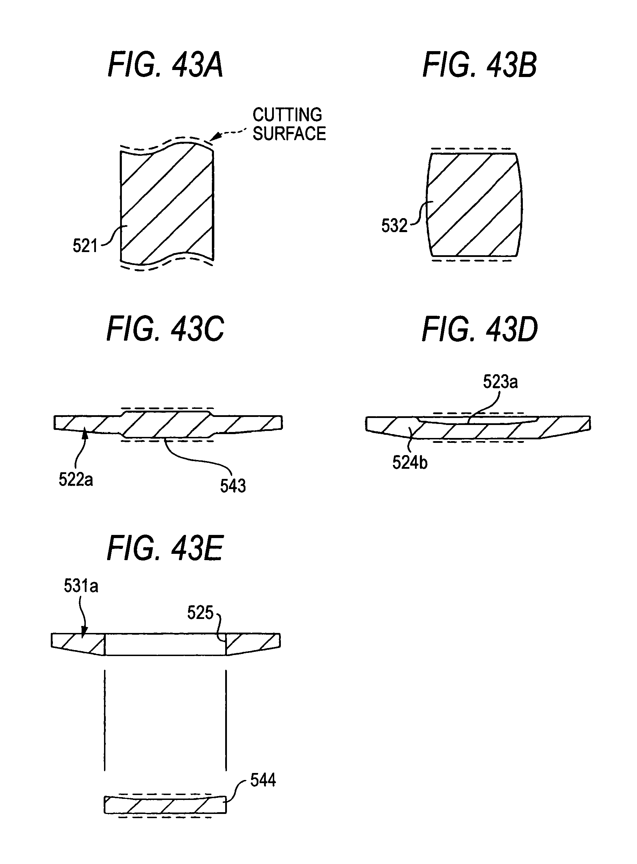

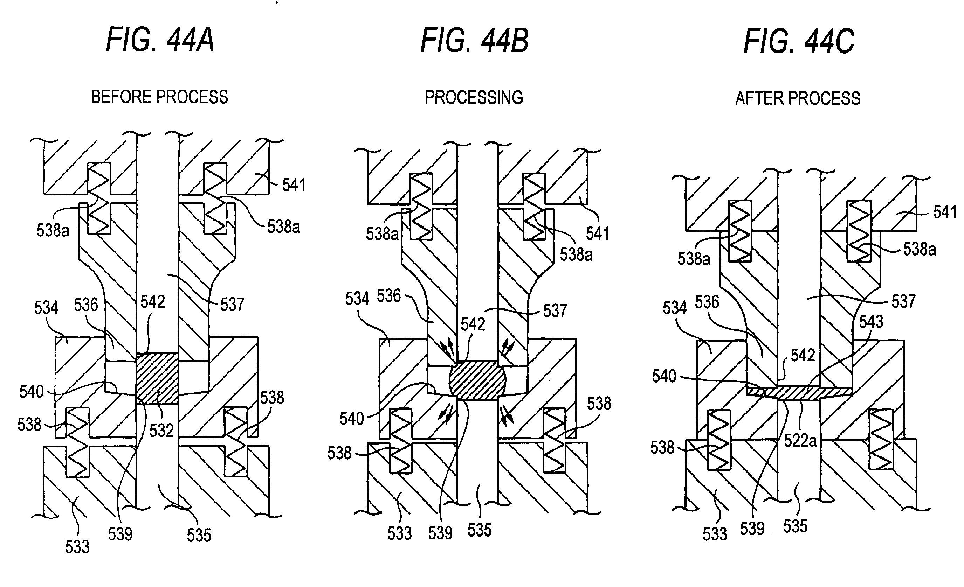

Figs. 43 and 44 are views showing Embodiment 21 of the present invention. In the present embodiment, when a process is devised in such a manner that the billet 521 is compressed in the axial direction as shown by Fig. 43(A) → Fig. 43(B) → Fig. 43(C) so as to make a disk-shaped partially finished material 522a, broken-out sections (portions attached with broken lines in Figs. 43(A) to 43(E)) existing on both axially end faces of this billet can not remain on surfaces of the high accurate rings 8, 8a, 8b (for example, Figs. 38(E), 40(F), 16(A) and 13(A)). That is, in the case of the present embodiment, both axially end faces of billet 521 are made flat (The broken-out sections are straightened.) so that the preliminary partially finished material 532 can be formed into a beer-barrel-shape as shown in Fig. 43(B). Therefore, this preliminary partially finished material 532 is subjected to upsetting working in which this preliminary partially finished material 532 is crushed in the axial direction. In this way, the disk-shaped partially finished material 522a shown in Fig. 43(C) can be obtained. In this process, both axially end faces of the billet 521 are prevented from expanding in the radial direction so that the broken-out sections can not remain on a surface of the elementary ring-shaped partially finished material 531a shown in Fig. 43(E). The following explanations are made into a structure in which the above broken-out sections do not remain on the surface of the elementary ring-shaped partially finished material 531 a.

In the case of the present embodiment, when the preliminary partially finished material 532 shown in Fig. 43(B) is compressed in the axial direction and formed into disk-shaped partially finished material 522a shown in Fig. 43(C), as shown in Figs. 44(A) to 44(C), while both axial end portions of this preliminary partially finished material 532 are being restricted, this preliminary partially finished material 532 is crushed in the axial direction. While this preliminary partially finished material 532 is being held so that diameters of both axial end portions of this preliminary partially finished material 532 can not be expanded, it is formed into a disk-shaped partially finished material 522a. A working device for conducting this working is shown in Fig. 44 and provided with a fixing block 533, a die 534, a counter punch 535, a ring punch 536 and a punch 537.

The fixing block 533 supports and fixes a frame of a press forming machine arranged on a floor of a factory. The die 534 is elastically supported at a position above the fixing block 533 by a plurality of elastic members 538, 538 such as a compression coil spring, Accordingly, when working is not conducted, the die 534 floats above the fixing block 533 as shown in Fig. 44(A). However, when working is conducted and a strong pressing force is given to the die 534 according to a flow of metallic material, as shown in Fig. 44(C), the die 534 resists an elastic force generated by each elastic member 538, 538 and descends until it comes into contact with an upper face of the fixing block 533 described before. In a central portion of this die 534, a lower side central hole 539, which can be internally engaged with a lower end portion of the preliminary partially finished material 532, is provided. Into this lower side central hole 539, a counter punch 535 is inserted so that it can be elevated with respect to die 534.

A position of this counter punch 535 in the vertical direction is regulated as follows. When working is not conducted, as shown in Fig. 44(A), an upper end face of this counter punch 535 is located at a position sufficiently lower than a bottom face of the recess portion 540 for working provided on an upper face of die 534. In the above state, when a lower end portion of the preliminary partially finished material 532 is inserted into the lower side central hole 539, central axes of the preliminary partially finished material 532 and the die 534 can be made to agree with each other. When working is conducted, under the condition that a lower face of the die 534 comes into contact with the upper face of the fixing block, an upper end face of the counter punch 535 exists at a position which is a little recessed downward from the upper face of the die 534. Therefore, even in the final stage of working, the broken-out sections described before can not flow outward in the radial direction.

The ring punch 536 is elastically supported by a plurality of elastic members 538a, 538a such as a compression coil spring at a lower portion of a ram 541 of a press forming machine provided in an upper portion of the die 534, wherein the ring punch 536 is arranged concentrically with die 534. Accordingly, when working is not conducted, the ring punch 536 hangs from the ram 541 as shown in Fig. 44(A). However, when working is conducted and a strong pressuring force is given by a flow of metal, as shown in Fig. 44(C), while ring punch 536 is resisting an elastic force generated by each elastic member 538a, 538a, the ring punch 536 is raised until it comes into contact with a lower face of the ram 541, A lower end portion of the ring punch 536 can be freely inserted into the recess portion 540 for working of the die 534 without causing any rattling. Under the condition that the lower end portion of the ring punch 536 is inserted into the recess portion 540, this die 534 and the ring punch 536 are made to be strictly concentric with each other, In a central portion of this ring punch 536, an upper side central hole 542, which is internally engaged with an upper end portion of preliminary partially finished material 532, is provided,

The punch 537 is inserted into the upper side central hole 542 so that the punch 537 can be elevated with respect to the ring punch 536. In the present embodiment, the pinch 537 is fixed to the ram 541 and according to an elevation of the ring punch 536 with respect to this ram 541, the punch 537 and the ring punch 536 can be relatively elevated. A position in the vertical direction of this punch 537 is regulated as follows. When working is not conducted, as shown in Fig. 44(A), the lower end face of the punch 537 is located at a position sufficiently higher than the lower end face of the ring punch 536. In this state, when an upper end portion of the preliminary partially finished material 532 is inserted into the upper side central hole 542, central axes of this preliminary partially finished material 532 and the ring punch 536 are made to agree with each other. As shown in Fig. 44(C), when the upper end face of the ring punch 536 comes into contact with the lower face of the ram 541, the lower end face of this punch 537 is located at a position which is a little recessed upward from the lower face of this ring punch 536. Therefore, even in the final stage of working, the broken-out sections do not flow outward in the radial direction.

The preliminary partially finished material 532 shown in Fig. 43(B) is crushed in the axial direction by the manufacturing apparatus shown in Fig. 43 so as to form disk-shaped partially finished material 522a shown in Fig. 43(C) as follows. First, while the ring punch 536 and the punch 537 are being retracted upward together with ram 541, a lower end portion of preliminary partially finished material 532 is internally engaged with an upper end portion of the lower side central hole 539 under the condition that central axes of the preliminary partially finished material 532 and the die 534 are made to agree with each other. Next, the ram 541 is lowered and a lower end portion of the ring punch 536 is inserted into the recess portion 540 for working of the die 534 as shown in Fig. 44(A). At the same time, an upper end portion of the preliminary partially finished material 532 is internally engaged with a lower end portion of the upper side central hole 542. When the ram 541 is descended in the above state, as shown in Fig. 44(A) → Fig. 44(B) → Fig. 44(C), the preliminary partially finished material 532 is gradually crushed and formed into the disk-shaped partially finished material 522a shown in Figs. 44 and 43(C). In this disk-shaped material 522a, the broken-out section described before remains in a thick portion 543 in the central portion.

In the case of the present embodiment, after the disk-shaped partially finished material 522a has been formed as described above, while an outer circumferential edge of this disk-shaped partially finished material 522a is being restricted so that the outer diameter can not be expanded, a circular recess portion 523a shown in Fig. 43(D) is formed at the central portion of this disk-shaped partially finished material 522a. Due to the foregoing, the second disk-shaped partially finished material 524b, the thickness of the central portion of which is reduced, can be formed. The thickness of a portion on the outer diameter side of this second disk-shaped partially finished material 524b is increased according to a flow of metallic material caused by a reduction of the thickness of the central portion. At this time, when the thickness of the central portion is decreased and the diameter is increased, a diameter of the portion, in which the above broken-out section is existing, is extended. However, this portion is limited in a range in which the thickness of the central portion is reduced. In this connection, it is possible that an outer diameter of this second disk-shaped partially finished material 524b is extended in accordance with working of the recess portion 523a and an outer circumferential edge portion is trimmed later.

Therefore, as shown in Fig. 43(E), at the central portion of this second disk-shaped partially finished material 524b, a portion of the broken-out section corresponding to both axially end faces of the billet 521 is removed by piercing working so as to form a circular hole 525. In this way, an elementary ring-shaped partially finished material 531a can be formed. By this piercing working, the portion of the broken-out section is removed from a portion, which is to become a high accurate ring, together with a scrap 44, that is, a portion having the hysteresis of the above broken-out section does not remain in this elementary ring-shaped partially finished material 531a. Therefore, in the same manner as that of Embodiment 19 described before, this elementary ring-shaped partially finished material 531a is worked as shown in Figs. 40(E) and 40(F) so as to obtain a high accurate ring 8.
Since the present embodiment adopts the above constitution, portions, which are on both axially end faces of the billet 521, do not remain in a portion of the high accurate ring 8 thus obtained. Therefore, the present embodiment is advantageous from the viewpoint of obtaining a product of high quality at a low manufacturing cost.
The constitution and action of other portions are the same as those of Embodiments 18 to 20 described above.

### EMBODIMENT 22

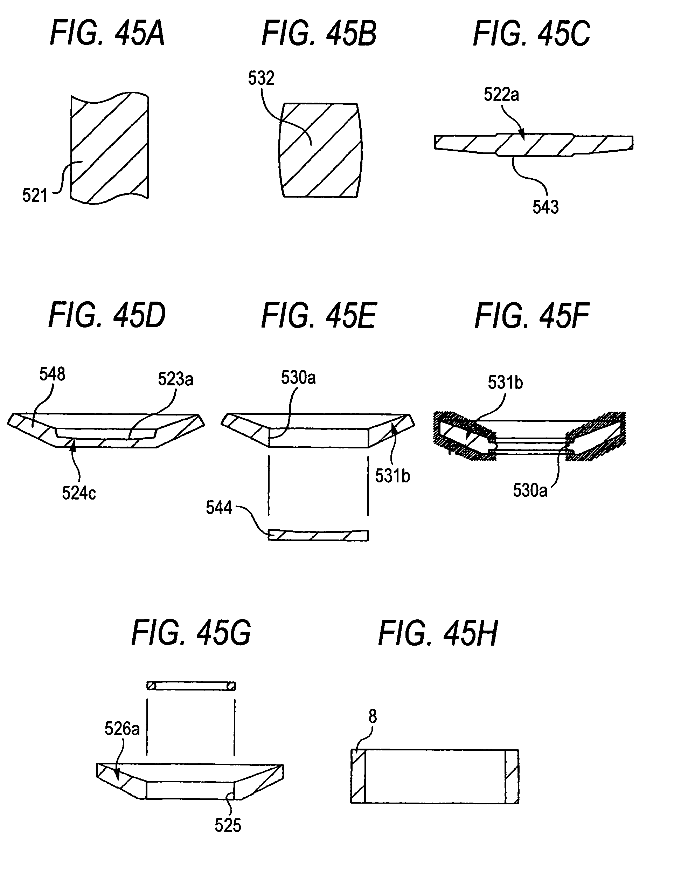

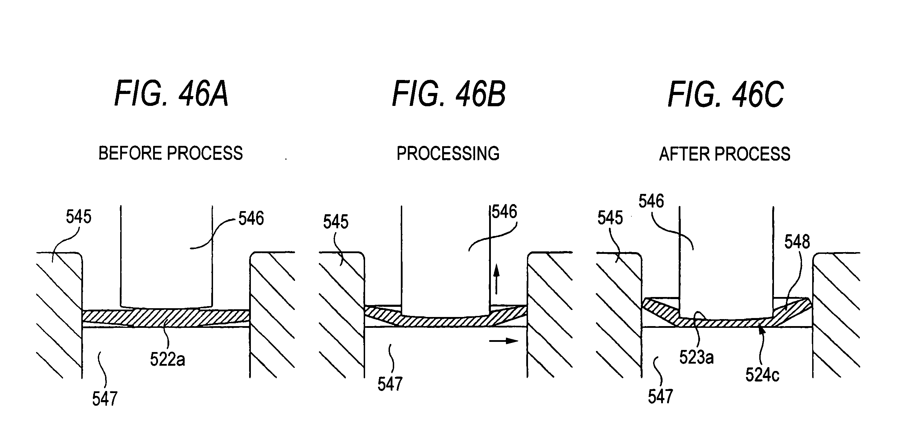

Figs. 45 and 46 are views showing Embodiment 22 of the present invention. In the case of the present embodiment, the disk-shaped partially finished material 526a is formed into a bowl-shape. Therefore, a change in the angle at the time of inversion working, in which the disk-shaped partially finished material 526a is worked being inverted into cylindrical high accurate ring 8, is suppressed to be smaller than 90°. A degree of working (a drawing rate) of a portion, the diameter of which is extended at the time of inversion working, is suppressed low. Therefore, it is possible to prevent the generation of harmful deformations or cracks in this portion. Accordingly, it is possible to manufacture a high accurate ring 8, the width in the axial direction of which is relatively large, by the high yield.

In the present embodiment, for example, in the same manner as that of the first half portion (the process of Fig. 43(A) → Fig. 43(B) → Fig. 43(C)) of Embodiment 21 described before, in the process of Fig. 45(A) → Fig. 45(B) → Fig. 45(C), while an outer circumferential edge of this disk-shaped partially finished material 522a is being restricted so that the outer diameter of this disk-shaped partially finished material 522a can not be expanded, a recess portion 523a is formed on one side in the axial direction of the central portion of this disk-shaped partially finished material 522a. The central portion of the disk-shaped partially finished material 522a, in which this recess portion 523a is formed, is a portion to be removed according to the formation of elementary circular hole 530a in the process shown in Fig. 45(E).

In the case of the present embodiment, the recess portion 523a is formed only on one side of the disk-shaped partially finished material 522a. When a central portion on one side of this disk-shaped partially finished material 522a is pressed in order to form this recess portion 523, as shown in Fig. 46, an outer circumferential edge portion of this disk-shaped partially finished material 522a is restricted by an inner circumferential face of the die 545 so that an outer diameter of this disk-shaped partially finished material 522a can not be expanded. While the outer circumferential edge portion of this disk-shaped partially finished material 522a is being restricted as described above, an intermediate portion of this disk-shaped partially finished material 522a is pressed toward a counter punch 547 by a punch 546. Then, as shown in Figs. 45(D) and 46(C), second disk-shaped partially finished material 524c, which is formed into a dish shape, in the central portion of which recess portion 523a is provided and in the portion on the outer circumferential side of which a bowl-shaped inclined ring portion 548 is provided, can be obtained.

As shown in Fig. 45(E), a central portion of this second disk-shaped partially finished material 524c is punched out to form an elementary circular hole 530a. In this way, this second disk-shaped partially finished material 524c is formed into elementary ring-shaped partially finished material 531b. After that, in the same manner as that of Embodiment 20 shown in Fig. 42, as shown in Fig. 45(F), sizing working is conducted and then as shown in Fig. 45(G), piercing working is conducted on an inner circumferential edge portion. In this way, a bowl-shaped ring-shaped partially finished material 526a is obtained. An inner circumferential edge side, the size in the axial direction of which is large, of this ring-shaped partially finished material 526a is deformed outward in the axial direction without reducing the diameter and an outer circumferential edge side, the size in the axial direction of which is small, of this ring-shaped partially finished material 526a is deformed inward in the axial direction without expanding the diameter. In this way, inversion working is conducted when the angle is changed by 90° or less until each portion in the circumferential direction becomes parallel with respect to the axial direction. In this way, the high accurate material 8 shown in Fig. 45(H) can be obtained.

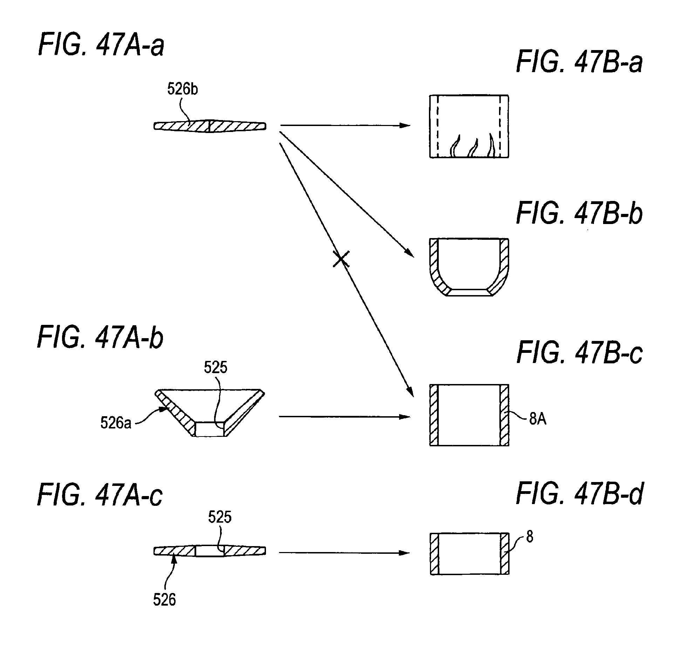

Since the present embodiment is composed as described above, when the ring-shaped partially finished material 526a is subjected to inversion working to form the high accurate ring 8 described above, a degree of working (a drawing rate) of the inner circumferential edge portion, the diameter of which is expanded, can be suppressed low. Therefore, it is possible to prevent the generation of harmful deformations or cracks in this inner circumferential edge portion. Accordingly, it is possible to manufacture the high accurate ring 8, the width in the axial direction of which is relatively large, by the high yield. Referring to Fig. 47, this point will be explained.

First, in order to understandingly explain an operational effect of the present embodiment, consideration is given to the ring-shaped partially finished material 526b shown in Fig. 47(A - a), the central hole of which is excessively small like a pinhole. When the ring-shaped partially finished material 526b is subjected to inversion working in which a direction of the cross-section of the ring-shaped partially finished material 526b is inverted by the angle 90°. In this case, according to the thus conducted inversion working, a high tensile stress is generated in the inner circumferential edge portion, the diameter of which is expanded by the inversion working. As a result of this inversion working, as shown in Fig. 47(B - a), cracks are generated at an end portion in the axial direction. Alternatively, as shown in Fig. 47(B - b), a diameter of the end portion in the axial direction is decreased. It is impossible for these products to be used as a high accurate ring which becomes a member to manufacture an inner ring or outer ring composing a radial ball bearing. Further, the high accurate ring 8A shown in Fig. 47(B - c), the size in the axial direction of which is long, can not be formed out of the ring-shaped partially finished material 526b described before, the central hole of which is excessively small.

As described in Embodiments 18 to 21, in the case of the ring-shaped partially finished material 526 shown in Fig. 47(A -c), the diameter of the central hole of which is sufficiently large, however, the shape of which is flat, it is possible to manufacture the high accurate partially finished material 8 shown in Fig. 47(B - d), the size in the axial direction of which is relatively small. However, in the case where the high accurate partially finished material 8A, the size in the axial direction of which is large, is manufactured, defects shown in Figs. 47(B - a) and 47(B -b) tend to be caused according to tensile stress generated in the inner circumferential edge portion, the diameter of which is expanded by the inversion working. Accordingly, it is impossible to form the high accurate ring 8A shown in Fig. 47(B -c) out of the ring-shaped partially finished material 526 shown in Fig. (A - c) while the yield is being maintained high. On the other hand, in the case of the present embodiment, as exaggeratedly shown in Fig. 47(A - b), inversion working is conducted on the bowl-shaped and ring-shaped partially finished material 526a, which is initially inclined, and in which an angle change not more than 90° is made. Therefore, tensile stress generated in the inner circumferential edge portion, the diameter of which is expanded according to the inversion working can be suppressed low. Accordingly, even in the inner circumferential edge portion, the diameter of which is expanded according to the inversion working, defects shown in Figs. 47(B - a) and 47(B -b) are seldom caused. Accordingly, the yield can be enhanced.

### EMBODIMENT 23

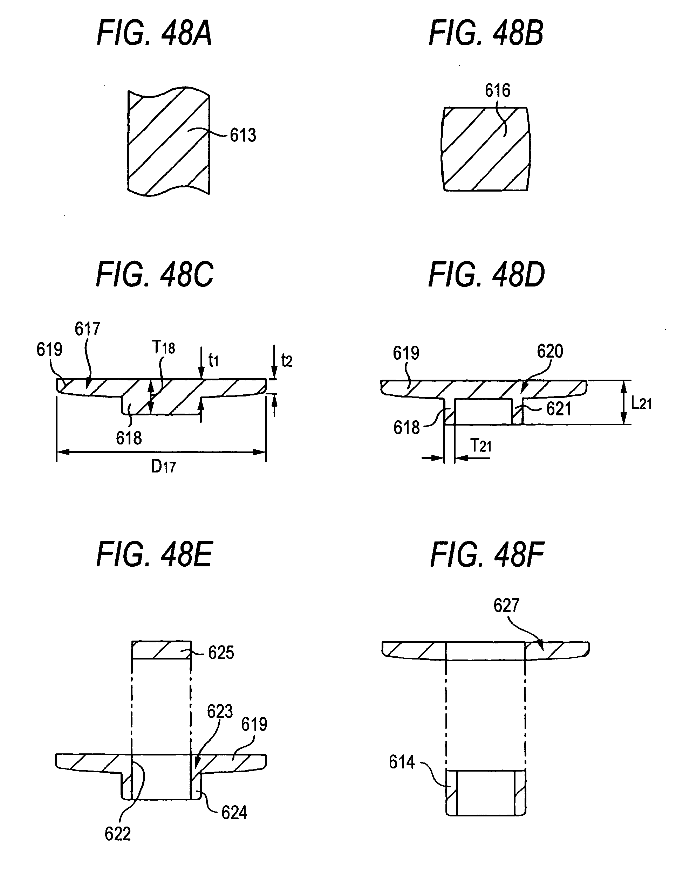

Figs. 48 to 51 are views showing Embodiment 23 of the present invention. In this connection, in the technical field of press forming such as plastic working and punching including cold forging, when shapes before and after the completion of working are known, it is easy (obvious) to understand a shape and structure of a metallic die to be used for plastic working. Accordingly, a shape and structure of some metallic die is omitted in the drawing. Therefore, in the following process, a shape of a workpiece is mainly explained below. In order for a state of progress of working to be understood easily, Fig. 48 is drawn in such a manner that a posture of each workpiece is set in the same state. Therefore, an actual vertical direction of each workpiece in each process is not necessarily the same as the vertical direction shown in the drawing. As well known, of course, in the field of press forming, a pushing die is arranged upward and a receiving die for receiving a force of the pushing die through a workpiece is arranged downward,

In the present embodiment, first of all, a long wire rod is cut by a predetermined length and a billet (columnar material) 613 shown in Fig. 48(A) is obtained. This billet 613 is obtained in such a manner that while the long wire rod wound round a drum is being drawn out from an uncoiler, it is cut by a predetermined length so that a volume of the thus cut wire rod can be the same as a volume a little larger than the sum of volumes of the first and the second high accurate ring 614, 515 to be obtained.

When the billet 613 obtained in this way is subjected to upsetting working in which the billet 613 is compressed in the axial direction by cold working, both axially end faces of the billet 613 are straightened and the billet 613 is formed into the (first) preliminary partially finished material 616, the shape of which is a beer-barrel shape as shown in Fig. 48(B). After that, when this preliminary partially finished material 616 is subjected to upsetting working in which this preliminary partially finished material 616 is compressed in the axial direction, the second preliminary partially finished material 617 shown in Fig. 48(C), the shape of which is a disk shape, is obtained. The second preliminary partially finished material 617 includes: a boss portion 618, which is arranged in a central portion in the radial direction, the thickness in the axial direction of which is larger than the thickness of a portion close to the outer circumference in the radial direction; and a flange portion 619 which is arranged in a periphery of this boss portion 618, wherein the boss portion 618 and the flange portion 619 are formed concentrically with each other.

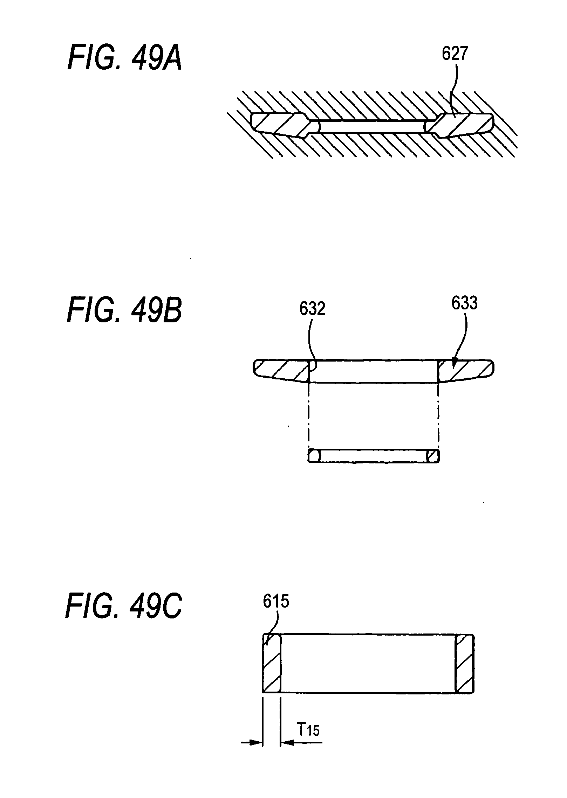

Concerning the thickness in the axial direction of this second preliminary partially finished material 617, thickness T₁₈ of the central boss portion 618 is the largest. Thickness t₁, t₂ of the flange portion 619 is smaller than thickness T₁₈ of the boss portion 618 (T₁₈ > t₁ >t₂). A cross-sectional shape of this flange portion 619 is a wedge shape. Thickness t₁, t₂ of this flange portion 619 is gradually changed in the radial direction. Concerning thickness t₁, t₂ of this flange portion 619, thickness t₁ of the inner circumferential portion is large and thickness t₂ of the outer circumferential portion is small. The flange portion 619 is a portion to be formed into the second high accurate ring 615 for making outer ring 3a (shown in Fig. 1(F)) of the first and the second high accurate ring 614, 615. Thickness T₁₅ (shown in Fig. 49(C)) of the second high accurate ring 615 to be manufactured is an intermediate value (t₁ > T₁₅ > t₂) of the thickness t₁, t₂ of the inner and outer circumferential edge portions of the flange portion 619.

When upsetting working is conducted to form the second preliminary partially finished material 617, the preliminary partially finished material 616 is compressed in the axial direction between a pair of metallic dies, the inner face shape of which agrees with an outer face shape of the second preliminary partially finished material 617. That is, the preliminary partially finished material 616 is set in a receiving die having a circular hole having a bottom, the shape of which is formed in such a manner that the inner diameter is the same as the outer diameter D₁₇ of the second preliminary partially finished material 617 and a shape of the bottom face agrees with a shape of one side face in the axial direction (lower face of Fig. 48(C)) of this second preliminary partially finished material 617. Then, the preliminary partially finished material 616 is compressed in the axial direction between the bottom face of the circular hole and the forward end face (flat face in the case of the present embodiment) of the pushing die. Shapes of these bottom face and forward end face are formed corresponding to both sides in the axial direction of the second preliminary partially finished material 617, that is, the protruding and recessing directions are reverse to each other. Therefore, when the bottom face and the forward end face are strongly pushed to each other, the second preliminary partially finished material 617 can be obtained.

When the second upsetting working for crushing the central portion of the boss portion 618 in the axial direction is conducted on this second preliminary partially finished material 617, the third preliminary partially finished material 620 shown in Fig. 48(D) is obtained. In order to form the third preliminary partially finished material 620, while the central portion of the boss portion 618 of the second preliminary partially finished material 617 is being held so that an outer diameter of the boss portion 618 can not be expanded, the central portion of the boss portion 618 is pressed in the axial direction from the forward end face side (from the lower face shown in Figs. 48(C) and 48(D)). At this time, the flange portion 619 of the second preliminary partially finished material 617 is interposed between the receiving die and the holding die so that this flange portion 619 can not be deformed. The receiving die has a circular hole having a bottom, the inner diameter of which is the same as the outer diameter D₁₇ of the second preliminary partially finished material 617 (and the third preliminary partially finished material 620). The holding die has a cylindrical shape, the outer diameter of which is formed so that it can be inserted into the circular hole of this receiving die without generating any gap and the inner diameter of which is formed so that the boss portion 618 can be internally engaged inside without generating any gap. Inside this holding die, a punch unit is arranged in such a manner that it can be displaced in the axial direction. This punch unit is composed in such a manner that a columnar punch, the outer diameter of which is smaller than the outer diameter of the boss portion 618, is internally engaged capable of being displaced in the axial direction, inside the cylindrical holding cylinder (ring punch), the outer diameter of which is the same as the outer diameter of the boss portion 618. A forward end face of this holding cylinder is a ring-shaped holding face. In this case, a positional relation of the receiving die with respect to a workpiece is reverse to a positional relation in the case of making the second preliminary partially finished material 617 with respect to the axial direction.

In the case where the second preliminary partially finished material 617 is formed into the third preliminary partially finished material 620, the flange portion 619 of this second preliminary partially finished material 617 is held between the receiving die and the holding die. At the same time, under the condition that a forward end face of a holding cylinder of the punch unit is fixed at a proper position, the punch of this punch unit is pressed to a forward end portion of boss portion 618. This pressing work is conducted until a portion of this boss portion 618 reaches a forward end face of the holding cylinder and metallic material can not flow anymore, that is, the punch can not be displaced anymore. As a result, the thickness in the axial direction of the central portion of the boss portion 618 is reduced and the thickness in the axial direction of a portion on the outer diameter side of the boss portion 618 is increased. Therefore, in this portion on the outer diameter side of the boss portion 618, a cylindrical portion 621, the size in the axial direction of which is regulated at a predetermined value, is formed. Concerning the third preliminary partially finished material 620 obtained in this way, length L₂₁ from a base end face (an upper face shown in Fig. 48(D)) of the third preliminary partially finished material 620 to a forward end face of the cylindrical portion 621 becomes a predetermined value. Thickness T₂₁ in the radial direction of the cylindrical portion 621 is strictly regulated to be 1/2 of a difference between the inner diameter of the holding die and the outer diameter of the punch of the punch unit. To sum up, an volumetric error existing in the second preliminary partially finished material 617 is compensated by making the thickness of the bottom portion remaining at the center of boss portion 618 different, that is, the volumetric error is collected in a portion which becomes a scrap portion,

After the third preliminary partially finished material 620 has been formed in the manner described above, as shown in Fig. 48(E), a circular hole 622 is punched by means of press in a central portion of the third preliminary partially finished material 620 surrounded by the cylindrical portion 621. In this way, it is possible to obtain the primary partially finished material 623 having a cylindrical portion 624 in the central portion. This punching is conducted in such a manner that the third preliminary partially finished material 620 is put in the receiving die, in the central portion of which a punching hole is provided, and a portion surrounded by the cylindrical portion 621 is punched by the punch inserted onto the inner diameter side of the cylindrical portion 621 so that this punched portion can be a scrap 625. An outer diameter of the above punch and an inner diameter of the punched hole are regulated so that an inner diameter of the circular hole 622 can agree with an inner diameter of the cylindrical portion 621. Accordingly, an inner circumferential face of the cylindrical portion 624 of the primary partially finished material 623 becomes a single cylindrical face.

As shown in Fig. 48(F), from the primary partially finished material 623 obtained in this way, the first high accurate ring 614 and the secondary partially finished material 627 are obtained when the primary partially finished material 623 is cut in a boundary portion between the outer circumferential face of the cylindrical portion 624 and the inner circumferential edge of the flange portion 619 in an intermediate portion in the radial direction. This cutting work is conducted in such a manner that while one side in the axial direction of the flange portion 619 (a lower side shown in Fig. 48(F)) is being supported by an upper face of the annular receiving die, a punch is strongly pressed toward the receiving die on the other side (an upper face in Fig. 48(F)) in the axial direction in the central portion of the primary partially finished material 623. As a result of the cutting work conducted by the above punching work, a portion obtained from the cylindrical portion 624 becomes the first high accurate ring 614, the shape of which is cylindrical, and a portion obtained from the flange portion 619 becomes the secondary partially finished material 627, the shape of which is a ring shape.

The first high accurate ring 614 and the secondary partially finished material 627 obtained in this way are worked as follows. The first high accurate ring 614 is formed into the inner ring 3a, for example, by the above process shown in Fig. 16, that is, by utilizing the first high accurate ring 614 as the high accurate ring 8a shown in Fig. 16. On the other hand, the secondary partially finished material 627 is formed into second high accurate ring 615 by the process shown in Figs. 49 to 51. After that, the second high accurate ring 615 is formed into the outer ring 2a by the process shown in Fig. 1, that is, when high accurate ring 615 is utilized as the high accurate ring 8b shown in Fig. 1.

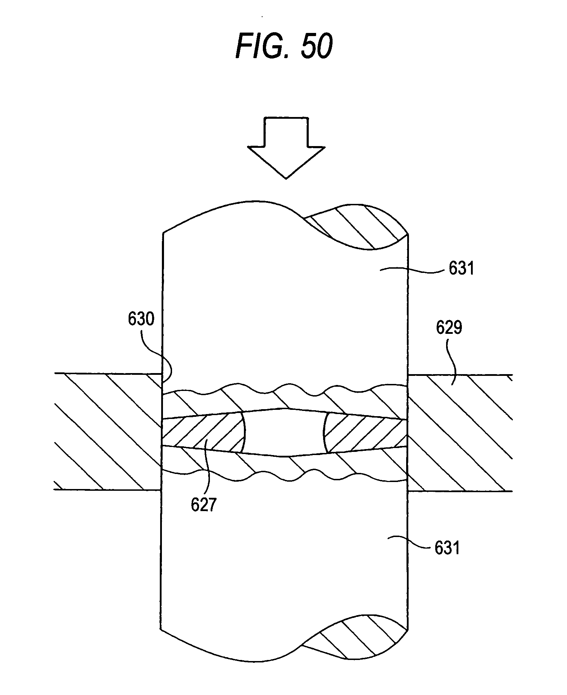

In the process in which the secondary partially finished material 627 is formed into the second high accurate ring 615, first, as shown in Figs. 49(A) and 50, while this secondary partially finished material 627 is being tightly, internally engaged in a circular hole 630 of a die 629, this secondary partially finished material 627 is strongly pressed between forward end faces of a pair of punches 631, 631, that is, so-called sizing working is conducted. Forward end faces of both punches 631, 631 are formed into conical concave faces which tightly come into contact with both sides in the axial direction of the secondary partially finished material 627. While both punches 631, 631, the forward end faces of which are formed into the above shape, are compressing the secondary partially finished material 627 in the axial direction, a distance between the forward end faces is reduced to a proper distance. In this way, the thickness of the secondary partially finished material 627 is made to be a proper value. At this time, excess metal, which has flowed when the thickness of the secondary partially finished material 627 is made to be the proper value, collects in an inner circumferential edge portion of the secondary partially finished material 627. Accordingly, when the circular hole 632 is formed in a central portion of secondary partially finished material 627, which has been subjected to sizing working, by punching working (piercing working) as shown in Fig. 49(B), it is possible to obtain the fourth preliminary partially finished material 633, the volume of which is the same as that of the second high accurate ring 628 to be manufactured.

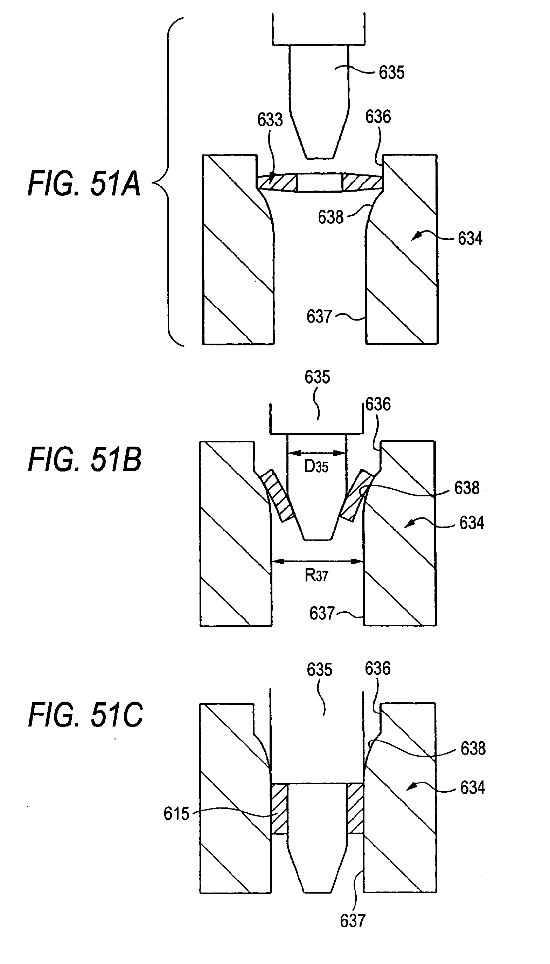

After the fourth preliminary partially finished material 633 has been formed in this way, inversion working is conducted in which a portion of the fourth preliminary partially finished material 633 on the outer diameter side is contracted inward in the radial direction and a portion on the inner diameter side is expanded outward in the radial direction so that a direction of the cross-section can be changed by the angle 90° as shown in Figs. 49(B) and 49(C). This inversion working is conducted in such a manner that the fourth preliminary partially finished, material 633 is pushed into the cylindrical die 634 by the punch 635 as shown in Fig. 51. This die 634 has a central hole in which the large diameter portion 636 provided on the opening portion side and the inner diameter portion 637 provided on the inner side concentrically with the large diameter portion 636 are continued to each other by the curved face 638. Inner diameter R₃₇ of the small diameter portion 637 is smaller than the outer diameter of the fourth preliminary partially finished material 633 and larger than the inner diameter. A forward end portion of the punch 635 is tapered. The aforementioned inversion working is conducted as follows. First, as shown in Fig. 51(A), the fourth preliminary partially finished material 633 is engaged (set) inside the large diameter portion 636. Next, as shown in Figs. 51(B) and 51(C), the fourth preliminary partially finished material 633 is pushed inside the small diameter portion 637 by the punch 635. As a result, a cross-section of the fourth preliminary partially finished material 633 is inverted by the angle 90°. Therefore, the cylindrical second high accurate ring 615 shown in Fig. 49(C) can be obtained.

According to the inversion working described above, a portion on the inner diameter side of the fourth preliminary partially finished material 633 is expanded and the thickness is decreased and a portion on the outer diameter side of the fourth preliminary partially finished material 633 is compressed and the thickness is increased. On the other hand, in the present embodiment, the thickness in the axial direction of the fourth preliminary partially finished material 633 on the inner diameter side is large and the thickness in the axial direction of the fourth preliminary partially finished material 633 on the outer diameter side is small. Therefore, the thickness in the radial direction of the second high accurate ring 615, which is obtained when the aforementioned inversion working has been completed, becomes uniform with respect to the radial direction of the second high accurate ring 615 except for chamfered portions in both end edge portions. That is, when the inversion working has been completed, the cylindrical second high accurate ring 615 can be provided, the inner diameter, the outer diameter and the length in the axial direction of which are equal to the regulated values. Therefore, a difference between inner diameter R₃₇ of the small diameter portion 637 and outer diameter D₃₅ of the forward half portion of the punch 635 is made to be twice as large as thickness T₁₅ (shown in Fig. 49(C)) of the second high accurate ring 615 to be manufactured, that is, R₃₇ - D₃₅ = 2T₁₅. When the second high accurate ring 615 described above is subjected to cold working as shown in Fig. 1, it is formed into the outer ring 2a. EMBODIMENT 24

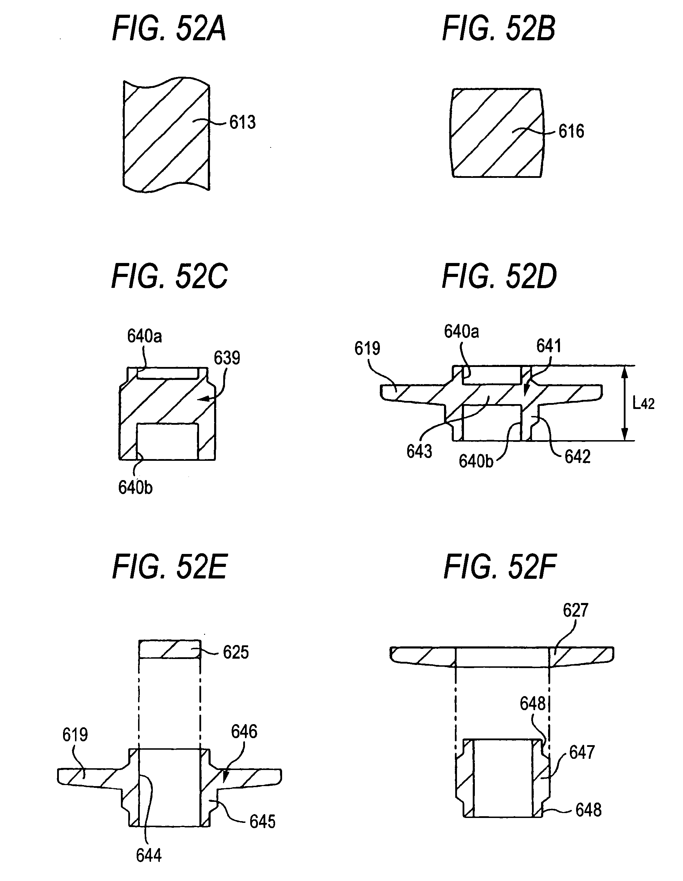

Fig. 52 is a view showing Embodiment 24 of the present invention. In the case of the present invention, plastic working is conducted on the (first) preliminary partially finished material 616 (shown in Fig. 52(B)) made in the same manner as that of Embodiment 23 described before so that shapes of the outer circumferential face and both axial end portions can be regulated. Due to this plastic working, the second preliminary partially finished material 639 shown in Fig. 52(C) can be provided. In this second preliminary partially finished material 639, in the central portions on both axially end faces, circular recess holes 640a, 640b, the diameters of which are the same, which are concentric with each other, are formed. Further, an outer diameter of one end side in the axial direction (on upper end side in Fig. 52(C)) is smaller than an outer diameter of the other portion.

In the case of the present embodiment, when upsetting working is conducted on this second preliminary partially finished material 639 so as to compress it in the axial direction, it is possible to obtain the disk-shaped third preliminary partially finished material 641 shown in Fig. 52(D). The third preliminary partially finished material 641 includes: a boss portion 642; and a flange-shaped portion 619. The boss portion 642 arranged in a axially central portion is formed into a cylindrical shape, axially intermediate portion of which is closed by a partitioning plate portion 643 and the thickness of a portion in the axial direction is larger than the thickness of a portion close to the outside in the radial direction. The flange portion 619 is formed in a periphery of boss portion 642 concentrically with this boss portion 642. The thickness of this flange portion 619 is regulated in the same manner as that of Embodiment 23 described before.

Upsetting working for forming the third preliminary partially finished material 641 is conducted basically in the same manner as that of Embodiment 23 described before in such a manner that the second preliminary partially finished material 639 is compressed in the axial direction between a pair of metallic dies having an inner face shape agreeing with an outer face shape of the third preliminary partially finished material 641. Especially, in the case of the present embodiment, under the condition that both metallic dies are made to come close to each other until an interval between both metallic dies can be a predetermined value, a punch, which is arranged being capable of moving in the axial direction with respect to the metallic die, is strongly pressed to a central portion of the third preliminary partially finished material 641, which is a workpiece, so as to reduce the thickness of this central portion. Then, the thickness in the axial direction of the central portion of boss portion 642 is reduced and metallic material is made to flow from this central portion and this metallic material is completely filled between both metallic dies. As a result, length L₄₂ in the axial direction of the boss portion 642 and the thickness in the axial direction of the flange portion 619 can become predetermined values. The reason is that both metallic dies are stopped when a distance between both metallic dies has become a predetermined value. The thickness in the radial direction of each portion in the boss portion 642 is strictly regulated at 1/2 of a difference between the inner diameter of both metallic dies and the outer diameter of the punch (or a portion of the metallic die). To sum up, a volumetric error of the second preliminary partially finished material 639 is compensated when the thickness of the partitioning plate portion 643 of axially intermediate portion of the boss portion 642 is made different.

After the third preliminary partially finished material 641 has been formed as described above, as shown in Fig. 52(E), at the central portion of this third preliminary partially finished material 641, the partitioning plate portion 643 of axially intermediate portion of the boss portion 642 is removed by punching working by means of press forming so as to form circular the hole 644. In this way, it is possible to obtain the primary partially finished material 646 having a cylindrical portion 645 in the central portion. This punching working is conducted in such a manner that this the third preliminary partially finished material 641 is put in a receiving die, the surface shape of which agrees with one side in the axial direction of third preliminary partially finished material 641, having a punching hole in the central portion, and the partitioning plate portion 643 is punched by a punch, which is inserted onto the inner diameter side of the boss portion 642, as a disk-shaped scrap 625. An outer diameter of the above punch is made to agree with an inner diameter of boss portion 642. Therefore, an inner circumferential face of the primary partially finished material 646, which has been obtained as a result of punching working, is made to be a single cylindrical face.

As shown in Fig. 52(F), from the primary partially finished material 646 obtained in this way, the first high accurate ring 647 and the secondary partially finished material 627 are obtained when the primary partially finished material 646 is cut in a boundary portion between the outer circumferential face of the cylindrical portion 645 and the inner circumferential edge of the flange portion 619 in an intermediate portion in the radial direction. This cutting work is conducted in such a manner that while one side in the axial direction of the flange portion 619 (a lower side shown in Fig. 52(F)) is being supported by an upper face of the annular receiving die, a forward end face of the punch having a shape agreeing with the other side in the central portion is strongly pressed toward the receiving die on the other side (an upper face of Fig. 52(F)) in the axial direction in the central portion of the primary partially finished material 646. As a result of the cutting work conducted by the above punching working, a portion obtained from cylindrical portion 645 becomes the first high accurate ring 647, the shape of which is cylindrical, having step portions 648, 648 on the outer circumferential faces of both end portions, A portion obtained from flange portion 619 becomes the secondary partially finished material 627, the shape of which is a ring shape.

The first high accurate ring 647 and the secondary partially finished material 627 are obtained in this way. This first high accurate ring 647 is formed into an inner ring 3a, for example, by the process shown in Fig. 16, that is, by utilizing this first high accurate ring 647 as the primary partially finished material 9 shown in Fig. 16. On the other hand, in the same manner as that of Embodiment 23 described before, this secondary partially finished material 627 is formed into a second high accurate ring 615 by the process shown in Figs. 49 to 51 and then this second high accurate ring 615 is formed into an outer ring 2a by the process shown in Fig. I described before, that is, by utilizing this second high accurate ring 615 as the high accurate ring 8b shown in Fig. 1.

As described above, the present invention, which is related to a high accurate ring, is characterized in that a pair of high accurate rings for manufacturing an inner and an outer ring are manufactured with high efficiency. A working method in which the thus obtained high accurate ring is formed into an inner or an outer ring is not particularly limited.
The present invention is explained above in detail referring to the specific embodiments. However, it is obvious that variations may be made by those skilled in the art without departing from the scope and spirit of the present invention.
The present application is based on the following applications and the contents of the applications are taken in here.
Japanese Patent Application (No. 2004-275835) filed on September 22, 2004
Japanese Patent Application (No. 2004-282970) filed on September 29, 2004
Japanese Patent Application (No. 2004-285793) filed on September 30, 2004
Japanese Patent Application (No. 2004-285794) filed on September 30, 2004
Japanese Patent Application (No. 2005-165540) filed on June 6, 2005
Japanese Patent Application (No. 2005-166450) filed on June 7, 2005
Japanese Patent Application (No. 2005-170344) filed on June 10, 2005

## Claims

1. A manufacturing method of a raceway ring for a radial ball bearing, the radial ball bearing comprising:
the raceway ring comprising at least one of:
an outer ring formed with an outer ring raceway, of which sectional shape is arcuate, and which is formed entire of circumference on an axially intermediate portion of an inner circumferential face as a raceway surface; and
an inner ring formed with an inner ring raceway, of which sectional shape is arcuate, and which is formed entire of circumference on an axially intermediate portion of an outer circumferential face as the raceway surface; and
a plurality of balls rollably provided between the inner ring raceway and the outer ring raceway,
the manufacturing method of the raceway ring comprising:
a high accurate material working process of preparing a high accurate material of which volume is substantially the same as that of the raceway ring of the radial ball bearing which is a finished product by cold working; and
a raceway ring working process of plastically deforming the high accurate material by cold working and forming the raceway surface on the axially intermediate portion of either outer or inner circumferential face,
wherein working for removing material is not conducted before a heat treatment.

2. The manufacturing method of the raceway ring for the radial ball bearing as set forth in claim 1, further comprising a finishing process of finishing the raceway surface by rolling process after the raceway ring working process.

3. The manufacturing method of the raceway ring for the radial ball bearing as set forth in claim 2, wherein recess portions for sealing, which are provided on an entire circumference of both axial ends of either outer or inner circumferential face of the raceway ring at positions which are set to oppose each other via the raceway surface in an axial direction, are finished by rolling process simultaneously when the raceway surface is finished in the finishing process.

4. The manufacturing method of the raceway ring for the radial ball bearing as set forth in claim 1, wherein the raceway ring working process of working the outer ring of the ball bearing comprising:
a first process of forming a primary partially finished material in such a manner that:
obtaining a small diameter portion, of which outer diameter is substantially the same as an outer diameter of the outer ring, by reducing a diameter of axially a part of a cylindrical material of which volume is the substantially same as that of the outer ring to be manufactured; and
obtaining a large diameter portion by maintaining a residual portion of the cylindrical material of which diameter is not reduced;
a second process of forming a secondary partially finished material in such a manner that:
forming a curved face for a raceway surface, which has arcuate shape in cross section and becomes at least a part of the outer ring raceway, on an entire circumference of the inner circumferential face at a portion corresponding to the small diameter portion on the inner circumferential face of the axially intermediate portion of the primary partially finished material; and
making a thickness distribution, which is defined along the axial direction with respect to the radial direction of a portion adjacent to the curved face for the raceway surface and adjacent to the large diameter portion side with respect to the axial direction, with a thickness distribution in the portion of the outer ring to be manufactured; and
a third process of reducing an outer diameter of the large diameter portion of the secondary partially finished material so as to agree with an outer diameter of the small diameter portion.

5. The manufacturing method of the raceway ring for the radial ball bearing as set forth in claim 4, wherein
the outer ring raceway is of the deep groove, and
in the third process, the outer ring raceway of the deep groove is formed on the axially intermediate portion of the inner circumferential face by forming a second curved face for the raceway surface, which is symmetrical with the curved face for the raceway surface, on inner circumferential surface of the axially intermediate portion so as to continue to the curved face for the raceway surface.

6. The manufacturing method of the raceway ring for the radial ball bearing as set forth in claim 5,
wherein the outer ring includes engagement grooves for engaging an outer circumferential edge portion of a tight-sealing plate provided at both axially end portions on the inner circumferential face,
the manufacturing method of the raceway ring for the radial ball bearing further comprises:
a preliminary process of forming step portions, of which inner diameter are larger than that of the axially intermediate portion, at both axially end portions of the high accurate material prior to the first process; and
an after-process of elastically working the step portions and forming the engagement groove portions after the third process.

7. The manufacturing method of the raceway ring for the radial ball bearing as set forth in claim 6, further comprising:
a finishing process of simultaneously finishing the outer ring raceway and both engagement groove portions by rolling process after the after-process.

8. The manufacturing method of the raceway ring for the radial ball bearing as set forth in claim 1, the raceway ring working process for working the inner ring of the ball bearing comprising:
a first process of forming a partially finished material in such a manner that forming a curved face for the first raceway face, which has arcuate shape in cross section and becomes a portion of the inner ring raceway, on an outer circumferential face of axially intermediate portion while reducing a diameter of the cylindrical high accurate material, wherein one half portion in the axial direction with respect to the curved face for the first raceway of the partially finished material is made a small diameter portion and, the other half portion in the axial direction of the partially finished material is a large diameter portion; and
a second process of expanding the inner diameter of the small diameter portion, which is a half portion in the axial direction of the partially finished material, to the same inner diameter as that of the other half portion in the axial direction, and forming a curved face for the second raceway, which becomes a residual portion of the inner ring raceway, on a portion continuing to the curved face for the first raceway.

9. The manufacturing method of the raceway ring for the radial ball bearing as set forth in claim 8, wherein the inner ring raceway is of the deep groove,
the raceway ring working process further including an intermediate process conducted between the first and the second process, the intermediate process compressing an axially part of the partially finished material by working and forming into a secondary partially finished material, of which distribution of radial thickness along the axial direction in a portion axially adjacent to the curved face for the first raceway surface agrees with a distribution of the thickness in a corresponding portion of the inner ring to be manufactured,
wherein, in the second process, forming the curved face for the second raceway surface, which is symmetrical with the curved face for the first raceway surface, so as to continue to the curved face for the first raceway surface by using the curved face for the first raceway surface, of which thickness distribution is determined, on the axially intermediate portion, to thereby form the inner ring raceway of the deep groove.

10. The manufacturing method of the raceway ring for the radial ball bearing as set forth in claim 9, wherein the inner ring has a pair of sealing step portions, which makes slide-contact or come close to an inner circumferential edge portion of the tight-sealing plate, on both axial ends of the outer circumferential face,
the manufacturing method further comprising:
a preliminary process of forming a preliminary intermediate material by forming step portions, of which outer diameter are smaller than the outer diameter of axially intermediate portion, at both axial end portions of the high accurate material before the first process; and
an after-pracess of plastically working and forming the step portions into both sealing step portions after the second process.

11. The manufacturing method of the raceway ring for the radial ball bearing as set forth in claim 10 further comprising:
a finishing process of simultaneously finishing the inner ring raceway and the step portions for both sealing portions by rolling process after the after-process.

12. A manufacturing method of a cylindrical raceway ring for a radial ball bearing, in which a cross-section arcuate raceway surface is formed on entire of a circumference at an axially intermediate portion on either circumferential face,
the manufacturing method comprising:
a first process of conducting a first forging process to obtain a primary partially finished material in such a manner that pressing a cylindrical material, of which volume is substantially the same as that of a finished product, with a pair of metallic dies which are relatively displaced in the axial direction, and deforming a diameter of axially one half of the material to make a small diameter portion, and the other half is made a large diameter portion,
a second process of conducting a second cold forging process to obtain a secondary partially finished material in such a manner that pressing the primary partially finished material with a pair of metallic dies which is different from that used in the first process and are relatively displaced in the axial direction, so that a distribution of radial thickness along the axial direction on at least a portion of the primary partially finished material where the raceway surface is formed agrees with the thickness of the portion where a raceway surface of the completed raceway ring is formed; and
a third process of plastically deforming a part of the secondary partially finished material in radial direction to form the raceway surface by conducting a rolling process
which presses the secondary partially finished material so that inner circumferential face and outer circumferential face thereof come close to each other while rotating the secondary partially finished material.

13. The manufacturing method of the raceway ring for the radial ball bearing as set forth in claim 12,
wherein the raceway ring includes engagement grooves for engaging a circumferential edge portion of a tight-sealing plate provided at both axially end portions on the circumferential face formed with the raceway surface,
the manufacturing method further comprising:
a preliminary process of forming step portions which are recessed in the radial direction from the axially intermediate portion at both axial end portions thereof to obtain a preliminary partially finished material prior to the first process; and
a third process of forming the engagement grooves in the step portions.

14. A manufacturing method of a cylindrical raceway ring for a radial ball bearing,
in which a cross-section arcuate raceway surface is formed on entire of a circumference at an axially intermediate portion on either circumferential face which is to be worked side circumferential face, the method comprising:
preparing a cylindrical material, which has volume substantially the same as that of a finished product, and a diameter of the not-worked side circumferential face, which is opposite side relative to a face on which the raceway surface is formed, is substantially the same as that of a finished product;
supporting the not-worked side circumferential face by so as to be fitted to a support side circumferential face provided on a receiving member without substantially generating any gap; and
rotating a working side rotating member relative to the receiving member, while pressing the working side circumferential surface of a working side rotating member, which has a generating line shape agreeing with a generating line shape of the worked side circumferential face in a finished product, in a radial direction, to thereby process the worked side circumferential face as a finished product shape having at least the raceway surface.

15. The manufacturing method of the raceway ring for the radial ball bearing as set forth in claim 14,
wherein stepped portions are formed in both axial end portions of the worked side circumferential face of the material in order to form step portions, which are recessed in the radial direction from a radially central portion of the worked side circumferential face, on entire of the circumference in both axial end portions of the worked side circumferential face of a finished product, and
both stepped portions are worked simultaneously with the raceway surface when a worked side rotary member is pressed onto the worked side circumferential face.

16. The manufacturing method of the raceway ring for the radial ball bearing as set forth in claim 15, wherein step faces existing between both step portions, which are provided in both axial end portions of the worked side circumferential face of the material, and the axially central portion are formed into inclined faces which incline so as to come close to each other when the step faces are separate from the not-worked circumferential face with respect to the radial direction, and
an inclination angle of both step faces with respect to a virtual plane existing in a direction perpendicular to a central axis of the material is larger than an inclination angle of the step face existing in a portion corresponding to the completed raceway ring and not more than 15°.

17. The manufacturing method of the raceway ring for the radial ball bearing as set forth in claim 14,
wherein both axially end faces of the material to make the raceway ring are inclined faces which incline so as to come close to each other when the faces are separate from the not-worked side circumferential face, and
an inclination angle of both axially end faces with respect to a virtual plane existing in a direction perpendicular to the central axis of the material is not more than 20°.

18. A radial ball bearing comprising;
a raceway ring comprising at least one of:
an outer ring formed with an outer ring raceway, of which sectional shape is arcuate, and which is formed entire circumference on an axially intermediate portion of an inner circumferential face as a raceway surface; and
an inner ring formed with an inner ring raceway, of which sectional shape is arcuate, and which is formed entire of circumference on an axially intermediate portion of an outer circumferential face as the raceway surface; and
a plurality of balls rollably provided between the inner ring raceway and the outer ring raceway,
wherein the raceway ring is worked in such a manner that a cylindrical high accurate material made by cold working, of which volume is substantially the same as that of a finished product, is plastically deformed by cold working to thereby process a surface shape including the raceway substantially the same as the shape of the finished product.

19. A cylindrical raceway ring for a radial ball bearing, in which a cross-section arcuate raceway surface is formed on entire of a circumference at an axially intermediate portion on either circumferential face,
wherein a surface shape including the raceway surface is processed by conducting cold forge rolling process on a partially finished product, which is obtained by plastically deforming a cylindrical material having volume substantially the same as that of a finished product, to plastically deform at least a part of the partially finished product in a radial direction.

20. The raceway ring for the radial ball bearing as set forth in claim 19, wherein
a shape of the outer circumferential face of the partially finished material is formed in such a manner that a direction of a change in the outer diameter from a portion, of which outer diameter is the largest, to both axially end faces is not inverted, and the shape of the outer circumferential face of the partially finished material has no under-cut portion, and
a shape of the inner circumferential face of the partially finished material is formed in such a manner that a direction of a change in the inner diameter from a portion, of which inner diameter is the smallest, to both axially end faces is not inverted and the shape of the inner circumferential face of the partially finished material has no under-cut portions.

21. A manufacturing method of a high accurate metallic ring comprising:
a restriction process of restricting either inner or outer circumferential face of a cylindrical material, of which volume is larger than that of the high accurate ring to be manufactured, so as to maintain its diameter;
a compression process of compressing the cylindrical material in an axial direction by cold working while not restricting a diameter of the other circumferential face so as not to change its diameter, to form a partially finished material in which an axial dimension of thereof agrees with an axial dimension of the high accurate ring, and an excess thickness portion exceeding the volume of the high accurate ring is released to a direction in which the other circumferential face is swelled in the radial direction; and
a removing process of removing the excess thickness portion so as to form a cylindrical ring of which inner diameter, outer diameter and axial length are predetermined values.

22. The manufacturing method of the high accurate ring as set forth in claim 21,
the removing process comprising:
an wringing process of wringing the excess thickness portion existing on the other circumferential face by a wringing jig, of which radial dimension agrees with a radial dimension of the high accurate ring, so as to collect the excess thickness portion at one portion with respect to the axial direction on the other circumferential face, to form a flange portion protruding in the radial direction in this one portion, and to make a diameter of the residual portion of the other circumferential face agree with the radial dimension of the high accurate ring; and
a removing process of removing the flange portion by punching after the completion of the wringing process.

23. The manufacturing method of the high accurate ring as set forth in claim 21,
the removing process including:
a shaving process of shaving the excess thickness portion existing on the other circumferential face by a punch, of which diameter agrees with a radial dimension of the high accurate ring to be manufactured.

24. The manufacturing method of the high accurate ring as set forth in claim 21, further comprising;
a process of compressing a columnar billet in the axial direction to form a disk-shaped partially finished material;
a process of compressing an axially central portion of the disk-shaped partially finished material in the axial direction to reduce axial length in the axially central portion; and
a rearwardly pushing process of compressing
a portion on an outer diameter side of the disk-shaped partially finished material rearward with respect to a pushing direction so as to deform the disk-shaped partially finished material into a cylindrical shape to thereby form a bottomed secondary partially finished material, wherein
these processes are provided before the restriction process, and
a cylindrical material is formed by punching a bottom portion from the secondary partially finished material.

25. The manufacturing method of the high accurate ring as set forth in claim 21, further comprising:
an inversion forming process of twisting a cross-section shape of a ring-shaped partially finished material, which is manufactured by punching a metallic plate by angle of 90° to thereby form a cylindrical material,
wherein the inversion forming process is conducted before the restriction process.

26. The manufacturing method of the high accurate ring as set forth in claim 21, wherein the high accurate ring is a material used for manufacturing an inner ring composing a radial ball bearing by cold working, and
one circumferential face of the high accurate ring is an outer circumferential face and the other circumferential face of the high accurate ring is an inner circumferential face.

27. The manufacturing method of the high accurate ring as set forth in claim 21, wherein the high accurate ring is a material used for manufacturing an outer ring composing a radial ball bearing by cold working, and
one circumferential face of the high accurate ring is an inner circumferential face and the other circumferential face of the high accurate ring is an outer circumferential face.

28. A manufacturing method of a high accurate metallic ring comprising:
a process of compressing a billet-shaped material, of which volume is larger than that of the high accurate ring to be manufactured to thereby form a disk-shaped partially finished material, of which thickness dimension along an axial direction is large in a central portion and becomes small when it comes to an outer circumferential edge portion;
a process of forming a circular hole in a central portion of the disk-shaped partially finished material to thereby form a ring-shaped partially finished material, of which volume is the same as that of a high accurate ring; and
an inversion working process of contracting a portion on the outer diameter side of the ring-shaped partially finished material radially inwardly; and expanding a portion on the inner diameter side of the ring-shaped partially finished material radially outwardly, to make each portion in the circumferential direction in a cross-section of the ring-shaped partially finished material parallel each other in the axial direction, to thereby form the ring-shaped partially finished material into a cylindrical ring, of which inner diameter, outer diameter and axial length are made predetermined values
wherein a change in angle in the inversion working process is not more than 90°.

29. The manufacturing method of the high accurate ring as set forth in claim 28, wherein when a circular hole is formed in the central portion of the disk-shaped partially finished material, a recess portion is formed at least on one side of both sides in the axial direction of a portion to be removed so that a volume of the portion to be removed is reduced.

30. The manufacturing method of the high accurate ring as set forth in claim 29, wherein the process of forming the ring-shaped partially finished material including:
pressing the disk-shaped partially finished material, on which the recess portion is formed, in the axial direction while restricting an outer circumferential edge portion of the disk-shaped partially finished material so as not expand the outer diameter;
contracting the thickness along the axial direction to a proper value;
releasing a surplus of the volume to the recess portion; and
punching a central portion of the disk-shaped partially finished material including the recess portion from the ring-shaped partially finished material.

31. The manufacturing method of the high accurate ring as set forth in claim 28, wherein
the process of forming the ring-shaped partially finished material including:
a process of forming an elementary circular hole, which is to be a circular hole, in a central portion of the disk-shaped partially finished material to thereby form an elementary ring-shaped partially finished material;
a process of pressing the elementary ring-shaped partially finished material in the axial direction while restricting an outer circumferential edge portion so as not to expand its outer diameter and reducing the thickness in the axial direction to a proper value and releasing a surplus of the volume to an inner circumferential edge portion of the elementary circular hole; and
a process removing the surplus existing in the inner circumferential edge portion from the elementary circular hole.

32. The manufacturing method of the high accurate ring as set forth in claim 28, wherein while an outer circumferential edge portion of the disk-shaped partially finished material is being restricted so that an outer diameter of the disk-shaped partially finished material is be expanded, a circular hole is formed in a central portion of the disk-shaped partially finished material and a recess portion is formed only on one side in the axial direction of a portion to be removed so as to reduce a volume of the portion to be removed and
a shape of the disk-shaped partially finished material is formed into a substantial circular truncated cone in which a portion on the outer diameter side on the side on which the recess portion becomes a partial conical recess face so that a change in the angle is suppressed to be smaller than 90° at the time of inversion working in which the ring-shaped partially finished material is formed into a cylindrical ring.

33. The manufacturing method of the high accurate ring as set forth in claim 28, wherein at the time of manufacturing the disk-shaped partially finished material by compressing the billet-shaped material in the axial direction, by restricting both radial sides at both axial ends of the billet-shaped material or the preliminary partially finished material, which is obtained when the billet-shaped material is worked, a diameter of both axial end portions of the billet-shaped material or the preliminary partially finished material is prevented from being expanded and
when a portion including both axially end faces of the material or the preliminary partially finished material is removed, a circular hole is formed and a ring-shaped partially finished material is obtained.

34. A manufacturing apparatus used for a manufacturing method of a high accurate metallic ring of which manufacturing method comprising:
a process of compressing a billet-shaped material, of which volume is larger than that of the high accurate ring to be manufactured to thereby form a disk-shaped partially finished material, of which thickness dimension along an axial direction is large in a central portion and becomes small when it comes to an outer circumferential edge portion;
a process of forming a circular hole in a central portion of the disk-shaped partially finished material to thereby form a ring-shaped partially finished material, of which volume is the same as that of a high accurate ring; and
an inversion working process of contracting a portion on the outer diameter side of the ring-shaped partially finished material radially inwardly; and expanding a portion on the inner diameter side of the ring-shaped partially finished material radially outwardly, to make each portion in the circumferential direction in a cross-section of the ring-shaped partially finished material parallel each other in the axial direction, to thereby form the ring-shaped partially finished material into a cylindrical ring, of which inner diameter, outer diameter and axial length are made predetermined values
wherein a change in angle in the inversion working process is not more than 90°,
wherein at the time of manufacturing the disk-shaped partially finished material by compressing the billet-shaped material in the axial direction, by restricting both radial sides at both axial ends of the billet-shaped material or the preliminary partially finished material which is obtained when the billet-shaped material is worked, a diameter of both axial end portions of the billet-shaped material or the preliminary partially finished material is prevented from being expanded and
when a portion including both axially end faces of the material or the preliminary partially finished material is removed, a circular hole is formed and a ring-shaped partially finished material is obtained,
the manufacturing apparatus comprising:
a fixing block;
a die having a lower side central hole, wherein under a condition that the die descends until it comes into contact with an upper face of the fixing block when a strong force is given to the die, the lower side central hole is capable of internally engaging with a lower end portion of the billet-shaped material or the preliminary partially finished material, which is obtained when the billet-shaped material is worked and is elastically supported at an upper portion of the fixing block;
a counter punch inserted into the lower side central hole so as to be elevated with respect to the die;
a ring punch having an upper side central hole, wherein under the condition that the ring punch ascends until it comes into contact with a lower face of a ram when a strong force is given to a part of the ram of a press machine provided upside of the die so as to be coaxial with the die, the upper side central hole is capable of internally engaging with the upper end portion of the billet-shaped material or the preliminary partially finished material, which is obtained when this billet-shaped material is worked and is elastically supported at a lower portion of the ram; and
a punch inserted into the upper side central hole so as to elevate with respect to the ring punch.

35. The manufacturing apparatus of the high accurate ring as set forth in claim 34, wherein before at least working of the disk-shaped partially finished material is completed, the counter punch is supported without being elevated with respect to the fixing block and the punch is supported without being elevated with respect to the ram,
under a condition that a lower face of the die comes into contact with an upper face of the fixing block, an upper end face of the counter punch exists at a position recessed downward from an upper face of the die, and
under the condition that an upper face of the ring punch comes into contact with a lower face of the ram, the punch exists at a position recessed upward from a lower face of the ring punch.

36. A manufacturing method of a high accurate metallic ring comprising:
a primary partially finished material forming process of:
compressing a billet-shaped material, of which volume is larger than that of the high accurate ring to be manufactured, in the axial direction and
forming a circular hole in a radially central portion
to thereby form a primary partially finished material having:
a cylinder portion having predetermined thickness and predetermined axial dimension; and
a flange portion which is directed outwardly and is provided in a circumferential portion of the cylindrical portion;
a division process of cutting off the primary partially finished material in boundary portion between an outer circumferential face of the cylindrical portion and an inner circumferential edge of the flange portion at a radially intermediate portion, to thereby divide the cylindrical portion which is made as a first high accurate ring, and the flange portion which is made as a ring-shaped secondary partially finished material; and
a second high accurate ring forming process of inverting a direction of a cross-section of the secondary partially finished material by angle of 90° to thereby obtain a cylindrical second high accurate ring, of which inner diameter, outer diameter and axial length are predetermined values.

37. The manufacturing method of the high accurate ring as set forth in claim 36, wherein in the primary partially finished material forming process, by compressing the material in a direction that both axial ends come close to each other, forming a boss portion, of which axial thickness in the radially central portion is larger than the axial thickness in the radially outward portion, and a flange portion in a peripheral portion of the boss portion,
crushing a central portion of the boss portion in the axial direction so as to reduce the axial thickness of the central portion and also to increase the axial thickness of a portion close to the outer diameter of the boss portion, and
punching a portion of the central portion, of which thickness is reduced, to form a circular hole.

38. The manufacturing method of the high accurate ring as set forth in claim 36, wherein in the primary partially finished material forming process, by compressing both central portions of axially end faces of the material, in a direction that they come close to each other so as to reduce the axial thickness of the central portion, so as to form an elementary cylindrical portion axially protruding from both axial end faces of the flange portion, and then the portion in the central portion, of which thickness is reduced, is punched to form a circular hole.

39. The manufacturing method of the high accurate ring as set forth in claim 36, further comprising:
a process, which is provided between the division process and the second high accurate ring forming process, in which
while restricting an outer circumferential edge portion of the secondary partially finished material so not to expand an outer diameter of the secondary partially finished material,
setting-down process of compressing the secondary partially finished material in the axial direction until a predetermined thickness is obtained, and flowing an excess thickness portion to an inner circumferential edge portion and
removing the excess thickness portion by removing the inner circumferential edge portion by piercing working, to obtain a desired volume of the secondary partially finished material.

40. The manufacturing method of the high accurate ring as set forth in claim 36, wherein the axial thickness of the flange portion, which is formed in the first high accurate ring forming process, is increased in a portion close to the central portion in the radial direction and decreased in the outer circumferential edge portion, and
in the second high accurate ring forming process, an inversion working, in which contracting a portion close to the outer diameter of the secondary partially finished material radially inwardly and expanding a portion close to the inner diameter radially outwardly, is conducted.
